# EUROPEAN PATENT SPECIFICATION

(11) **EP 2 329 643 B1**
(45) Date of publication and mention of the grant of the patent: **01.01.2020**
(21) Application number: 09792841.0
(22) Date of filing: 22.09.2009
(51) Int. Cl.: H04N 5/445, H04N 5/45, H04N 5/44

(54) **SYSTEMS AND METHODS FOR GRAPHICAL CONTROL OF USER INTERFACE FEATURES PROVIDED BY A TELEVISION RECEIVER**
SYSTEME UND VERFAHREN ZUR GRAFISCHEN STEUERUNG DER VON EINEM TV-EMPFÄNGER BEREITGESTELLTEN FUNKTIONEN EINER BENUTZERSCHNITTSTELLE
SYSTÈMES ET PROCÉDÉS POUR UNE COMMANDE GRAPHIQUE DE FONCTIONS D'INTERFACE UTILISATEUR FOURNIES PAR UN RÉCEPTEUR DE TÉLÉVISION

(30) Priority: 22.09.2008 US 235476; 30.09.2008 US 241556; 30.09.2008 US 241571; 30.09.2008 US 241580; 30.09.2008 US 241604; 30.09.2008 US 241608; 31.10.2008 US 110233 P
(43) Date of publication of application: 08.06.2011
(73) Proprietor: DISH Technologies L.L.C., Englewood, CO 80112 (US)
(72) Inventor: WHITE, James Matthew, Denver, Colorado 80210 (US); TAXIER, Karen Michelle, Highlands Ranch, Colorado 80129 (US); VANDUYN, Luke, Highlands Ranch, Colorado 80126 (US); RUDOLPH, Daniel L., Castle Rock, Colorado 80104 (US); COBURN, Matthew, Denver, Colorado 80220 (US); MINNICK, Danny Jean, Littleton, Colorado 80124 (US); STEINERT, Michael, Centenial, Colorado 80121 (US)
(74) Representative: Sadler, Peter Frederick
(86) International application number: PCT/US2009/057825
(87) International publication number: WO 2010/033982

(56) References cited:
- WO-A2-2006/119269
- WO-A2-2007/015047
- US-A1- 2005 010 949

## Description

### PRIORITY CLAIM

This application claims priority to United States Non-Provisional Application Serial No. 12/241,556 entitled SYSTEMS AND METHODS FOR GRAPHICAL CONTROL OF USER INTERFACE FEATURES PROVIDED BY A TELEVISION RECEIVER and filed on September 30, 2008.

This application also claims priority to United States Non-Provisional Application Serial No. 12/235,476 entitled METHODS AND APPARATUS FOR PRESENTING SUPPLEMENTAL INFORMATION IN AN ELECTRONIC PROGRAMMING GUIDE and filed on September 22, 2008.

This application also claims priority to United States Non-Provisional Application Serial No. 12/241,571 entitled SYSTEMS AND METHODS FOR GRAPHICAL CONTROL OF PICTURE-IN-PICTURE WINDOWS and filed on September 30, 2008.

This application also claims priority to United States Non-Provisional Application Serial No. 12/241,580 entitled SYSTEMS AND METHODS FOR PROVIDING CUSTOMER SERVICE FEATURES VIA A GRAPHICAL USER INTERFACE IN A TELEVISION RECEIVER and filed on September 30, 2008.

This application also claims priority to United States Non-Provisional Application Serial No. 12/241,604 entitled SYSTEMS AND METHODS FOR GRAPHICAL CONTROL OF SYMBOL-BASED FEATURES IN A TELEVISION RECEIVER and filed on September 30, 2008.

This application also claims priority to United States Non-Provisional Application Serial No. 12/241,608 entitled SYSTEMS AND METHODS FOR GRAPHICAL ADJUSTMENT OF AN ELECTRONIC PROGRAM GUIDE and filed on September 30, 2008.

This application also claims priority to United States Provisional Application Serial No. 61/110,233 entitled GRAPHICAL INTERFACE NAVIGATION BASED ON IMAGE ELEMENT PROXIMITY and filed on October 31, 2008.

### TECHNICAL FIELD

The present application generally relates to user interfaces in television receiver devices. One aspect particularly relates to systems and methods for providing graphical scrolling of guide data, video and/or other features provided by a television receiver device. Another aspect relates to systems and methods for providing supplemental information in association with the presentation on an electronic program guide. Another aspect particularly relates to systems and methods for providing graphical control of picture-in-picture windows displayed by set-top boxes or other television receivers. Another aspect particularly relates to systems and methods for providing customer service features a television receiver device. Another aspect particularly relates to systems and methods for providing graphical adjustment and control of numeric, alphanumeric and/or other symbol-based features provided by a television receiver device. Another aspect particularly relates to systems and methods for providing graphical adjustment of an electronic program guide and/or other features provided by a television receiver device.

### BACKGROUND

Most television viewers now receive their television signals through a content aggregator such as a cable or satellite television provider. For subscribers to a direct broadcast satellite (DBS) service, for example, television programming is received via a broadcast that is sent via a satellite to an antenna that is generally located on the exterior of a home or other structure. Other customers receive television programming through conventional television broadcasts, or through cable, wireless or other media. Programming is typically received at a receiver such as a "set top box" (STB) or other receiver that demodulates the received signals and converts the demodulated content into a format that can be presented to the viewer on a television or other display. In addition to receiving and demodulating television programming, many television receivers are able to provide additional features. Examples of features available in many modern television receivers include electronic program guides (EPGs), digital or other personal video recorders, "place-shifting" features for streaming received content over a network or other medium, providing customer service information and/or the like.

Generally speaking, viewers interact with the STB or other receiver using some sort of user interface that receives inputs from a remote control or other input device. To change a channel, for example, the viewer typically depresses a "channel up/down" button, manually enters a number of a desired channel on a numeric keypad, and/or selects the new channel using a program guide feature of the receiver. Alternatively, viewers can often seek out programs using an EPG feature provided by the receiver. The EPG generally provides comprehensive lists of programs and associated information, and allows viewers to readily tune to programs currently being shown. Many EPGs also allow viewers to set a recording for a future event, or to take other actions as appropriate. The receiver then processes received viewer input to make desired changes to the on-screen display.

While conventional interfaces are useful for many purposes, there remains a continual desire for more efficient and intuitive user interfaces to the various features provided by the receiver. For example, there is a desire to provide convenient access to numeric features (e.g., channel numbers) without using a numeric keypad. It is therefore desirable to create systems and methods for improving the viewer interface to the television receiver.

Additionally, there is a desire to provide convenient access to customer service features using more advanced interface features. While some set-top box type receivers have provided limited customer service features, in general, most viewers still prefer to contact a customer service center via telephone rather than use the box itself for even routine billing or service queries. This is at least partly due to limitations in the conventional interfaces provided by most television receiver devices. It is therefore desirable to create systems and methods for improving the viewer interface to customer service features associated with the television receiver.

In addition to receiving and demodulating television programming, many television receivers are able to provide additional features. Examples of features available in many modern television receivers include electronic program guides (EPGs), digital or other personal video recorders, "place-shifting" features for streaming received content over a network or other medium, and/or the ability to simultaneously view multiple programs showing on different channels. In the latter case, a "picture-in-picture" (PIP) display is typically provided wherein a relatively small image of a secondary program is superimposed upon a primary display. While television viewers have widely adopted PIP functionality, there nevertheless remains a desire to improve the configurability of PIP features.

As described above, electronic program guides are utilized in association with televisions and television receivers to allow users to locate programs of interest for viewing and/or recording. Typically, program information is presented in a grid format. Time slots are arranged along a horizontal axis of the electronic program guide and channels are arranged along a vertical axis of the electronic program guide. The user may scroll along both the horizontal and vertical axes of the electronic program guide to locate programs of interest for viewing and/or recording. A problem with grid based electronic program guides is that limited space is available for presenting additional information related to the program guide data, and thus, users are deprived of useful information that could be presented in association with the electronic program guide data.

These and other desirable features and characteristics will become apparent from the subsequent detailed description and the appended claims, taken in conjunction with the accompanying drawings and this background section.

International patent application WO2006/119269 describes a structure for navigating a GUI with a handheld device and in particular, a manner of navigating an EPG using scrolling methods. US patent application US2005/0010949 describes a manner of scrolling through an EPG in which information within the EPG is not displayed until scrolling through the EPG has finished.

### SUMMARY

According to various exemplary embodiments, systems and methods are provided for improved user interaction with a set-top box (STB) or other video receiver . Particularly, in at least one embodiment, improved techniques are provided for changing a channel or other information presented on a television or other display by a STB or other video receiver.

In various embodiments, a method is provided for changing the presentation of a current channel to another channel on a display in response to a viewer input received via a remote control. Viewer input from a remote control is received at a STB or similar television receiver. Imagery on the display initially corresponds to the current channel. At least a portion of the imagery is scrolled in response to the viewer input to thereby tune the other channel on the display.

In other embodiments, a video receiver is provided for presenting imagery on a display in response to viewer input signals provided from a remote control. The receiver suitably comprises a receiver interface configured to receive an incoming modulated signal and a decoder configured to decode the incoming modulated signal to extract a video signal. The receiver further comprises a wireless receiver configured to receive the viewer input signals from the remote control, and a processor configured to generate the imagery presented on the display. The imagery suitably comprises the extracted video signal, and the processor is further configured to change a channel associated with the video signal to a desired channel in response to the viewer input signals by generating a program guide window on the display that initially comprises program guide information corresponding to a current channel. The program guide information scrolls in the program guide window in response to the viewer input to display other program guide information until the desired channel is indicated by the displayed subsequent program guide information.

Still other embodiments provide a system for presenting television content on a display. The system suitably comprises a wireless remote control configured to provide an input signal in response to a user input, and a video receiver. The video receiver suitably comprises a receiver interface configured to receive an incoming modulated signal, a decoder configured to decode the incoming modulated signal to extract television content, a wireless receiver configured to receive the two-dimensional input signal from the wireless remote control, and a processor. The processor is configured to generate imagery to be presented on the display, wherein the imagery comprises the extracted television content, and wherein the processor is further configured to allow the viewer to change a channel associated with the television content to a desired channel in response by generating a program guide window that initially comprises program guide information corresponding to a current channel, and wherein the program guide information gradually scrolls in the program guide window in response to the viewer input to display other program guide information until the desired channel is indicated by the displayed subsequent program guide information.

In various embodiments described herein, systems, methods and apparatus are provided that facilitate the display of television guide information to a user simultaneously with supplemental content related to the guide information. An electronic programming guide is initially displayed in first and second portions of a display menu. Responsive to a user selection, the size of the display menu devoted to the electronic programming guide data is modified to free space for the display of supplemental content. Thus, the supplemental content is presented in a first portion of the display menu previously devoted to the electronic programming guide, and the electronic programming guide is simultaneously presented in a second portion of the display menu.

In various embodiments, the picture-in-picture window is presented in conjunction with a navigation feature on the display. A two-dimensional input associated with the navigation feature is received from a remote control having a touchpad, directional pad, joystick, trackball, set of directional buttons and/or any other two-dimensional input device. The picture-in-picture window on the display is appropriately moved, resized, reordered or otherwise adjusted in response to the two-dimensional input.

In other embodiments, a video receiver suitably comprises a receiver interface configured to receive an incoming modulated signal and a decoder configured to decode the incoming modulated signal to obtain primary and secondary video signals. The video receiver further comprises a wireless receiver configured to receive a two-dimensional input signal, and a processor configured to generate an output image comprising the primary and secondary video signals in a picture-in-picture window in conjunction with a navigation feature and to adjust the picture-in-picture window on the display when the two-dimensional input signal corresponds to the navigation feature.

Still other embodiments provide a system for presenting television content on a display. A wireless remote control comprises a two-dimensional input device configured to provide a two-dimensional input signal in response to a user input. A video receiver comprises a receiver interface configured to receive an incoming modulated signal, a decoder configured to decode the incoming modulated signal to obtain primary and secondary video signals. The receiver further comprises a wireless receiver configured to receive the two-dimensional input signal from the wireless remote control, and a processor configured to generate an output image to be presented on the display, wherein the output image comprises the secondary video signal superimposed on the primary video signal in a picture-in-picture window in proximity to a plurality of directional indicators, and wherein the processor is further configured to relocate the picture-in-picture window on the display when the two-dimensional input signal corresponds to one of the plurality of directional indicators.

In various embodiments, a method is provided for graphically providing customer service features on the television receiver in response to viewer instructions received from a remote control. Imagery including a customer service tile is presented on the display. A two-dimensional input is received from the remote control that indicates that the tile has been selected, and, in response to the received two-dimensional input, the customer service feature is provided. The customer service feature may provide information received from a remote source via a network, programming connection or other medium.

Other embodiments provide a method for providing a customer service feature in a television receiver configured to present imagery on a display in response to viewer instructions transmitted from a remote control. The method comprises storing customer service information received from a remote source at the television receiver, presenting the imagery on the display, wherein the imagery comprises a tile corresponding to the customer service feature, receiving a two-dimensional input from the remote control that indicates that the tile has been selected by the viewer, and, in response to the received two-dimensional input, providing the stored customer service information on the display.

Still other embodiments provide a video receiver for presenting imagery on a display in response to viewer input signals provided from a remote control. The receiver comprises a receiver interface configured to receive an incoming modulated signal, a decoder configured to decode the incoming modulated signal to extract a video signal, a wireless receiver configured to receive the viewer input signals from the remote control, wherein the viewer input is a two-dimensional input, and a processor. The processor is configured to generate the imagery presented on the display, wherein the imagery comprises a tile corresponding to a customer service feature, and wherein the processor is further configured to receive the viewer input signals from the remote control, and, in response to the received two-dimensional input indicating that the tile has been selected by the viewer, to provide the customer service feature associated with the selected tile.

In various embodiments, a method is provided for graphically controlling symbol-based features in a television receiver configured to present imagery on a display in response to viewer instructions transmitted from a remote control. A keypad image is presented on the display that includes key images corresponding to the symbol-based features. A two-dimensional input is received from the remote control that indicates one of the key images, and imagery on the display is updated in response to the received two-dimensional input.

In further embodiments, a method is provided for selecting a channel in a television receiver configured to present imagery on a display in response to viewer instructions transmitted from a remote control. The method comprises presenting a keypad image on the display, wherein the keypad image comprises a plurality of key images each corresponding to a numeral, receiving a first two-dimensional input from the remote control that indicates at least one of the key images, and presenting an indicator of a television channel having a channel number that at least partially corresponds to the indicated key images in response to the first two-dimensional input, wherein the indicator comprises a remember feature. In response to a second two-dimensional input corresponding to the indicator, the receiver may be tuned to the indicated television channel. Further, in response to the second two-dimensional input corresponding to the remember feature, the television channel indicated by the indicator can be associated with a quick reference feature visible on the imagery presented on the display.

Still other embodiments provide a video receiver for presenting imagery on a display in response to viewer input signals provided from a remote control. The receiver comprises a receiver interface configured to receive an incoming modulated signal, a decoder configured to decode the incoming modulated signal to extract a video signal, a wireless receiver configured to receive the viewer input signals from the remote control, wherein the viewer input is a two-dimensional input, and a processor. The processor is configured to receive the viewer input signals from the wireless receiver and to generate the imagery presented on the display, wherein the imagery comprises a keypad image comprising a plurality of key images each corresponding to a symbol, and wherein the processor is further configured to present an indicator of a television channel having a channel number that at least partially corresponds to the indicated key images in response to the viewer input signals. In response to further two-dimensional input corresponding to the indicator, the processor is further configured to direct the decoder to decode at least a portion of the incoming modulated signal corresponding to the indicated television channel for presentation on the display.

In various embodiments, the electronic program guide is presented in at least a portion of the display. A resize indicator is also provided on the display so that viewer inputs corresponding to the resize indicator can be received. The size of the electronic program guide presented on the display can be adjusted in response to the viewer input corresponding to the resize indicator.

Further embodiments provide a video receiver for presenting imagery on a display in response to viewer input signals provided from a remote control. The video receiver suitably comprises a receiver interface configured to receive an incoming modulated signal, a decoder configured to decode the incoming modulated signal to extract a video signal, and a wireless receiver configured to receive the viewer input signals from the remote control. The video receiver further comprises a processor that is configured to generate the imagery presented on the display, wherein the imagery comprises the extracted video signal. The processor is further configured to present an electronic program guide in at least a portion of the display, wherein the portion of the display comprises a resize indicator, and wherein the processor is further configured to process the viewer input signals and to adjust the size of the electronic program guide presented on the display in response to the viewer input signals corresponding to the resize indicator.

Still other embodiments provide a system for presenting television content on a display. The system suitably comprises a wireless remote control configured to provide a two-dimensional input signal in response to a user input, and a video receiver. The video receiver comprises a receiver interface configured to receive an incoming modulated signal, a decoder configured to decode the incoming modulated signal to extract television content, a wireless receiver configured to receive the two-dimensional input signal from the wireless remote control, and a processor. The processor is appropriately configured to generate the imagery presented on the display, wherein the imagery comprises the extracted video signal in a first portion of the display and an electronic program guide in a second portion of the display. The imagery further comprises a resize indicator. The processor is further configured to process the two-dimensional input signal and to adjust the size of the electronic program guide relative to the electronic program guide in response to the two-dimensional input signal corresponding to the resize indicator.

At least one embodiment described herein includes a method of facilitating navigation of a graphical user interface is presented. In the method, an image associated with the graphical user interface is generated for presentation to a user. The image includes a plurality of image elements, wherein the image elements collectively occupy less than the entirety of the image. An input indicating a location not coinciding with at least one of the image elements is received. One of the image elements is selected based upon the proximity of the location with the one of the image elements.

Various other embodiments, aspects and other features are described in more detail below.

### BRIEF DESCRIPTION OF THE DRAWING FIGURES

Exemplary embodiments will hereinafter be described in conjunction with the following drawing figures, wherein like numerals denote like elements, and
FIG. 1 is a block diagram of an exemplary television receiver system.
FIGS. 2-5 illustrate embodiments of exemplary screen display outputted by the television receiver system of FIG. 1.
FIG. 6 is a block diagram of an exemplary television receiver device;
FIGS. 7-9 are diagrams of exemplary screen displays; and
FIG. 10 is a flowchart showing an exemplary process for changing a channel with a television receiver.
FIGS. 11 and 12 are exemplary screen displays with several types of graphical interaction with PIP features; and
FIG. 13 is a flowchart of an exemplary process for presenting a PIP window.
FIG. 14 is a diagram of an exemplary screen display for receiving and processing inputs from the viewer;
FIG. 15 is a diagram of an exemplary screen display for presenting one type of customer service information; and
FIG. 16 is a flowchart showing an exemplary process for manipulating received viewer inputs in a television receiver or other device.
FIG. 17 is a diagram of an exemplary screen display for receiving and processing numeric inputs from the viewer; and
FIG. 18 is a flowchart showing an exemplary process for manipulating numeric values in a television receiver or other device.
FIGS. 19-21 are diagrams of exemplary screen displays; and
FIG. 22 is a flowchart showing an exemplary process for changing a channel with a television receiver.
FIG. 23 illustrates an embodiment of an entertainment system.
FIG. 24 illustrates a screenshot of an embodiment of a display menu outputted by the television receiver of FIG. 23.
FIG. 25 illustrates a screenshot of another embodiment of a display menu outputted by the television receiver of FIG. 23.
FIG. 26 illustrates a screenshot of an embodiment of a display menu outputted by the television receiver of FIG. 23.
FIG. 27 illustrates an embodiment of a screenshot of a display menu outputted by the television receiver of FIG. 26.
FIG. 28 illustrates an embodiment of a television receiver of FIG. 23.
FIG. 29 illustrates an embodiment of a process for displaying television guide information.
FIG. 30 is a block diagram of an electronic device incorporating graphical user interface navigation according to an embodiment.
FIG. 31 is a flow diagram of a method according to an embodiment of the invention of facilitating navigation of a graphical user interface.
FIG. 32 is a block diagram of a set-top box incorporating graphical user interface navigation according to an embodiment.
FIGS. 33A, 33B, 33C, and 33D are graphical representations of images associated with a graphical user interface according to an embodiment of the invention that employs a position indicator.
FIGS. 34A and 34B are graphical representations of images associated with a graphical user interface according to an embodiment of the invention that does not employ a position indicator.

### DETAILED DESCRIPTION

The following detailed description of the invention is merely exemplary in nature and is not intended to limit the invention or the application and uses of the invention. Furthermore, there is no intention to be bound by any theory presented in the preceding background or the following detailed description.

Generally speaking, the channel changing interface is improved by allowing smooth scrolling of programming and/or guide data in response to user inputs. When a viewer requests a channel change, the display presents a program guide window with program guide information about the current channel. The viewer is able to scroll the program guide information (e.g., upwardly, downwardly and/or otherwise as appropriate) until guide information about the desired subsequent channel is shown in the guide window. The receiver then tunes the selected channel as appropriate. In other embodiments, the channel programming itself scrolls to the programming on another channel, thereby bypassing the electronic program guide as desired.

Although the various techniques and systems described herein may be used with any sort of remote control or command equipment, various embodiments may be particularly well suited for use with a remote control that includes a touchpad, scrollbar, rocker switch, scroll ring and/or other touch-sensitive input device. A smooth-scrolling interface can be very comfortable to the viewer in such cases due to the precision and level of control provided by touch sensitive devices. While some embodiments may attempt to scroll the entire screen presentation (e.g., including the program imagery), in practice this has been difficult, particularly in satellite environments wherein rapid acquisition of multiple channel signals can be challenging. Providing a smooth-scrolling program guide window allows for a pleasing interface to the viewer that can be readily implemented using conventional hardware and software techniques.

Various aspects described herein generally provide apparatus, systems and methods which facilitate the display of television guide information. More particularly, responsive to user selection of particular portions of an electronic program guide, supplemental content related to the guide information may be displayed to a user. An electronic program guide is initially displayed in first and second portions of a display menu. Responsive to a user selection, the size of the display menu devoted to the electronic program guide data is modified to free space for the display of supplemental content. Thus, the supplemental content is presented in a first portion of the display menu previously devoted to the electronic program guide. The electronic program guide is simultaneously presented in a second portion of the display menu. In other words, the electronic program guide data is shrunk such that supplemental content may be presented simultaneously with the electronic program guide data in the space originally occupied by the electronic program guide data. In short, the various embodiments described herein generally provide apparatus, systems and methods for visually displaying electronic program guide data and supplemental content related to the electronic program guide simultaneously responsive to user input.

At least one embodiment includes a method for displaying television guide information. The method comprises displaying a program guide in first and second portions of a display menu; receiving user input selecting a region of the program guide; displaying supplemental content in the first portion of the display menu responsive to the user input; and displaying the program guide in the second portion of the display menu, simultaneously with the display of the supplemental content in the first portion of the display menu, responsive to the user input.

In at least one aspect, the method further comprises: receiving second user input, requesting to exit the supplemental content; and displaying the program guide, in the first and second portions of the display menu, responsive to the second user input. In at least one aspect, the region of the program guide corresponds with a particular television program and displaying the supplemental content further comprises: identifying the supplemental content based on the particular television program selected in the program guide. In at least one aspect, the region of the program guide corresponds with a particular television channel and displaying the supplemental content further comprises: identifying the supplemental content based on the particular television channel selected in the program guide. In at least one aspect, the supplemental content comprises an advertisement for an upcoming event related to the particular television channel. In at least one aspect, the advertisement comprises a video preview regarding the upcoming event. In at least one aspect, the method further comprises: displaying a control element, associated with recording of the upcoming event, with the advertisement in the first portion of the display menu; receiving user input, via the control element, requesting to record the upcoming event; and setting a recording timer for the upcoming event, responsive to the user input.

At least one embodiment comprises a television receiver. The television receiver includes: a tuner that receives television programming from a programming source; an input interface communicatively coupled to an input device; and a processor configured to: output a display menu, for display by an associated display device, the display menu including a program guide in first and second portions of the display menu; process user input, received from the input device via the input interface, the user input selecting a region of the program guide; identify supplemental content for display in the display menu based on the region of the program guide selected by the user; and output simultaneously, for display in the display menu, supplemental content in the first portion of the display menu and the program guide in the second portion of the display menu.

In at least one aspect, the input interface receives second user input from the input device, the second user input requesting to exit the supplemental content; and the processor outputs the program guide in the first and second portions of the display menu, responsive to the second user input. In at least one aspect, the region of the program guide corresponds with a particular television program and the processor identifies the supplemental content based on the particular television program selected in the program guide. In at least one aspect, the region of the program guide corresponds with a particular television channel, and the processor identifies the supplemental content based on the particular television channel selected in the program guide. In at least one aspect, in the supplemental content comprises an advertisement for an upcoming event related to the particular television channel. In at least one aspect, the advertisement comprises a video preview of the upcoming event. In at least one aspect, the television receiver further includes a storage medium that stores the video preview prior to reception of the user input. In at least one aspect, the television receiver further includes a storage medium configured to store a video signal associated with the upcoming event. The processor is operable to output a control element, associated with recording of the upcoming event, in the first portion of the display menu associated with the advertisement. The input interface is operable to receive user input, via the control element, requesting to record the upcoming event. The processor sets a recording timer for the upcoming event, responsive to the user input and coordinates the storage of the video signal associated with the upcoming event responsive to the recording timer.

At least one embodiment comprises a television receiver. The television receiver includes: a tuner that receives television programming from a programming source; an input interface communicatively coupled to an input device to receive user input; and a processor configured to: output the television programming in a first portion of the display menu; output a program guide in second and third portions of the display menu, the program guide presented in a grid including a plurality of cells, with at least a portion of the cells of the grid corresponding with particular television programs; process the user input, the user input selecting a chosen cell of the grid; identify supplemental content for display in the display menu, based on the chosen cell, responsive to processing the user input; and output simultaneously, for display in the display menu, supplemental content in the second portion of the display menu and the program guide in the third portion of the display menu, responsive to processing the user input.

In at least one aspect, the input interface receives second user input from the input device, the second user input requesting to exit the supplemental content and the processor outputs the program guide in the second and third portions of the display menu, responsive to the second user input.

In at least one aspect, the chosen cell of the program guide corresponds with a particular television program and the processor identifies the supplemental content based on the particular television program selected in the program guide.

In at least one aspect, the chosen cell of the program guide corresponds with a particular television channel and the processor identifies an advertisement regarding an upcoming event of the particular television channel based on the chosen cell and displays the advertisement in the second portion of the display menu.

In at least one aspect, the television receiver further comprises a storage medium configured to store a video signal associated with the upcoming event. The processor outputs a control element, associated with recording of the upcoming event, with the advertisement in the second portion of the display menu. The input interface receives user input, via the control element, requesting to record the upcoming event. The processor sets a recording timer for the upcoming event, responsive to the user input and the processor coordinates the storage of the video signal associated with the upcoming event responsive to the recording timer.

In at least one aspect of the present disclosure control of picture-in-picture (PIP) functionality can be substantially improved by allowing two-dimensional interaction with the PIP window. The PIP window may be moved, resized and/or otherwise modified, for example, by providing any number of arrow buttons or other directional indicators on the screen that can be "clicked" or otherwise actuated in response to two-dimensional inputs received from the viewer. By allowing for two-dimensional interaction with the PIP window, the convenience of the PIP feature is greatly improved while simplifying the viewer's interaction with the display.

At least one embodiment comprises a method for presenting a picture-in-picture window on a display. The method includes presenting the picture-in-picture window in conjunction with a navigation feature on the display; receiving a two-dimensional input associated with the navigation feature; and adjusting the picture-in-picture window on the display in response to the two-dimensional input.

In at least one aspect, the navigation feature comprises a plurality of arrows located in proximity to the picture-in-picture window. In at least one aspect, the two-dimensional input corresponds to a cursor interaction with one of the plurality of arrows. In at least one aspect, the method further includes displaying the plurality of arrows when a cursor is in proximity to the picture-in-picture window. In at least one aspect, the picture-in-picture window is presented superimposed upon a primary image on the display. In at least one aspect, the method further includes displaying only a subset of the plurality of arrows when the picture-in-picture window is adjacent to an edge of the primary image. In at least one aspect, the navigation feature comprises a drag feature located in proximity to the picture-in-picture window. In at least one aspect, the two-dimensional input corresponds to a cursor interaction with the drag feature. In at least one aspect, the receiving operation further includes receiving the two-dimensional input from a wireless remote control comprising a two-dimensional input device. In at least one aspect, the two-dimensional input device is one of the group consisting of: a touchpad, a trackball, a joystick, a directional pad, and a plurality of directional keys.

At least one embodiment comprises a video receiver including: a receiver interface configured to receive an incoming modulated signal; a decoder configured to decode the incoming modulated signal to obtain primary and secondary video signals; a wireless receiver configured to receive a two-dimensional input signal; and a processor configured to generate an output image comprising the primary and secondary video signals in a picture-in-picture window in conjunction with a navigation feature and to adjust the picture-in-picture window on the display when the two-dimensional input signal corresponds to the navigation feature.

In at least one aspect, the receiver interface comprises a satellite interface. In at least one aspect, the wireless receiver is configured to receive the two-dimensional input signal from a wireless remote control comprising a two-dimensional input device. In at least one aspect, the two-dimensional input device is one of the group consisting of: a touchpad, a trackball, a joystick, a directional pad, and a plurality of directional keys. In at least one aspect, the navigation feature comprises a plurality of arrows presented in proximity to the picture-in-picture window. In at least one aspect, the two-dimensional input corresponds to a cursor interaction with one of the plurality of arrows. In at least one aspect, the plurality of arrows is displayed when a cursor is in proximity to the picture-in-picture window. In at least one aspect, the navigation feature comprises a drag feature located in proximity to the picture-in-picture window. In at least one aspect, the two-dimensional input corresponds to a cursor interaction with the drag feature.

At least one embodiment comprises a system for presenting television content on a display. The system includes: a wireless remote control comprising a two-dimensional input device configured to provide a two-dimensional input signal in response to a user input; and a video receiver comprising: a receiver interface configured to receive an incoming modulated signal; a decoder configured to decode the incoming modulated signal to obtain primary and secondary video signals; a wireless receiver configured to receive the two-dimensional input signal from the wireless remote control; and a processor configured to generate an output image to be presented on the display, wherein the output image comprises the secondary video signal superimposed on the primary video signal in a picture-in-picture window in proximity to a plurality of directional indicators, and wherein processor is further configured to relocate the picture-in-picture window on the display when the two-dimensional input signal corresponds to one of the plurality of directional indicators.

Various aspects described herein allow the viewer to access channels, programs, program guide information, placeshifting features, customer service features and/or any other features through a graphical user interface that includes various tiles that can be selected using a two-dimensional input device. In various embodiments, the viewer manipulates a touchpad or other two-dimensional input feature incorporated within a remote control to direct a cursor toward one or more tiles. By selecting the tile, a feature associated with the tile can be accessed. Features that can be associated with tiles include tuning particular channels or programs, setting recordings or other features associated with a personal video recorder (PVR) or placeshifting feature, accessing further menuing features provided by the receiver, and/or the like. Further, in many embodiments, the features associated with one or more tiles may be individually configured by the viewer and/or a content provider to customize the interface provided to the viewer by the receiver.

At least one embodiment comprises a method for graphically providing a customer service feature in a television receiver configured to present imagery on a display in response to viewer instructions received from a remote control. The method includes: presenting the imagery on the display, wherein the imagery comprises a tile corresponding to the customer service feature; receiving a two-dimensional input from the remote control that indicates a selection of the tile; and in response to the received two-dimensional input, providing the customer service feature associated with the selected tile from the television receiver.

In at least one aspect, the providing operation comprises displaying billing information. In at least one aspect, the providing operation displaying customer service information associated with the particular television receiver. In at least one aspect, the method further comprises receiving the customer service information from a remote server. In at least one aspect, the customer service information is received via a network. In at least one aspect, the customer service information is received via a programming connection that also provides television programming to the television receiver. In at least one aspect, the programming connection is a satellite connection. In at least one aspect, the programming connection is a cable connection. In at least one aspect, the providing operation comprises displaying help information. In at least one aspect, the help information is associated with a particular feature of the television receiver. In at least one aspect, the providing operation comprises displaying services available to the television receiver.

At least one embodiment comprises a method for providing a customer service feature in a television receiver configured to present imagery on a display in response to viewer instructions transmitted from a remote control. The method includes: storing customer service information received from a remote source at the television receiver; presenting the imagery on the display, wherein the imagery comprises a tile corresponding to the customer service feature; receiving a two-dimensional input from the remote control that indicates that the tile has been selected by the viewer; and in response to the received two-dimensional input, providing the stored customer service information on the display. In at least one aspect, the customer service information is received from the remote source via a programming connection that also provides television content that is decoded by the television receiver. At least one embodiment comprises a video receiver for presenting imagery on a display in response to viewer input signals provided from a remote control. The receiver includes: a receiver interface configured to receive an incoming modulated signal; a decoder configured to decode the incoming modulated signal to extract a video signal; a wireless receiver configured to receive the viewer input signals from the remote control, wherein the viewer input is a two-dimensional input; and a processor configured generate the imagery presented on the display, wherein the imagery comprises a tile corresponding to a customer service feature, and wherein the processor is further configured to receive the viewer input signals from the remote control, and, in response to the received two-dimensional input indicating that the tile has been selected by the viewer, to provide the customer service feature associated with the selected tile. In at least one aspect, the receiver interface comprises a satellite interface. In at least one aspect, the receiver interface comprises a cable interface. In at least one aspect, the wireless receiver is configured to receive the two-dimensional input signals from a wireless remote control comprising a two-dimensional input device. In at least one aspect, the two-dimensional input device is one of the group consisting of: a touchpad, a trackball, a joystick, a directional pad, and a motion sensor. In at least one aspect, the processor is further configured to identify the selected tile based upon a position of a cursor that moves on the display in response to the viewer input signals. In at least one aspect, the processor is configured to provide the customer service feature by displaying information received via the receiver interface. In at least one aspect, the video receiver further comprises a network interface to a network, and wherein the processor is configured to provide the customer service feature by displaying information received via the network interface.

In at least one aspect described herein, the viewer is able to provide numeric, alpha-numeric or other symbol based inputs to a television receiver using two-dimensional or other user interface features. A keypad representing the various symbols is graphically presented on the display, and the viewer is able to interact with the keypad imagery using a cursor or other interface feature that can be moved in response to two-dimensional inputs applied at a touchpad, motion sensor or other sensor device associated with the remote control. In embodiments wherein the remote control includes a touchpad or similar control device but does not include a numeric keypad, for example, a viewer may nevertheless be able to provide numeric (or alphanumeric) inputs to the receiver by directing a cursor presented as part of the on-screen imagery. The cursor may be able to select numbers, letters and/or other features in order to tune channels or perform other tasks as desired. Other conveniences such as quick reference features may be provided as well.

At least one embodiment comprises a method for graphically controlling symbol-based features in a television receiver configured to present imagery on a display in response to viewer instructions transmitted from a remote control. The method comprises: presenting a keypad image on the display, wherein the keypad image comprises a plurality of key images each corresponding to one of the symbol-based features; receiving a two-dimensional input from the remote control that indicates one of the key images; and updating the imagery on the display in response to the received two-dimensional input.

In at least one aspect, the plurality of key images corresponding to numeric values. In at least one aspect, the plurality of key images corresponds to alphanumeric values. In at least one aspect, the updating operation comprises presenting an indicator of a television channel having a channel number that at least partially corresponds to the indicated key image. In at least one aspect, the method further includes receiving a second two-dimensional input corresponding to the indicator. In at least one aspect, the method further includes, tuning the television channel indicated by the indicator in response to the second two-dimensional input. In at least one aspect, the method further includes associating the television channel indicated by the indicator with a quick reference feature visible on the imagery presented on the display. In at least one aspect, the method further includes receiving a third two-dimensional input corresponding to the quick reference feature, and tuning the television channel indicated by the quick reference feature in response to the third two-dimensional input. In at least one aspect, the method further includes providing a list of channels for subsequent reference based upon the television channels associated with the quick reference feature.

In at least one aspect, the list of channels is accessible from an electronic program guide feature provided by the receiver. In at least one aspect, the two-dimensional input corresponds to a position of a cursor image presented on the display. In at least one aspect, the two-dimensional input corresponds to a report from a two-dimensional input device. In at least one aspect, the two-dimensional input device is one of the group consisting of: a touchpad, a trackball, a joystick, a directional pad and a motion sensor.

At least one embodiment comprises a method for selecting a channel in a television receiver configured to present imagery on a display in response to viewer instructions transmitted from a remote control. The method includes: presenting a keypad image on the display, wherein the keypad image comprises a plurality of key images each corresponding to a numeral; receiving a first two-dimensional input from the remote control that indicates at least one of the key images; presenting an indicator of a television channel having a channel number that at least partially corresponds to the indicated key images in response to the first two-dimensional input, wherein the indicator comprises a remember feature; in response to a second two-dimensional input corresponding to the indicator, tuning the receiver to the indicated television channel; and in response to the second two-dimensional input corresponding to the remember feature, associating the television channel indicated by the indicator with a quick reference feature visible on the imagery presented on the display.

In at least one aspect, the method further includes receiving a third two-dimensional input corresponding to the quick reference feature, and tuning the television channel indicated by the quick reference feature in response to the third two-dimensional input.

At least one embodiment comprises: a video receiver for presenting imagery on a display in response to viewer input signals provided from a remote control. The receiver includes: a receiver interface configured to receive an incoming modulated signal; a decoder configured to decode the incoming modulated signal to extract a video signal; a wireless receiver configured to receive the viewer input signals from the remote control, wherein the viewer input is a two-dimensional input; and a processor configured to receive the viewer input signals from the wireless receiver and to generate the imagery presented on the display, wherein the imagery comprises a keypad image comprising a plurality of key images each corresponding to a symbol, and wherein the processor is further configured to present an indicator of a television channel having a channel number that at least partially corresponds to the indicated key images in response to the viewer input signals, and, in response to further two-dimensional input corresponding to the indicator, to direct the decoder to decode at least a portion of the incoming modulated signal corresponding to the indicated television channel for presentation on the display. In at least one aspect, the receiver interface comprises a satellite interface. In at least one aspect, the receiver interface comprises a cable interface. In at least one aspect, the wireless receiver is configured to receive the two-dimensional input signals from a wireless remote control comprising a two-dimensional input device. In at least one aspect, the two-dimensional input device is one of the group consisting of: a touchpad, a trackball, a joystick, a directional pad, and a motion sensor. In at least one aspect, the indicator comprises a remember feature and wherein the processor is further configured, in response to the further viewer input signals corresponding to the remember feature, to associate the television channel indicated by the indicator with a quick reference feature visible on the imagery presented on the display. In at least one aspect, the processor is further configured to direct the decoder to decode at least the portion of the television channel indicated by the quick reference feature in response to a third viewer input signal. In at least one aspect, the quick reference feature is visible within an electronic program guide feature provided by the video receiver.

In some embodiments, the viewer is able to re-size the electronic program guide presented on a display as desired using two-dimensional or other user interface features. The size of the EPG display may be resized and/or otherwise modified by, for example, providing any number of resize indicators and/or other features on the screen that can be "clicked" or otherwise actuated in response to two-dimensional inputs received from the viewer. By allowing for two-dimensional interaction with the program guide, the convenience of the PIP feature is greatly improved while simplifying the viewer's interaction with the display.

At least one embodiment comprises a method for displaying an electronic program guide on a display. The method includes: presenting the electronic program guide in at least a portion of the display, wherein the portion of the display comprises a resize indicator; receiving a viewer input corresponding to the resize indicator; and in response to the viewer input corresponding to the resize indicator, adjusting the size of the electronic program guide presented on the display.

In at least one aspect, the adjusting operation comprises increasing the size of the electronic program guide. In at least one aspect, the adjusting operation comprises decreasing the size of the electronic program guide.

In at least one embodiment, the resize indicator comprises a first resize indicator and a second resize indicator, and wherein the adjusting comprises increasing the size of the electronic program guide in response to the viewer input corresponding to the first resize indicator and decreasing the size of the electronic program guide in response to the viewer input corresponding to the second resize indicator.

In at least one aspect, the adjusting operation comprises presenting a first size, a second size or a third size of the electronic program guide in response to the viewer input. In at least one aspect, the first size is smaller than the second or the third size. In at least one aspect, the third size is a full-screen view. In at least one aspect, the viewer input is a directional input received from a two-dimensional input device. In at least one aspect, the method further comprises directing a cursor on the display in response to the directional input. In at least one aspect, the adjusting operation takes place in response to a select instruction received from the remote control when the cursor is positioned over the resize indicator on the display.

At least one embodiment comprises a video receiver for presenting imagery on a display in response to viewer input signals provided from a remote control. The video receiver includes: a receiver interface configured to receive an incoming modulated signal; a decoder configured to decode the incoming modulated signal to extract a video signal; a wireless receiver configured to receive the viewer input signals from the remote control; and a processor configured to generate the imagery presented on the display, wherein the imagery comprises the extracted video signal, and wherein the processor is further configured to present an electronic program guide in at least a portion of the display, wherein the portion of the display comprises a resize indicator, and wherein the processor is further configured to process the viewer input signals and to adjust the size of the electronic program guide presented on the display in response to the viewer input signals corresponding to the resize indicator.

In at least one aspect, the receiver interface comprises a satellite interface. In at least one aspect, the receiver interface comprises a cable interface. In at least one aspect, the wireless receiver is configured to receive the two-dimensional input signals from a wireless remote control comprising a two-dimensional input device. In at least one aspect, the two-dimensional input device is one of the group consisting of: a touchpad, a trackball, a joystick, a directional pad, and a plurality of directional keys. In at least one aspect the processor is further configured to adjust a size of the imagery relative to the electronic program guide on the display. In at least one aspect, the viewer input is a directional input received from a two-dimensional input device. In at least one aspect, the processor is further configured to direct a cursor on the display in response to the directional input and to adjust the size of the electronic program guide in response to a select instruction received from the remote control when the cursor is positioned over the resize indicator on the display.

In at least one aspect, the resize indicator comprises a first resize indicator and a second resize indicator, and wherein the adjusting comprises increasing the size of the electronic program guide relative to the size of the extracted video signal in response to the viewer input signals corresponding to the first resize indicator and decreasing the size of the electronic program guide in response to the viewer input signals corresponding to the second resize indicator.

At least one embodiment comprises a system for presenting television content on a display. The system includes: a wireless remote control configured to provide a two-dimensional input signal in response to a user input; and a video receiver comprising: a receiver interface configured to receive an incoming modulated signal; a decoder configured to decode the incoming modulated signal to extract a television content; a wireless receiver configured to receive the two-dimensional input signal from the wireless remote control; and a processor configured to generate the imagery presented on the display, wherein the imagery comprises the extracted video signal in a first portion of the display and an electronic program guide in a second portion of the display, wherein the imagery further comprises a resize indicator, and wherein the processor is further configured to process the two-dimensional input signal and to adjust the size of the electronic program guide relative to the electronic program guide in response to the two-dimensional input signal corresponding to the resize indicator.

Although the various techniques and systems described herein may be used with any sort of remote control or command equipment, various embodiments may be particularly well suited for use with a remote control that includes a touchpad, directional pad, joystick, trackball, set of directional buttons, motion sensor and/or other feature capable of providing two-dimensional inputs to the receiver. Other embodiments, however, simply provide re-sizing without exploiting the two-dimensional control aspects described herein. Similarly, while the discussion herein focuses primarily on re-sizing electronic program guide windows, equivalent concepts could be readily applied to other features provided by the television receiver, including any sort of menu or list structures. Guide lists of programs available on a digital video recorder or place shifting device, for example, could be equivalently manipulated in the same way as the EPG displays primarily described below.

At least one embodiment comprises a method of facilitating navigation of a graphical user interface. The method includes: generating an image associated with the graphical user interface for presentation to a user, wherein the image comprises image elements, and wherein the image elements collectively occupy less than an entirety of the image; receiving an input from the user, wherein the input indicates a location on the image, and wherein the location does not coincide with at least one of the image elements; and selecting one of the image elements based upon a proximity of the location with the one of the image elements.

In at least one aspect, the method further includes: indicating the selected one of the image elements on the image.

In at least one aspect, the method further includes: selecting the one of the image elements is further based upon a size of the one of the image elements.

In at least one aspect, the method further includes: selecting the one of the image elements is further based upon a user input selection associated with the one of the image elements.

In at least one aspect, the method further includes: indicating the location on the image.

In at least one aspect, the image comprises one of a two-dimensional image and a three-dimensional image.

In at least one aspect, the input from the user comprises a path in the image, wherein an end of the path comprises the location; and the method further includes: selecting the one of the image elements is further based upon a direction described by the path.

In at least one aspect, the method further includes: selecting the one of the image elements further based upon a speed described by the path.

In at least one aspect, the one of the image elements resides within a boundary describing an area associated with the one of the image elements; and the method further includes: selecting the one of the image elements based on the location of the image residing within the area associated with the one of the image elements.

In at least one aspect, the method further includes: entering a user input selection associated with the selected one of the image elements.

In at least one aspect, the method further includes: receiving a second input from the user; and in response to the second input, entering a user input selection associated with the selected one of the image elements.

In at least one aspect, each of the image elements is associated with a corresponding user interface operation for an audio/video device.

In at least one aspect, the audio/video device comprises one of a satellite television receiver, a cable television receiver, a terrestrial television receiver, an audio receiver, a digital video disc player, a video cassette recorder, a digital video recorder, a television gaming system, and a television.

In at least one aspect, the input from the user is received by way of a remote control device associated with the audio/video device.

In at least one aspect, at least one of the image elements is associated with a function provided by the audio/video device.

At least one embodiment comprises a method of facilitating navigation of a graphical user interface for a satellite television receiver. The method includes: generating an image associated with the graphical user interface for presentation to a user by way of a video output of the satellite television receiver, wherein the image comprises image elements, wherein the image elements occupy less than an entirety of the image, and wherein each of the image elements is associated with a user input selection for the satellite television receiver; receiving an input from the user by way of a remote control device associated with the satellite television receiver, wherein the input indicates a location on the image, and wherein the location does not coincide with at least one of the image elements; selecting one of the image elements based upon a proximity of the location with the one of the image elements; and indicating the selected one of the image elements on the image.

At least one embodiment comprises a electronic device including: control logic configured to generate an image associated with a graphical user interface of the electronic device, wherein the image comprises image elements, and wherein each of the image elements denotes a user input selection associated with the graphical user interface; an output interface configured to present the image to the user; and a user input interface configured to receive an input from a user, wherein the input indicates a location on the image, and wherein the location does not coincide with at least one of the image elements. The control logic is configured to select one of the image elements based upon a proximity of the location with the one of the image elements.

In at least one embodiment, the output interface is configured to present the image to the user by way of a video display.

In at least one embodiment, the user input interface is configured to receive the input from a remote control device operated by the user.

In at least one embodiment, the remote control device comprises at least one of a touchpad and a joystick configured to be manipulated by the user to enter the input.

In at least one embodiment, the electronic device further includes: a signal input interface configured to receive television signals; a signal processor configured to process the received television signals and transfer the received television signals to the output interface for presentation to the user. The control logic is configured to control operation of the signal processor based at least in part on the selected one of the image elements.

Each of these embodiments described herein are directed at various features of a television receiver are described herein. Each feature of the television receiver is described in separate detail below. However, it is to be appreciated that each of these functionalities may be utilized separately or in any combination, depending on desired design criteria.

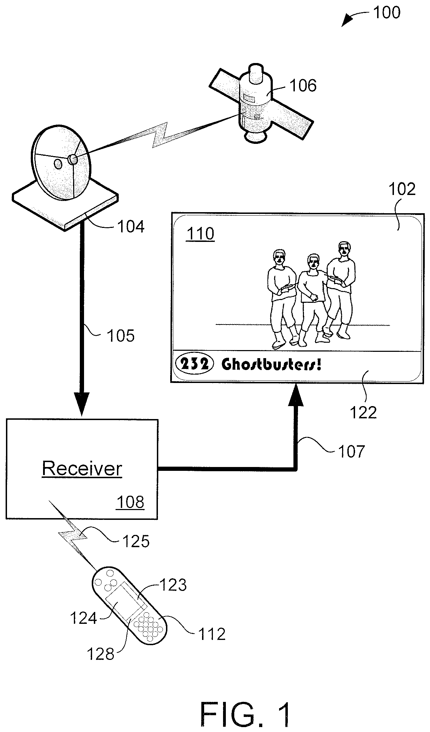

Turning now to the drawing figures and with initial reference to FIG. 1, an exemplary system 100 for presenting television signals to a viewer suitably includes a receiver 108 that receives signals 105 in any format and generates appropriate outputs 107 to generate imagery 110 on display 102. Typically, receiver 108 interacts with signals 125 received from a wireless remote control 112. In at least one embodiment, the wireless remote control 112 may include any sort of two dimensional input device 124 for producing optional two-dimensional input signals 125 in response to view inputs.

Television imagery 110 is presented on display 102 as desired by the viewer. In the exemplary view shown in FIG. 1, imagery 110 has a superimposed program guide window 122 that provides electronic program guide (EPG) information about the currently-viewed program. However, as illustrated in other figures described herein, the television receiver 108 may be configured to output other embodiments of imagery 110, corresponding with various functionality of the receiver 108, depending on desired design criteria. To change the channel, a viewer typically uses an input feature (e.g., a touchpad, rocker switch or the like) on a remote control 112 to scroll the information displayed in window 122 until information about the desired program is presented. Receiver 108 then tunes the selected program as desired.

Receiver 108 is any component, device or logic capable of receiving and decoding video signals 105. In various embodiments, receiver 108 is a set-top box (STB) or the like capable of receiving satellite, cable, broadcast and/or other signals encoding audio/visual content. Receiver 108 may further demodulate or otherwise decode the received signals 105 to extract programming that can be locally viewed on display 102 as desired. Receiver 108 may also include a content database stored on a hard disk drive, memory, or other storage medium to support a digital or other personal video recorder (DVR/PVR) feature as appropriate. Receiver 108 may also provide place shifting, electronic program guide, multi-stream viewing and/or other features as appropriate.

In the exemplary embodiment illustrated in FIG. 1, receiver 108 is shown receiving digital broadcast satellite (DBS) signals 105 from a satellite 106 at an antenna 104. Equivalent embodiments, however, could receive programming 105 from one or more programming sources, including any sort of satellite, cable or broadcast source, as well as any Internet or other network source or the like. In embodiments that include DVR functionality, programming may be stored in any sort of database as desired (e.g., in response to user/viewer programming instructions) for subsequent viewing. Content may also be received from digital versatile disks (DVDs) or other removable media in some embodiments.

Display 102 is any device capable of presenting imagery to a viewer. In various embodiments, display 102 is a conventional television set, such as any sort of television operating in accordance with any digital or analog protocols, standards or other formats. Display 102 may be a conventional NTSC or PAL television receiver, for example. In other embodiments, display 102 is a monitor or other device that may not include built-in receiver functionality, but that is nevertheless capable of presenting imagery in response to signal 107 received from receiver 108. In various embodiments, receiver 108 and display 102 may be physically combined or interconnected in any manner. A receiver card, for example, could be inserted into a slot or other interface in a conventional television, or the functionality of receiver 108 may be provided within a conventional television display 102. In other embodiments, signals 107 are transferred between receiver 108 and display 102 using any sort of cable or other interface (including a wireless interface). Examples of common interfaces include, without limitation, component video, S-video, High-Definition Multimedia Interface (HDMI), Digital Visual Interface (DVI), IEEE 1394, and/or any other formats as desired.

Remote control 112 is any sort of control device capable providing signals 125 to receiver 108 that represent inputs received from one or more viewers. In various embodiments, remote control 112 is an infrared, radio frequency (RF) or other wireless remote that includes any number of buttons or other features for receiving viewer inputs. In an exemplary embodiment, remote control 112 communicates with receiver 108 using the IEEE 802.15.4 ("ZIGBEE") protocol, the RF for consumer electronics (e.g., "RF4CE" or "EC Net") protocols, and/or any other standard or non-standard technique for implementing wireless personal area networks (WPANs). Other embodiments may instead communicate using IEEE 802.15.1 ("BLUETOOTH"), IEEE 802.11 ("WI-FI"), conventional infrared, and/or any other wireless techniques. Further, various embodiments of remote control 112 may support multiple communications schemes such both as RF and infrared, or the like.

Remote control 112 generally includes any sort of buttons, sliders, rocker switches and/or other features for receiving physical inputs from the viewer. As the user depresses or otherwise interacts with the features, remote control 112 suitably produces wireless signals 125 in response. In further embodiments, remote control 112 includes a two-dimensional input device 124 that is able to receive inputs from the user in any multi-dimensional format (e.g., "X,Y", "r,Θ", and/or the like). Examples of two-dimensional input devices 124 that could be used in various embodiments include, without limitation, touchpads, directional pads, joysticks, trackballs, sets of arrows or other buttons, and/or the like. In a typical implementation, two-dimensional input device 124 provides coordinates or other signals 125 that indicate absolute (e.g., "X,Y") and/or relative (e.g., "ΔX, ΔY") movement in two or more dimensions. Such signals 125 may be decoded at receiver 108 or elsewhere to coordinate the viewer's actions with respect to input device 124 to movement of cursor or other features presented on display 102.

In the exemplary embodiment shown in FIG. 1, remote control 112 is illustrated with a touchpad-type device 124 that accepts viewer inputs applied with a finger, stylus or other object. FIG. 1 also shows touchpad device 124 as having dedicated scroll regions 123 and 128 for vertical and horizontal scrolling, respectively. Viewer movements within region 123 that are more-or-less parallel to the right edge of device 124, for example, could result in vertical scrolling, whereas movements within region 128 that are more-or-less parallel to the bottom edge of device 124 could result in horizontal scrolling. Dedicated scrolling regions 123, 128 are optional features, however, that may not be present in all embodiments. Further, scrolling from a touchpad or other device 112 could be implemented in any other manner. As noted above, it may be particularly beneficial to provide a smooth scrolling image to the viewer in response to inputs received on a touch sensitive device 124, although other features may benefit from improved scrolling as well.

In operation, then, receiver 108 suitably receives television signals 105 from a satellite, cable, broadcast or other source. Signals 105 typically encompass multiple channels that can be simultaneously viewed. In a satellite based embodiment, for example, one or more channels can be extracted from a conventional satellite feed; the video content on the selected channel can be demodulated, extracted and otherwise processed as appropriate to display the desired content to the viewer. In at least one embodiment, a primary channel and a second channel can be extracted from a common satellite feed. One or more cable or broadcast channels may be similarly obtained in any manner. In some embodiments, receiver 108 may obtain multiple channel signals from different sources (e.g., one channel from a cable or satellite source and another channel from a terrestrial broadcast, DVD or other source).

Receiver 108 suitably obtains the desired content from the channel(s) indicated by the viewer, and presents the content on display 102. In various embodiments, channel changing is facilitated by presenting program guide window 122 superimposed upon (e.g., presented in a smaller window within) the imagery 110 obtained from the primary channel. Other embodiments may simply scroll imagery 110 directly from channel-to-channel.

The viewer is able to interact with imagery 110 and/or program guide window 122 in any manner. In various embodiments, the viewer is able to scroll the imagery 110 and/or the information contained within window 122 using remote control 112. The scrolling provided may be relatively smooth (e.g., providing a gradual progression of information across the window 122, as opposed to simply jumping through program guide entries) so that the viewer is able to better appreciate the "feel" and level of control provided by a scrolling input on remote 112. In some embodiments, program guide window 122 could be presented with a scroll bar or other feature that would graphically represent the location of the information presented in window 122 within the overall program guide. Other embodiments may contain additional features or enhancements of any sort.

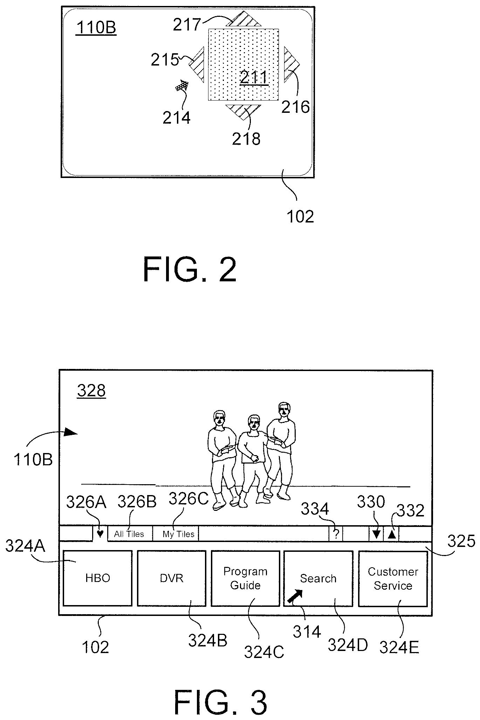

FIG. 2 illustrates another embodiment of television imagery outputted for by the receiver 108 for presentation on the display 102. In various embodiments, a PIP window 211 may be presented overlying a primary window 110A to allow simultaneous viewing of multiple programs. Further, two-dimensional navigation features (e.g., arrows 215-218) may be presented to allow the viewer to manipulate PIP window 211 through control of a cursor 214 or other interface feature via remote control 112 (FIG. 1). In various embodiments, cursor 214 is able to move in response to two-dimensional input signals 125 (FIG. 1), which are, in turn, generated in response to inputs applied to two-dimensional input device 124 (FIG. 1). By moving cursor 214 to interact with the two-dimensional navigation features presented on display 102, PIP window 211 may be moved, resized, re-aligned or otherwise manipulated as desired.

Receiver 108 suitably obtains the desired content from the channel(s) indicated by the viewer, and presents the content on display 102. In various embodiments, primary and secondary channels may be presented in a conventional PIP window 211, with the secondary channel superimposed upon (e.g., presented in a smaller window within) the imagery 110A obtained from the primary channel.

The viewer is able to interact with PIP window 211 in any manner. In various embodiments, the viewer is able to move a cursor or similar pointer 214 on display 102 using two-dimensional input device 124 (FIG. 1). By pointing to various interface features that are presented in association with PIP window 211, the viewer may be able to move, resize or otherwise adjust the window 211 as desired. The exemplary embodiment shown in FIG. 2, for example, shows four directional arrows 215, 216, 217 and 218 (corresponding to movement in left, right, up and down directions, respectively) that can be "clicked" or otherwise indicated to move window 211 in a desired direction. Although not specifically shown in FIG. 1, other icons could be present to allow resizing, reordering, swapping of primary/secondary content, and/or other features as desired. In still other embodiments, window 211 could be presented with a drag bar or other feature that would allow dragging of window 211 to a desired position within display 102, as described more fully below.

FIG. 3 illustrates another embodiment of television imagery outputted by the receiver 108 for presentation on the display 102. In the exemplary view shown in FIG. 3, imagery 110B includes any number of tiles 324A-E, including a customer service tile 324E that provides access to a customer service feature, as appropriate. The various features presented in imagery 110B may vary widely from embodiment to embodiment. The relative spacing, proportions and locations of the various windows and other features described herein, for example, are entirely exemplary, and may vary widely in other embodiments. Other embodiments may similarly add or omit certain features, or use the various features for purposes other than those described herein.

Television imagery is presented on display 102 as desired by the viewer. Further, two-dimensional navigation features may be presented to allow the viewer to access various features of receiver 108 through control of a cursor 314 or other interface feature via remote control 112 (FIG. 1). In various embodiments, cursor 314 is able to move in response to two-dimensional input signals 125 (FIG. 1), which are, in turn, generated in response to inputs applied to two-dimensional input device 124 (FIG. 1). By moving cursor 314 to interact with the two-dimensional navigation features presented on display 102, various channels, programs, and/or other features may be tuned, activated or otherwise manipulated as desired.

In at least one embodiments, signals 105 (FIG. 1) received from the satellite 106 may also include EPG data, signaling information, marketing or promotional content, customer-specific information such as billing or services information, and/or the like. In various embodiments, viewers are able to further view imagery (e.g., the imagery 110B shown in FIG. 3) that is responsive to two-dimensional inputs generated using remote control 112 (FIG. 1). By moving cursor 314 with respect to imagery 110B, for example, tiles or other features can be pointed and selected to activate various features of receiver 108. A viewer may tune receiver 108 to a particular channel or program, for example, by directing cursor 314 toward a tile that is associated with the desired feature, and then depressing a select or enter key on the remote 112 (FIG. 1) to select the indicated feature. Selected features may be displayed or otherwise activated as desired.

Imagery 110B may be organized and presented in any manner. In the exemplary embodiment shown in FIG. 3, imagery 110B includes any number of tiles 324A-E that are organized into one or more windows 325. FIG. 3 also shows several tabs 326A-C that allow for different tile windows 325 to be presented. In the embodiment shown in FIG. 3, tab 326A corresponds to an initial or default view, tab 328A corresponds to a view of all available tiles, and tab 326C corresponds to a window that presents a sub-set of tiles selected by the viewer. Additional tabs 326 could also be provided to allow for multiple custom tile sets, or other features as desired.

Imagery 110B may also include other features as appropriate. The exemplary imagery 110B shown in FIG. 3 also includes icons or other features 330, 332 for decreasing or increasing (respectively) the size of window 325, for example. Selecting feature 330 with cursor 314, for example, could result in window 325 being removed from imagery 110B, whereas selecting feature 332 could increase the size of window 325 so that more tiles 324 are viewable. In some embodiments, selecting feature 332 creates a full-screen view of tile window 325, although in other embodiments this may not be the case. Exemplary imagery 110B in FIG. 3 also shows decoded television imagery presented in window 328. Other embodiments may show imagery generated by receiver 108 (e.g., program guide information or the like) when tile window 325 is visible. The particular content presented as part of imagery 110B, as well as the layout, spacing, dimensions and particular presentation style of such content, may vary significantly from embodiment to embodiment.

In the exemplary embodiment shown in FIG. 3, various interface tiles 324A-E are each associated with a program, network, or other feature of receiver 108. Tile 324A, for example, is associated with a television network (e.g., Home Box Office). Tile 324B is shown associated with a digital video recorder. Tile 324C is shown associated with an electronic program guide, and tiles 324D and 324E are shown associated with a search feature and a customer service feature, respectively. Selecting tiles 324B or 324C in this example could open up interface windows related to the DVR or EPG features, respectively, whereas selecting tile 324D could lead to an interface feature that would allow the viewer to search for programs or other content available via a DVR, the EPG, a placeshifting device, or any other source as desired. Customer service tile 324E could allow the viewer to access customer service information such as instructions on using receiver 108, billing information, information that allows for purchase or expansion of services, or any other features as desired.

The particular tiles 324A-E shown in FIG. 3 are purely exemplary, and alternate embodiments may provide additional tiles, alternate tiles or fewer tiles as appropriate. Moreover, the various tiles may have any shape, appearance or the like. Although tiles 324A-E in FIG. 3 are generally square or rectangular in shape, other embodiments could provide tiles that are round, or that have any regular or irregular shape whatsoever. Further, the information identifying each tile 324A-E need not be purely textual as shown in FIG. 3; alternate embodiments may provide tiles 324A-E with any sort of graphic, logo, text, numerical information and/or the like.

In various embodiments, the particular tiles displayed on any window 326 are configurable so that the viewer and/or a service provider are able to choose particular tiles for presentation on display 102. Tab 326C, for example, may allow a customized set of tiles to be provided for a particular viewer or receiver 108 (FIG. 1). Tabs 326 may be selected in any manner. Viewers may be able to drag tiles, for example, from the default view (tab 326A) or another view (e.g., the "all tiles" tab 326B) to the custom tile view (e.g., tab 326C). Other embodiments may select tabs for custom lists in any other manner. Further, the features performed by certain tiles may be configurable. A "favorite channel" tile, for example, could be configured to tune to a channel that is configurable by the viewer, since this feature would vary from viewer to viewer. Other parameters may be adjusted based on temporal factors, viewer preferences, and/or other factors as appropriate.

In various embodiments, imagery 110B also includes a help feature that is accessible through a tile, icon or other help indicator 334. When the viewer selects indicator 334 (e.g., by directing cursor 314 toward the indicator 334 and then selecting the feature), additional information can be provided to the viewer. Such information may include context-specific instructions for using the particular window(s) on the display, instructions for using one or more tiles 324 or features associated with any tile 324, and/or any other information as desired.

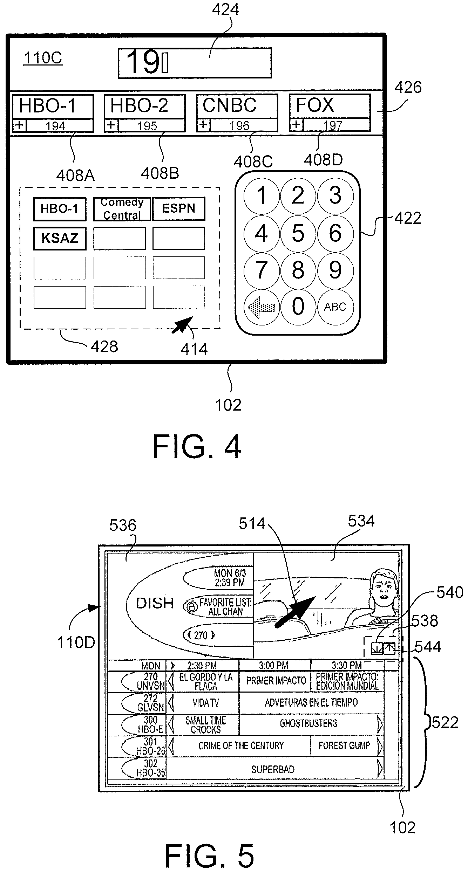

FIG.4 illustrates another embodiment of television imagery outputted for by the receiver 108 for presentation on the display 102. In the exemplary view shown in FIG. 4, imagery 110C includes a numeric, alphanumeric or other keypad 422 that allows for symbol-based data entry using cursor 414. Imagery 110C also includes a symbol display window 424, a channel indicator window 426, and a quick reference area 428 as desired. The various features presented in imagery 110C may vary widely from embodiment to embodiment. The relative spacing, proportions and locations of the various windows and other features described herein, for example, are entirely exemplary, and may vary widely in other embodiments. Other embodiments may similarly add or omit certain features, or use the various features for purposes other than those described herein.

Television imagery is presented on display 102 as desired by the viewer. Further, two-dimensional navigation features may be presented to allow the viewer to enter symbol-type or other data through control of a cursor 414 or other interface feature via remote control 112 (FIG. 1). In various embodiments, cursor 414 is able to move in response to two-dimensional input signals 125 (FIG. 1), which are, in turn, generated in response to inputs applied to two-dimensional input device 124 (FIG. 1). By moving cursor 414 to interact with the two-dimensional navigation features presented on display 102, numeric, alphanumeric and/or other data may be entered, recalled and/or otherwise manipulated as desired.

Receiver 108 suitably obtains the desired content from the channel(s) indicated by the viewer, and presents the content on display 102. In various embodiments, viewers are able to further view imagery (e.g., the imagery 110C shown in FIG. 4) that allows for numeric, alphanumeric or other symbol-based inputs to be generated using remote control 112 (FIG. 1), even though remote control 112 (FIG. 1) may not have keys or buttons corresponding to some or all of the symbols entered. By moving cursor 414 with respect to imagery 110C, for example, a "virtual keypad" can be created that allows symbol-type inputs to be generated. A viewer may enter numerals, for example, by directing cursor 414 toward the desired numeral in keypad 422, and then depressing a select or enter key on the remote 112 (FIG. 1) to select the indicated symbol. Entered symbols may be displayed or otherwise processed as desired. In the exemplary embodiment shown in FIG. 4, numeric inputs are used to select a television channel to be decoded and presented on display 102. In this embodiment, channel numbers generated with keypad 422 are presented in display window 424, and are also used to select tiles or other indicators in channel indicator window 426. These indicators can be selected (e.g., with cursor 414) to directly tune the indicated channel, or one or more indicated channels may be saved in quick retrieval window 428 for later tuning. Other channel tuning implementations may provide widely varying layouts and features; still other embodiments may use symbol-based inputs for completely different functions, such as searching for programs in an EPG, DVR, network server or other program source, or any other function as desired.

FIG. 5 illustrates another embodiment of television imagery outputted for by the receiver 108 for presentation on the display 102. In the exemplary view shown in FIG. 5, imagery 110D includes a program guide window 522 that provides electronic program guide (EPG) information about the currently-viewed program and/or other programs as desired. The exemplary imagery 110D shown in FIG. 5 also includes decoded program information (e.g., a television program) in window 534, as well as advertising, informational and/or other information presented in window 536. The relative spacing, proportions and locations of the various windows and other features described herein are entirely exemplary, and may vary widely in other embodiments.

Television imagery is presented on display 102 as desired by the viewer. Further, two-dimensional navigation features (e.g., resize indicator 538) may be presented to allow the viewer to manipulate the size of EPG window 522 through control of a cursor 514 or other interface feature via remote control 112 (FIG. 1). In various embodiments, cursor 514 is able to move in response to two-dimensional input signals 125 (FIG. 1), which are, in turn, generated in response to inputs applied to two-dimensional input device 124 (FIG. 1). By moving cursor 514 to interact with the two-dimensional navigation features presented on display 102, EPG window 522 may be resized, moved, re-aligned or otherwise manipulated as desired.

Receiver 108 suitably obtains the desired content from the channel(s) indicated by the viewer, and presents the content on display 102. In various embodiments, viewers are able to further view an electronic program guide 522 that may be sized or re-sized as desired. The size of the EPG window 522 may be increased or decreased relative to other features in imagery 110D, for example, in response to inputs 125 (FIG. 1) received from the viewer. For example, in various embodiments the viewer may be able to direct cursor 514 toward a resize indicator 538 to increase or decrease the size of window 522. In the exemplary embodiment shown in FIG. 5, resize indicator includes a first button or icon 540 that decreases the size of guide window 522 as well as a second button/icon 544 that increases the size of guide window 522. Other embodiments may contain additional features or enhancements of any sort.

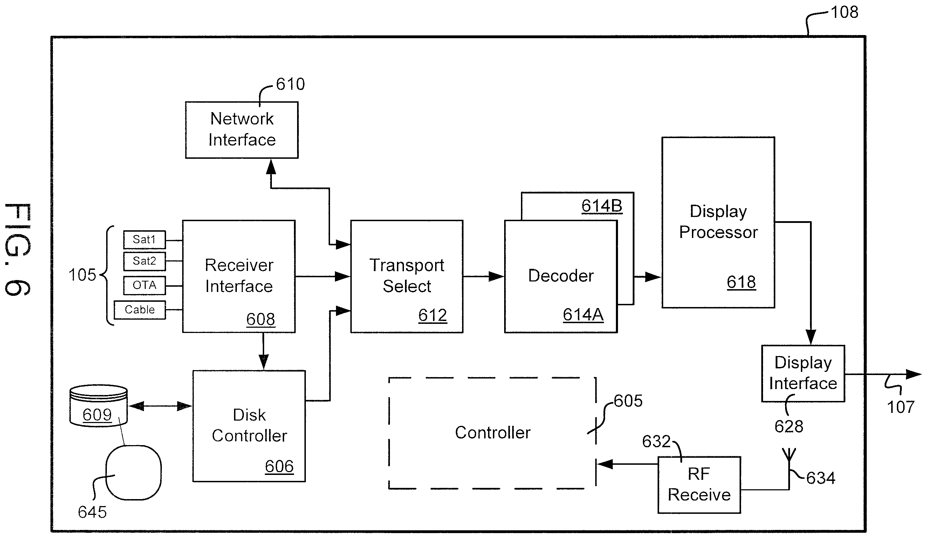

FIG. 6 provides additional detail about an exemplary receiver 108 that includes a receiver interface 608, a decoder 614A and 614B and a display processor 618, as appropriate. FIG. 6 also shows a disk controller interface 606 to a disk or other storage device 609, an interface 610 to a local or wide area network, a transport select module 612, a display interface 628, an RF receiver module 632 and control logic 605. Other embodiments may incorporate additional or alternate processing modules from those shown in FIG. 6, may omit one or more modules shown in FIG. 6, and/or may differently organize the various modules in any other manner different from the exemplary arrangement shown in FIG. 6.

Receiver 108 may be physically and logically implemented in any manner. FIG. 6 shows various logical and functional features that may be present in an exemplary device; each module shown in the figure may be implemented with any sort of hardware, software, firmware and/or the like. Any of the various modules may be implemented with any sort of general or special purpose integrated circuitry, for example, such as any sort of microprocessor, microcontroller, digital signal processor, programmed array and/or the like. Any number of the modules shown in FIG. 6, for example, may be implemented as a "system on a chip" (SoC) using any suitable processing circuitry under control of any appropriate control logic 605. In various embodiments, control logic 605 executes within an integrated SoC or other processor that implements receiver interface 608, transport selector 612, decoder 614, display processor 618, disk controller 606 and/or other features, as appropriate. The Broadcom Corporation of Irvine, California, for example, produces several models of processors (e.g., the model BCM 7400 family of processors) that are capable of supporting SoC implementations of satellite and/or cable receiver systems, although products from any number of other suppliers could be equivalently used. In still other embodiments, various distinct chips, circuits or components may be inter-connected and inter-relate with each other to implement the receiving and decoding functions represented in FIG. 6.

Various embodiments of receiver 108 therefore include any number of appropriate modules for obtaining and processing media content as desired for the particular embodiment. Each of these modules may be implemented in any combination of hardware and/or software using logic executed within any number of semiconductor chips or other processing logic.

Various embodiments of control logic 605 can include any circuitry, components, hardware, software and/or firmware logic capable of controlling the various components of receiver 108. Various routines, methods and processes executed within receiver 108 are typically carried out under control of control logic 605, as described more fully below. Generally speaking, control logic 605 receives user input signals 125 (FIG. 1) via an RF receiver interface 632 that is able to communicate with the remote control 112 (FIG. 1) using a suitable antenna 634. Control logic receives user inputs from remote control 112 (FIG. 1) and/or any other source, and directs the other components of receiver 108 in response to the received inputs to present the desired imagery on display 102 (FIG. 1).

As noted above, receiver 108 suitably includes a receiver interface 608, which is any hardware, software, firmware and/or other logic capable of receiving media content via one or more content sources. In various embodiments, content sources may include cable television, DBS, broadcast and/or other programming sources as appropriate. Receiver interface 608 appropriately selects a desired input source and provides the received content to an appropriate destination for further processing. In various embodiments, received programming may be provided in real-time (or near real-time) to a transport stream select module 612 or other component for immediate decoding and presentation to the user. Alternatively, receiver interface 608 may provide content received from any source to a disk or other storage medium in embodiments that provide DVR functionality. In such embodiments, receiver 608 may also include a disk controller module 606 that interacts with an internal or external hard disk, memory and/or other device that stores content in a database 609, as described above.

In the embodiment shown in FIG. 6, receiver 108 also includes an appropriate network interface 610, which operates using any implementation of protocols or other features to support communication by receiver 108 on any sort of local area, wide area, telephone and/or other network. In various embodiments, network interface 610 supports conventional LAN, WAN or other protocols (e.g., the TCP/IP or UDP/IP suite of protocols widely used on the Internet) to allow receiver 108 to communicate on the Internet or any other network as desired. Network interface 610 typically interfaces with the network using any sort of LAN adapter hardware, such as a conventional network interface card (NIC) or the like provided within receiver 108. Other embodiments may provide interfaces 610 to conventional telephone lines or other communications channels, or may omit network connectivity altogether.

Transport stream select module 612 is any hardware and/or software logic capable of selecting a desired media stream from the available sources. In the embodiment shown in FIG. 6, stream select module 612 is able to generate video signals for presentation on one or more output interfaces 628. Typically, transport select module 612 responds to viewer inputs (e.g., via control logic 605) to simply switch encoded content received from a broadcast, satellite, cable or other source 605 or from storage 609 to one or more decoder modules 614.

Receiver 108 may include any number of decoder modules 614A-B for decoding, decompressing and/or otherwise processing received/stored content as desired. Generally speaking, decoder modules 614A-B decompress, decode and/or otherwise process received content from transport select module 612 to extract an MPEG or other media stream encoded within the stream. The decoded content can then be processed by one or more display processor modules 618 to create a presentation on display 102 (FIG. 1) for the viewer in any appropriate format. FIG. 6 shows two decoder modules 614A-B operating on separate television signals received from transport select module 612.

In practice, any number of decoder modules 614A-B may be used, particularly in PIP settings where multiple signals are simultaneously decoded and displayed, or in embodiments wherein channel content is directly scrolled across other channel content. In such embodiments, it may be desirable to receive multiple channels simultaneously to facilitate the rapid scrolling of content on a common display of imagery 110 (FIG. 1). That is, by simultaneously tuning and decoding content from multiple channels, the scrolling from one channel to the next can be facilitated. Other embodiments, however, may not make use of multiple decoder modules 614, but may instead only decode a single stream at any particular time. The term "decoder", then, may collectively apply to one or more decoder modules that are able to decode one or more signals for presentation on display 102 (FIG. 1).

Display processor module 618 includes any appropriate hardware, software and/or other logic to create desired screen displays via display interface 628 as desired. Such displays may include combining signals received from one or more decoder modules 614A-B to facilitate viewing of one or more channels. In various embodiments, display processing module 618 is also able to produce on screen displays (OSDs) for electronic program guide, setup and control, input/output facilitation and/or other features that may vary from embodiment to embodiment. Such displays are not typically contained within the received or stored broadcast stream, but are nevertheless useful to users in interacting with receiver 108 or the like. The generated displays, including received/stored content and any other displays may then be presented to one or more output interfaces 628 in any desired format. The various interface features described herein, for example, may be generated by display processor module 618 operating alone or in conjunction with control logic 605.

When the viewer requests channel change, for example, display processor 618 may be operable to superimpose program guide window 122 (FIG. 1) over the imagery 110 (FIG. 1) presented from the primary channel. Display processor 618 may also generate symbology to scroll the program guide information presented in window 122 (FIG. 1) in response to viewer inputs received and/or instructions from command logic 605 to thereby make up a user interface that allows the viewer to adjust window 122 (FIG. 1) (or other features) as desired. As receiver 108 receives user inputs 125 (FIG. 1) from remote control 112 (FIG. 1), control logic 605 may direct display processor 618 to adjust window 122 (FIG. 1) or any other feature of imagery 110 (FIG. 1) as directed by the viewer. For example, the display processor 618 may direct the presentation of program guide window 122 (FIG. 1) in conjunction with one or more navigation features, and adjust the program guide window 122 (FIG. 1) in response to inputs received from the viewer. As noted above, other embodiments may simply scroll the content of one channel over that of another, thereby creating a direct scrolling of channel data without the need for a program guide window 122 (FIG. 1).

Display processor 618 produces an output signal encoded in any standard format (e.g., ITU656 format for standard definition television signals or any format for high definition television signals) that can be readily converted to standard and/or high definition television signals at interface 628. In other embodiments, the functionality of display processor 618 and interface 628 may be combined in any manner.

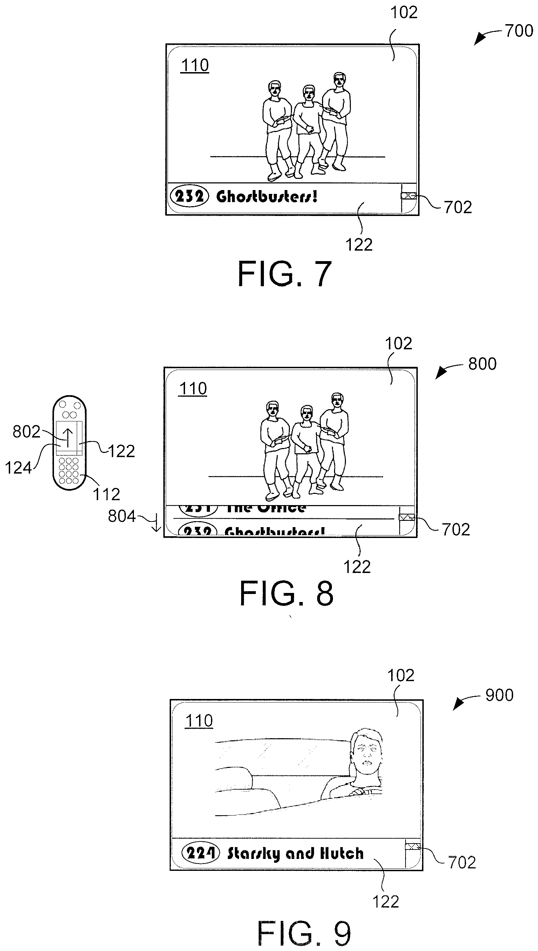

FIGS. 7-9 show an exemplary progression of displays 700, 800, 900 that would allow a viewer to change a channel from a showing of the "Ghostbusters!" movie on channel 232 to a showing of the "Starsky and Hutch" program on channel 224 using a program guide window 122. Of course the various parameters shown in these figures is purely exemplary; in practice, any number of scrolling techniques may be applied in any manner to allow any appropriate action by the viewer.

Beginning with FIG. 7, an exemplary display 700 suitably includes a program guide window 122 superimposed upon primary imagery 110, as described above. Program guide window may be initially presented in response to any suitable conditions; a button press or application of input to a directional input feature 124 (FIG. 1) on remote control 112 (FIG. 1), for example, could result in the program guide window 122 being automatically displayed.

Program guide window 122 provides any appropriate information about programs available to the viewer. In the exemplary embodiment shown in FIGS. 1-9, program guide window 122 provides a channel number and the name of the program being shown on that channel. Other embodiments may alternately or additionally provide network or channel identification (e.g., "Fox 15", "KSAZ", "HBO" and/or the like), program times, content descriptions, parental control ratings, and/or any other information as desired. Such information is conventionally provided to receiver 108 using any sort of electronic program guide techniques; the information may be readily retrieved from the guide and displayed in any manner.

Although the embodiment shown in FIG. 7 only shows a single line of program guide information, other embodiments may display multiple lines as desired. The other lines shown may correspond to programs showing on other channels (e.g., channels that adjoin the currently viewed channel). In such embodiments, the currently tuned channel may be highlighted or otherwise emphasized in any manner to allow for ready identification of the current and most relevant information.

The exemplary embodiment shown in FIGS. 7-9 includes a scroll indicator 702 that indicates the relative position of the information presented in window 122 with respect to the available guide data. Scroll indicator 702 may move upwardly or downwardly (as presented in FIGS. 7-9) as the viewer scrolls through the information presented in program guide window 122 to further increase the awareness of the viewer. Scroll indicator 702 may be differently shaped, positioned or otherwise implemented in any manner, or may be omitted entirely in some embodiments.

To allow the viewer to change from the initial channel (e.g., channel 232) to a desired channel (e.g., channel 224), receiver 108 (FIG. 1) suitably responds to scrolling instructions applied by the viewer at remote 112 (FIG. 1). In various embodiments, the list of available channels may be conceptualized as a sequential list. Scrolling upwardly or downwardly through the list, then, can be accomplished in response to any sort of input having one or more dimensions. In a simple embodiment, a rocker switch, scroll ring, scroll bar or other one dimensional input can be used to direct scrolling in either direction (e.g., upward or downward, as shown in FIGS. 7-9). In other embodiments, inputs from a two-dimensional input device (e.g., a touchpad, joystick, directional pad or other 2-d device 124 (FIG. 1)) can be readily converted to a one-dimensional input by simply ignoring movement in one dimension. Vertical movement on a touchpad 124 (FIG. 1), for example, can be readily extracted by simply ignoring movement in the horizontal direction. In an exemplary embodiment, scrolling inputs are provided by the viewer by applying finger pressure to a touchpad 124 (FIG. 1), or to a scroll region (e.g., region 123 (FIG. 1)) associated with touchpad 124 (FIG. 1). Other embodiments may provide a separate one-dimensional scroll region similar to region 123 (FIG. 1). Still other embodiments may provide scrolling commands based upon inputs received at entirely different interface features such as buttons, sliders, motion sensors and/or the like.

With reference to FIG. 48 inputs applied at remote control 112 (FIG. 1) may be correlated to scrolling in window 122 (FIG. 1) in any manner that is intuitive or understandable to the viewer. In an exemplary embodiment, movement in an "upward" direction 802 on remote 112 can result in scrolling in a downward direction (e.g., represented by arrow 804 in FIG 8). The downward movement (e.g., text progresses from the top of window 122 toward the bottom of window 122) gives the appearance that the frame of reference (e.g., window 122) is actually moving upward. Hence, downward scrolling in response to "upward" movement 802 appears natural to the viewer.

Scrolling proceeds in any appropriate manner. In various embodiments, scrolling is relatively smooth in that information appears to the viewer to smoothly proceed from one edge of window 122) to the opposing edge of the window. FIG. 8, for example, shows scrolling that is midway between the current channel (channel 232) and the next channel in the indicated direction (channel 231). In many embodiments, the contents of window 122 appear as a continuous scroll of text and/or other information so that the smooth feel of the input device 112 (FIG. 1) can be preserved. Such scrolling may be line-by-line, pixel-by-pixel, or according to any other scheme that allows for a pleasing appearance and feel to the viewer. Note that in example shown in FIG. 8, the contents of window 122 are shown approximately midway between two channels, reflecting that the scrolling is continuous from one channel to the next, rather than a mere sequential presentation of data from one channel to the next. In various embodiments, the program guide information shown in window 122 may be re-aligned to "snap" to the closest channel if scrolling should stop while the information is midway between two channel descriptions.

When the viewer has scrolled to the desired channel, receiver 108 (FIG. 1) tunes to the selected program. FIG. 9, for example, shows that imagery 110 has been changed from the program on channel 232 to the program on channel 224. The selected program may be indicated in any manner; the viewer may depress a "select" key or other feature on remote control 112 (FIG. 1), for example. Alternately, if scrolling inputs are discontinued for a threshold period of time, the channel indicated in the program guide window 122 (see FIG. 1) may be tuned without waiting for additional input. That is, the viewer simply scrolls to the desired program, and then stops scrolling to allow the receiver 108 (FIG. 1) to tune the selected program. Other embodiments may modify or supplement this scheme in any manner.

As noted above, alternate embodiments may simply scroll imagery 110 from channel to channel directly. This may be accomplished, for example, by tuning the current channel in addition to one or more channels adjacent to the current channel. As the viewer provides a directional movement (e.g., an upward or downward indication) on remote control 112 (FIG. 1), the imagery 110 on display 102 is scrolled in a corresponding direction. This tuning and scrolling of channel content can continue until the viewer has scrolled to the desired channel.

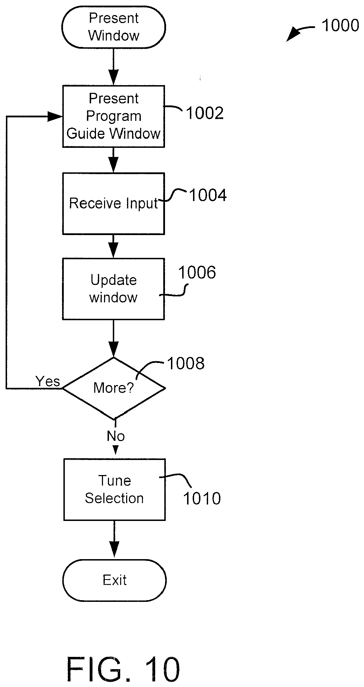

FIG. 10 shows an exemplary process 1000 for changing imagery presented on a display 102 (FIG. 1) using a program guide window 122 (FIG. 1). In various embodiments, the various steps shown in FIG. 10 may be executed using source or object code in any format that may be stored in mass storage, firmware, memory or any other digital storage medium within receiver 108 (FIG. 1). Such code may be executed by any module or combination of modules operating within receiver 108 (FIG. 1). In an exemplary embodiment, some or all of the steps shown in process 1000 are executed by a display processing module 618 (FIG. 6) operating alone or in conjunction with control logic 605 (FIG. 6) and/or the various other features shown in FIG. 6 and described above.

With reference now to FIG. 10, an exemplary process 1000 suitably includes the broad steps of presenting a program guide window (step 1002), receiving viewer input from the remote control 112 (step 1004), updating the program guide window (step 1006) to accommodate scrolling or other features as desired, and then tuning to the selected channel or other feature (step 1010). Other embodiments may supplement or modify these basic steps in any manner; various steps may execute in any other temporal manner, for example.

Program guide window 122 (FIG. 1) may be drawn in any manner (step 1002). In various embodiments, window 122 (FIG. 1) is drawn in response to initial input received from the viewer, such as an initial touch at a touchpad, slider or other device 124 (FIG. 1). This initial presentation typically includes information about the current channel, as described above. Presentation of the program guide window may be directed by display processor 618 (FIG. 6), as described above, in response to signals 125 (FIG. 1) received by receiver module 632 (FIG. 6), or as otherwise directed by control logic 605 (FIG. 1). Other embodiments, however, may generate and provide the program guide window 122 (FIG. 1) in any other manner.

Viewer input can also be used to direct scrolling of program guide data, as described above. As viewer inputs are received (step 1004), this information can be used to direct scrolling toward subsequent program guide information. Scrolling can proceed in either of two directions, for example, to present information from channels that appear above or below the initially-selected channel in the channel list. The program guide window 122 (FIG. 1) is therefore updated (step 1006) to reflect the continued scrolling inputs, and/or to accommodate other inputs as desired. As noted above, the scrolling may be generally smooth in the sense of text or other imagery progressing from one side of window 122 (FIG. 1) to the opposing side, then disappearing from view. This presents a very pleasing perception to the user that corresponds well to touch or other scrolling inputs received at remote control 112 (FIG. 1). Updates to window 122 (FIG. 1) may be provided by redrawing or refreshing the presentation of window 112 (FIG. 1) on display 102 (FIG. 1) at any frequency.

As noted above, scrolling may continue on any temporal basis. In various embodiments, scrolling remains active until the viewer selects a particular channel for subsequent viewing. In other embodiments, scrolling remains active until viewer input is discontinued (step 1008). That is, scrolling continues until appropriate input signals 125 (FIG. 1) are no longer received, at which time the channel indicated in window 122 (FIG. 1) can be tuned (step 1010), or other actions can be taken as desired.

The viewer's selection can be tuned in any manner (step 1010). In various embodiments, a subsequent channel indicated by the program guide information in window 122 (FIG. 1) can be tuned (e.g., by decoder 614A-B (FIG. 6)) to present the selected channel to the viewer as imagery 110 (FIG. 1).

Returning to FIG. 6, in at least one embodiment, the television receiver 108 may be configured to present a PIP window 211 (see FIG. 2). When the viewer requests a PIP window 211, for example, display processor 618 may be operable to receive the desired imagery from one or more decoder modules 614A-B and to create an image with the imagery from the secondary channel superimposed in PIP window 211 on the imagery 110 (FIG. 1) from the primary channel. Display processor 618 may also generate symbology such as cursor 214 and/or navigational features (e.g., arrows 215-218 in FIG. 1) making up a user interface that allows the viewer to adjust window 211 (or other features) as desired. As receiver 108 receives user inputs 125 (FIG. 1) from remote control 112 (FIG. 1), control logic 605 may direct display processor 618 to adjust window 211 or any other feature of imagery 110 (FIG. 1) as directed by the viewer. Display processor 618 therefore directs the presentation of PIP window 211 in conjunction with one or more navigation features, and adjusts the PIP window 211 in response to inputs received from the viewer.

Display processor 618 produces an output signal encoded in any standard format (e.g., ITU656 format for standard definition television signals or any format for high definition television signals) that can be readily converted to standard and/or high definition television signals at interface 628. In other embodiments, the functionality of display processor 618 and interface 628 may be combined in any manner.

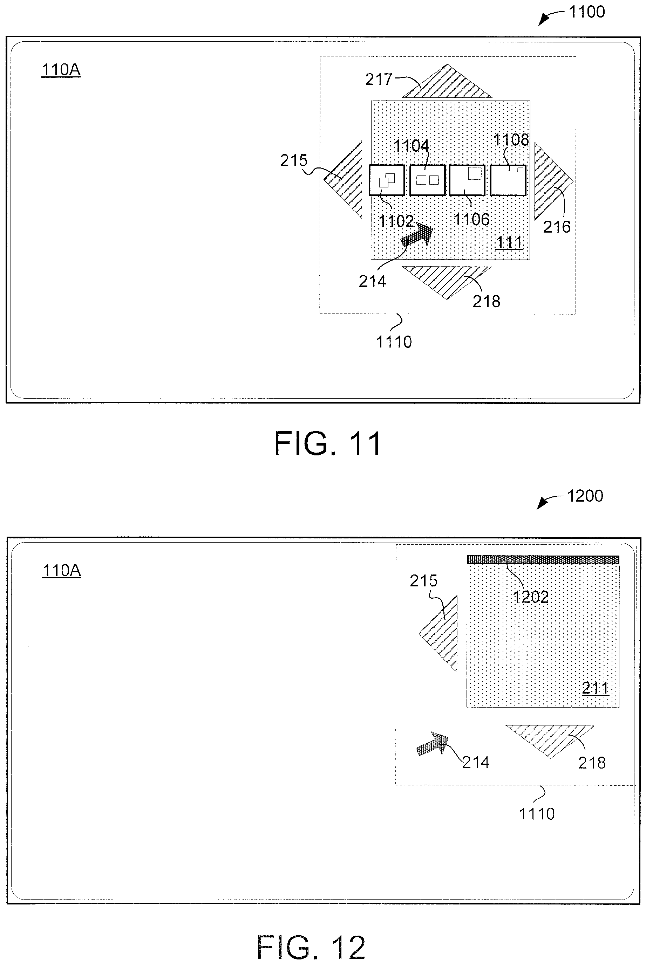

Turning now to FIG. 11, an exemplary screen 1100 suitably includes a PIP window 211 superimposed upon primary imagery 110A, as described above. Screen 1100 also shows navigational features including cursor 214, arrows 215-218, and icons 1102, 1104, 1106 and 1108. The viewer moves cursor 215 using, for example, the two dimensional input device 124 (FIG. 1) associated with remote control 112 (FIG. 1), and selects the navigational features using any sort of "select" or "enter" feature, such as a "select" key on remote control 112 (FIG. 1). In various embodiments, the select key functions similar to a conventional select button on a mouse, touchpad or other input device commonly associated with a personal computer or the like.

As noted above, clicking on any of the arrow features 215-218 can have the perceived effect of moving window 211 in the direction of the arrow. Clicking on the "right" arrow 216, for example, could move window 211 from its current position toward the rightmost side of screen 1100.

The exemplary embodiment of FIG. 11 also shows several icons 1102, 1104, 1106, and 1108. As shown in FIG. 11, icon 1102 can be selected to swap the contents of windows 110 and 211 so that the secondary content becomes the primary content, and vice versa. Icon 1104 may be selected to create a "side-by-side" display in which both the primary and secondary content occupy roughly equal proportions of display 102. Icons 1106 and 1108 can be selected to increase and decrease, respectively, the size of window 211. Other embodiments may provide additional features and/or may omit certain features shown in FIG.11. Moreover, any number of icons 1102, 1104, 1106, 1108 may be present in other embodiments, or icons may be omitted entirely in some embodiments.

Navigation features need not be presented on screen 1100 at all times. In various embodiments, certain navigational features may be activated or deactivated in response to viewer actions with remote control 112 (FIG. 1). Cursor 214, for example, may remain hidden until inputs are detected on input device 124 (FIG. 1) and/or remote control 112 (FIG. 1). Icons 1102, 1104, 1106, and 1108 may be obscured until cursor 214 is positioned over or near window 211. Arrows 215-218 may similarly be obscured unless cursor 214 is in proximity to window 211. In various embodiments, arrows 215-218 may be displayed when cursor 214 is within a region 1110. Region 1110 may be any size or shape, and may coincide with window 211 in various embodiments. Other embodiments may obscure and/or display navigational features in response to different conditions, as desired.

In various further embodiments, some or all of the navigation features presented on screen 1100 may be altered as conditions warrant. FIG. 12, for example, shows an exemplary screen 1200 in which the PIP window 211 has moved into the upper right quadrant of the display, making further movement in the upward or rightward directions impractical. In such embodiments, arrows 216 and 217 (FIG. 1) have been removed to disallow further movement in those directions.

FIG. 12 also shows an alternate navigational feature for changing the position of window 211. In various embodiments, arrow features 215-218 are replaced or supplemented with a drag bar feature 1202. Drag bar 1202 is any bar, button or other feature capable of being selected (e.g., using cursor 214) and dragged to another position on screen 1200. Drag bar 1202 may become displayed or otherwise activated when cursor 214 enters into region 1110, as described above, or according to any other parameters. In other embodiments, drag bar 1202 is simply a window header that remains relatively static when window 211 is presented on screen 1200.

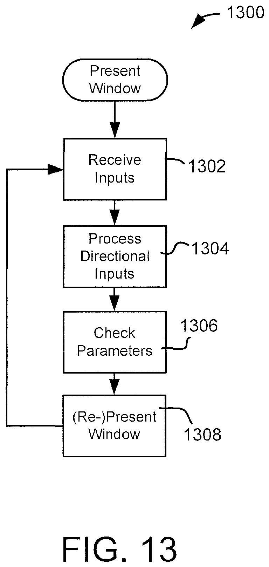

FIG. 13 shows an exemplary process 1300 for presenting a PIP window 211 (FIG. 10) on a display 102 (FIG. 1). In various embodiments, the various steps shown in FIG. 13 may be executed using source or object code in any format that may be stored in mass storage, firmware, memory or any other digital storage medium within receiver 108 (FIG. 1). Such code may be executed by any module or combination of modules operating within receiver 108 (FIG. 1). In an exemplary embodiment, some or all of the steps shown in process 1300 are executed by a display processing module 618 (FIG. 6) operating alone or in conjunction with control logic 605 (FIG. 6) and/or the various other features shown in FIG. 6 and described above.

With reference now to FIG. 13, an exemplary process 1300 suitably includes the broad steps of receiving two-dimensional or other inputs related to the PIP display (steps 1302), processing the inputs (step 1304) and then presenting window 211 by drawing or re-drawing window 211 as appropriate (step 1310). Various other steps or features may be present as well in any number of alternate embodiments.

Process 1300 suitably begins by receiver 108 receiving inputs 125 (step 1302) from the viewer. In various embodiments, the received inputs are provided from remote control 112 to receiver via RF interface 232 and antenna 234, although other techniques may be used in other embodiments.

Inputs 125 that are relevant to PIP functionality may initially include any sort of indication that the viewer would like to view a PIP window 211; such an indication may be responsive to a "PIP" button on remote control 112, or to a selection of a menu feature generated on display 102. After PIP window 211 is displayed, subsequent inputs 125 may be received from remote control 112 that allow for moving, resizing or other manipulation of the PIP window, as described above. Such inputs 125 may include, for example, two dimensional inputs received from the two-dimensional input device 124 associated with remote control 112 to allow for directional movement, resizing, and/or the like.

Directional inputs 125 may be processed (step 1304) in any manner. Control logic 605, for example, may process multi-dimensional inputs from input device 124 to extract and determine the viewer's intent for subsequent processing.

In various embodiments, one or more parameters may be checked prior to presenting (or re-drawing) PIP window 211. Such parameters may include a screen position of PIP window 211, for example, to ensure that sufficient display space is available for one or more directional features (e.g., arrows 215-218). Other embodiments may detect if cursor 214 is located within a region of interest (e.g., region 310 described above) to ascertain whether certain features should be provided on the display.

When the proper imagery is determined, window 211 may be drawn or redrawn on display 102 as appropriate (step 510). In various embodiments, window 211 is presented superimposed upon primary imagery 110A, as described above. Further, various navigational features (e.g., cursor 214, arrows 215-218, icons 1102-1108, drag bar 1202) may be drawn as desired, in accordance with any parameters and rules established in step 1308. Window 211 and any associated navigational features may be redrawn in response to inputs subsequently received. In practice, then, after a PIP window 211 and any associated navigation features are presented on display 102 in a first iteration of step 510, subsequently received two-dimensional inputs may be further received and processed (steps 1302-1308) before re-drawing window 211 according to the newly-received inputs in a subsequent occurrence of step 510. The general logical and data flow of a practical embodiment may be modified from that shown in FIG. 13 in any manner; additional or alternate steps may be provided, and/or one or more steps may be omitted as appropriate.

Returning to FIG. 6, various embodiments of receiver 108 are able to optionally store information 645 on storage medium 609 for later retrieval. Such information 645 may include customer-specific billing or service information, audio/video clips for promotional, educational or other purposes, and/or any other information as desired. This information may be obtained via the receiver interface 608 (e.g., from a satellite, cable or other programming signal 105), via network interface 610, or from any other source as desired. In some embodiments, information 645 may be received in the form of a broadcast message transmitted as part of a satellite or cable signal 105 that includes customer-specific information associated with a particular viewer or a particular receiver 108. This information may be encoded and/or encrypted as desired, and may be indexed, for example, to a unique code associated with receiver 108. In such embodiments receiver 108 is able to extract customer or receiver-specific information from the broadcast message using any appropriate techniques. One technique for obtaining billing, services and/or other customer-specific information via a satellite, cable or other programming connection is described in United States Patent Application Serial No. 12/197,100 entitled "Systems and Methods for High Bandwidth Delivery of Customer-Specific Information" and filed on August 22, 2008, although other techniques could be used in other embodiments. Other embodiments may obtain information 645 through a back-channel query (e.g., using network interface 610) to a remote server. In other embodiments, information 645 may not be downloaded, but rather may be "burned in" or otherwise stored on receiver 108 before receiver 108 is distributed to the viewer.

Display processor 618 may also generate imagery 110B in response to viewer inputs received (and/or in response to instructions from command logic 605) to thereby make up a user interface that allows the viewer select channels or programs, or to perform other tasks as desired. When the viewer provides inputs at tiles 324 or any other user interface features, for example, display processor 618 may be operable to draw (or redraw) imagery 110B in response, and/or to present television content identified by the viewer, as appropriate. As receiver 108 receives user inputs 125 from remote control 112, control logic 605 may direct display processor 618 to adjust any feature(s) of imagery 110B as directed by the viewer. Display processor 618 therefore directs the presentation of imagery 110B in conjunction with one or more navigation features, and adjusts the imagery 110B in response to inputs received from the viewer.

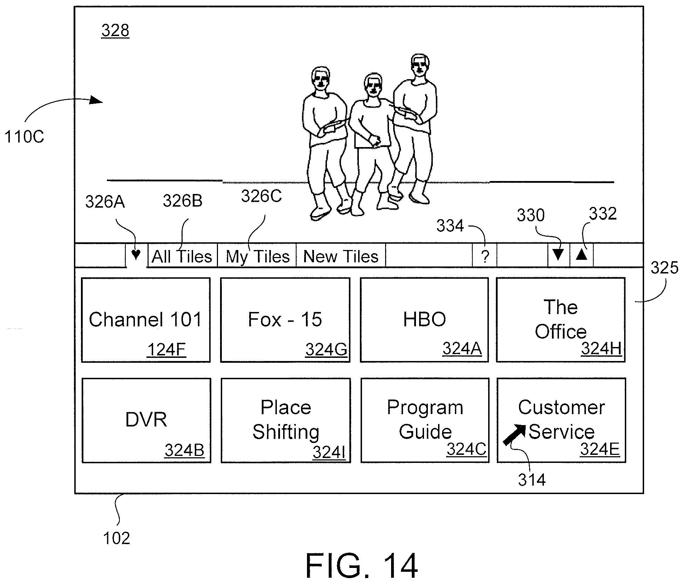

FIG. 14 shows an exemplary presentation of imagery 110C that includes any number of tiles 324A-I and that would allow a viewer to select features using a remote control 112 (FIG. 1) with two-dimensional input capability. Other embodiments may incorporate imagery 110C of different sizes and configurations, and/or may allow for additional or other features in any manner. Practical views of imagery 110C presented on display 102 may vary widely from that shown in FIG. 14 without departing from the concepts discussed herein.

In the embodiment shown in FIG. 14, the viewer guides cursor 314 over one or more tiles 324 or other images associated with imagery 110B using the touchpad, motion sensor or other two-dimensional feature 123 (FIG. 1) associated with remote control 112 (FIG. 1). When the cursor 314 is positioned as desired, the viewer may be able to select the tile 324 or other feature by depressing a "select" or "enter" key, as appropriate. The "select" key may be a button or trigger on remote 112 (FIG. 1), for example, or may be any other interface feature as desired.

As noted above, the particular features executed by any particular tile can vary widely from embodiment to embodiment, and even from tile to tile. Selecting a network tile (e.g., tile 324A), for example, may result in any actions associated with that network being executed. A particular channel could be tuned, for example, or other features could be provided as appropriate. Such features may include, for example, specific information about the network or programs produced by the network. Other features could include scheduling or program guide information that is specific to the network. In still other embodiments, the viewer may be able to select and view preview clips, informational clips, or other additional content about programs shown on the associated network. Such information may be downloaded, for example, via a digital network or via satellite, cable and/or other programming signals 105 (FIG. 1) delivered to receiver 108. In some embodiments, tiles (e.g., network tile 324A) could be sponsored tiles in which a DBS, cable or other television service provider sends instructions to receiver 108 (FIG. 1) to display a sponsored tile 324A at appropriate times.

Similarly, tiles associated with particular programs (e.g., tile 324H in FIG. 14) could be associated with any features relating to that program. In some embodiments, program tile 324H may be visible only when the associated program is being broadcast, thereby allowing the program to be immediately tuned by receiver 108 upon selection of tile 324H. In other embodiments, selecting tile 324H could result in setting a DVR to record an upcoming showing of the program. In still other embodiments, selecting tile 324H may result in the viewer being presented with additional information about the associated program, such as "behind the scenes" informational clips, clips of interviews with people associated with the program, episode previews, or even entire episodes for download, "on demand" viewing, or other features as desired. In various embodiments, some or all of the content presented in response to selection of program tile 324H is downloaded from a program source (e.g., satellite 106 (FIG. 1), or any service provider resource associated with any sort of DBS, cable or broadcast service) beforehand. In still other embodiments, selecting a program tile 324H results in information about the associated program being downloaded from a remote source. Such download may take place immediately (e.g., over a digital network), or at a later time as appropriate.

Channel tiles (e.g., tiles 324F-G) may be associated with particular channels in any manner. Selection of these tiles may result in the particular channel being immediately tuned by receiver 108 (FIG. 1) so that programming on that channel can be presented. In other embodiments, program guide information for that channel can be displayed so the viewer can see upcoming programming on that channel. In still other embodiments, particular channels may provide other information (e.g., RSS feeds for weather, traffic, local news and/or other information) that can be displayed in response to selection of the tile. Other features may be alternately or additionally provided as desired.

As noted above, other tiles could be formulated for any purpose or feature. Other tiles may allow for viewer settings, for example, that would allow the viewer to configure receiver 108 (FIG. 1) in any manner. Tiles 324B, 324C, 324I shown in FIG. 14 provide for DVR, EPG, or placeshifting features, respectively; simply clicking on these tiles could bring up a window or other interface associated with the selected feature. Again, additional or alternate features may be provided as well.

Customer service features may be implemented in any manner. In various embodiments, a customer service tile 324E is provided that may be selected by the viewer as desired. Customer service tile 324E may be provided in any window 325 or other feature that provides convenient access to the viewer. As noted above, a viewer selects tile 324E using cursor 314 and/or remote control 112 (FIG. 1) as appropriate. In response to the selection of the customer service tile 324E, customer service features may be provided as desired.

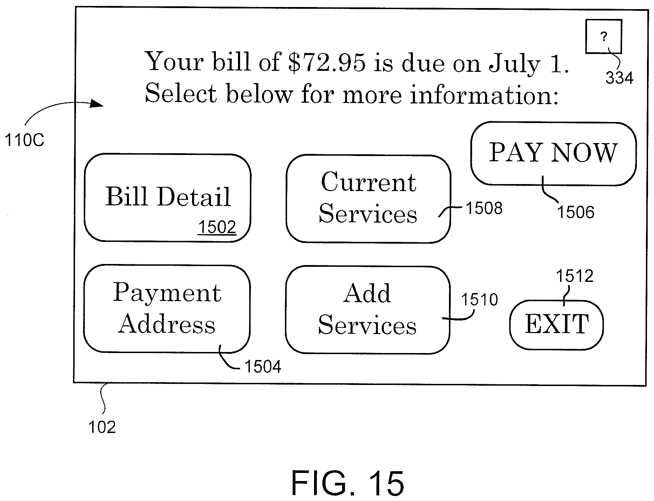

Customer service features provided by receiver 108 (FIG. 1) may vary from embodiment to embodiment. In some embodiments, such features may simply provide information such as assistance windows (e.g., in response to selection of help indicator 334), user guide information, information about configuring or operating receiver 108 (FIG. 1), and/or the like. Such information may be stored (e.g., as information 645 (FIG. 1)) within receiver 108 (FIG. 1) as desired. In further embodiments, customer or receiver specific information such as billing information, service information and/or the like may be provided. The imagery 110B shown in FIG. 15, for example, shows an exemplary presentation of customer-specific information, including billing information, in conjunction with several additional tiles 1502-1512 that provide additional features. In this particular example, textual data indicates that a bill of "$72.95" is due on "July 1". This information may be extracted from information 645 (FIG. 1) or the like. Imagery 110B shown in FIG. 15 also includes additional tiles or other prompts for the customer to obtain additional information. Tile 1502, for example, could lead to another window that provides an itemized billing statement (e.g., listing standard subscription charges and/or additionally requested features such as pay-per-view content, content on demand, video games, and/or the like). Tile 1504 could lead to another window that provides a mailing address for bill payment, whereas tile 1508 could lead to a listing of currently-subscribed services (e.g., a listing of available channels, or other features).

In various further embodiments, an option to "pay now" could be additionally provided. By clicking tile 1506, for example, the viewer could be presented with a window or other imagery 110B that allows for entry of bill payment information (e.g., a credit card number) via remote control 112 (FIG. 1) or the like. Such information may be entered, for example, using a keypad on remote control 112 (FIG. 1), a "virtual keypad" presented in imagery 110B that interacts with cursor 314 (FIG. 2), and/or the like. Payment information entered could be provided to a remote service center via network interface 610 (FIG. 6) or the like. Similarly, various embodiments may provide a tile 1510 or other feature that allows the viewer to order additional services (e.g., pay-per-view, on demand or other services; or to change a bundle of ordered services from a DBS, cable or other service provider) using similar techniques. In embodiments where a backchannel is not available or convenient, however, "pay now" or "additional services" functionality could be omitted without affecting the other features provided.

The customer service information presented as part of imagery 110B may be received via receiver interface 608 (FIG. 6) and/or network interface 610 (FIG. 6), or may be partially or entirely collected at receiver 108 (FIG. 1) as services (such as pay-per-view or the like) are requested. Some or all of the information contained in these windows may be extracted from information 645 (FIG. 6). As noted above, information 645 (FIG. 6) may be transmitted from a remote source (e.g., a server associated with a DBS, cable, broadcast or other service provider) via signals 105 (FIG. 1) in some embodiments. Other features could be added, removed and/or modified from the exemplary display shown in FIG. 13 in any manner.

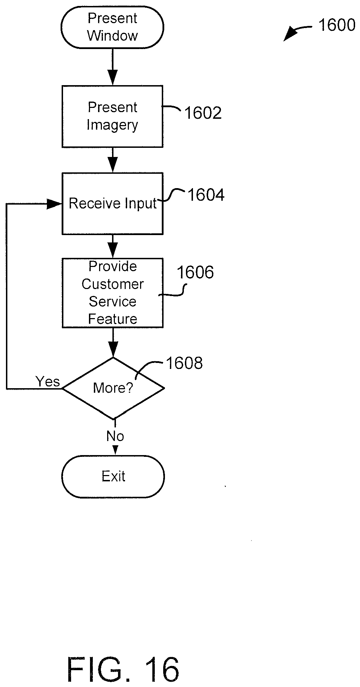

FIG. 16 shows an exemplary process 1600 for graphically processing inputs in a television receiver or the like. In various embodiments, the steps shown in FIG. 16 may be executed using source or object code in any format that may be stored in mass storage, firmware, memory or any other digital storage medium within receiver 108. Such code may be executed by any module or combination of modules operating within receiver 108. In an exemplary embodiment, some or all of the steps shown in process 1600 are executed by control logic 605 (FIG. 2) operating alone or in conjunction with a display processing module 618 and/or the various other features shown in FIG. 6 and described above. The various steps and actions set forth in FIG. 16 may therefore be supplemented or otherwise modified in any manner; the steps may be executed in a different temporal order from that shown in FIG. 16, for example.

With reference now to FIG. 16, an exemplary method 1600 for graphically providing various features in a television receiver 108 suitably includes the broad steps of receiving customer-service information (step 501), displaying imagery 110B that includes one or more tiles 324 (step 1602), receiving viewer inputs from a two-dimensional input device 122 (step 1604), and processing the received inputs as appropriate to provide the various features directed by the viewer (step 1606). Selection and providing of features may be repeated (step 1608) on any regular, irregular or other basis. The steps of method 1600 may take place in any other temporal order other than that shown in FIG. 16, and/or additional or alternate steps may be provided in alternate embodiments. The actual steps shown in FIG. 16 may be combined or omitted in still other embodiments.

Customer service information is received in any manner. As noted above, information 645 may be stored on receiver 108 during initial configuration in some embodiments. Alternately or additionally, information 645 may be received from a remote source via interface 608 and/or interface 610. In various embodiments, information 645 may be obtained from a satellite or cable broadcast, with customer or receiver-specific information extracted from the broadcast message as desired. In still further embodiments, customer service information 645 may be obtained in real-time (or near real-time) in response to a request by receiver 108; such a request may be posited via network interface 610 or the like. Received information 645 may be stored (e.g., on storage medium 609 or any other medium available to receiver 108) as desired.

Step 1602 suitably involves presenting imagery 110 with one or more tiles 324 (e.g., tiles 324A-I in FIGS. 1 and 3). As noted above, each tile appropriately corresponds to one or more desired features provided by receiver 108; examples of such features include channel or program tuning, providing content associated with a network, channel, program, DVR, EPG, placeshifting feature, customer service feature, and/or the like. In various embodiments, a customer service tile 324E is incorporated within any sort of imagery 110B generated by display processing module 618 and presented on display 102.

The viewer interacts with the presented tiles 324 in any manner. As noted above, in various embodiments the viewer provides inputs to receiver 108 using a remote control 112 that incorporates a two-dimensional input device 122 such as a touchpad, motion sensor, directional pad, joystick, trackball and/or the like. Signals 125 from remote control 112 provide receiver 108 with appropriate information to direct the position of cursor 314 on imagery 110B, and to indicate viewer selections of tiles 324 as appropriate.

In response to the viewer selecting customer service tile 324E, receiver 108 suitably provides the feature(s) associated with the selected tile in any manner (step 1608). The particular customer service features, as noted above, can vary significantly from embodiment to embodiment and tile to tile. Some features may include tuning to a selected channel or program that provides customer specific information, providing downloaded content (including customer or receiver specific content, as described above), providing an interface for additional options (e.g., obtaining additional information such as billing details, listings of services and/or the like), processing bill payment, and/or taking any other actions as appropriate.

FIG. 3 shows an exemplary display 300 that would allow a viewer to provide numeric or other symbol-based inputs using a remote control 112 with two-dimensional input capability. Other embodiments may incorporate imagery 110 of different sizes and configurations, and/or may allow for additional or other features in any manner. Practical views of imagery 110 presented on display 102 may vary widely from that shown in FIG. 3 without departing from the concepts discussed herein.

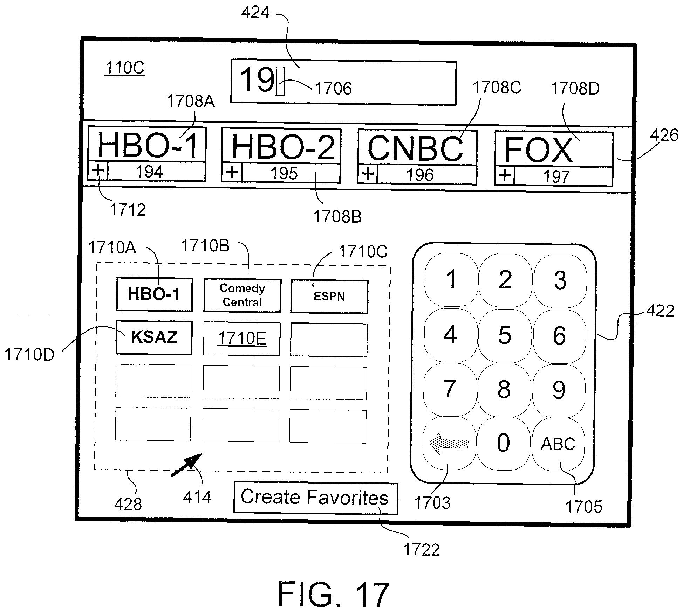

FIG. 17 shows an exemplary presentation of imagery 110C that includes a keypad 422, a symbol display window 424, a channel indicator window 426, and a quick reference area 428 as appropriate. In the embodiment shown, a viewer is able to move cursor 414 with respect to the various interface features to enter symbolic information using keypad 422, to choose an identifier 1708A-B to select a channel, program or other object, and/or to select a "quick reference" feature 1710A-E for rapid retrieval of favorite or frequently-used identifiers. The various features shown in FIG. 17 may be implemented using any sort of symbology, programming and/or the like; in an exemplary embodiment, imagery 110C is generated by display processing module 618 (FIG. 6) in response to instructions from the viewer that are relayed by control logic 605 (FIG. 6).

Keypad 422 is any sort of interface feature capable of support viewer inputs of symbol-based data. In various embodiments, keypad 422 is virtual representation of a numeric, alphanumeric, alphabetical or other keyboard, although other embodiments may support different types of symbols, including foreign language symbols, shapes or other universal access symbols, and/or the like.

Keypad 422 includes any number of key images that each correspond to one or more symbols. In the exemplary embodiment shown in FIG. 17, keypad 422 includes twelve key images corresponding to ten numeric digits (0-9), with two additional key images 1703, 1705 provided for additional features as desired. Key 1705, for example, could be selected to switch to an alphabetical keyboard of any sort. A conventional "QWERTY" or Dvorak-type keyboard could be displayed, for example, or a keypad with fewer key images could be presented, with multiple symbols assigned to each key image. Multiple letters could be assigned to a common key image, for example, and the viewer may be able to enter textual data using multiple "clicks" or other interactions for each key image, in a manner similar to that used for text entry in many conventional mobile phones. Other embodiments may omit alphabetic or alphanumeric entry entirely, or may provide other schemes for receiving alphanumeric data. Key 1703 similarly provides any other desired feature. In various embodiments, key 1703 may be used to provide a backspace, delete or other feature; other embodiments may use key 1703 in a completely different manner, or may omit key 1703 entirely.

The viewer provides symbol-based inputs in any manner. In various embodiments, the viewer guides cursor 414 over one or more key images associated with keypad 422 using the touchpad, motion sensor or other two-dimensional feature 124 (FIG. 1) associated with remote control 112 (FIG. 1). When the cursor 414 is positioned as desired, the viewer may be able to select the symbol associated with the key image by depressing a "select" or "enter" key, as appropriate. The "select" key may be a button or trigger on remote 112 (FIG. 1), for example, or may be any other interface feature as desired.

In various embodiments, symbols are presented in display window 424 as the viewer selects symbols in keypad 422. In the exemplary embodiment illustrated in FIG. 14, for example, the viewer has selected digits "1" and "9", and these are shown in window 424. Some embodiments may provide a text cursor 1706 that indicates a position in window 424 where symbol data will be entered. Text cursor 1706 is shown as a simple horizontal line in FIG. 17, although other embodiments may implement this feature as a static or blinking line, block, rectangle or any other image. Still other embodiments may omit text cursor 1706 altogether.

Information entered on keypad 422 and/or displayed in window 424 may be processed in any manner. In various embodiments, the information may be used to select a channel or program for decoding and presentation, for searching a disk, network or the like for content, and/or for any other purpose. In various embodiments, data entered into window 424 can be processed in a predictive manner. In the embodiment shown in FIG. 17, for example, numeric inputs from keypad 422 are used to select a channel to be tuned and presented by receiver 108 (FIG. 1). As the viewer enters the first few digits of the channel number, imagery 110C may be updated as appropriate to present channels (or other objects) that correspond to the initially-entered data. As the user enters an initial "1", for example, the content of identifier window 426 may be updated to show identifiers 1708A-D that begin with 1 (e.g., "1", "10", "100" or the like). In an implementation that uses three-digit channel numbers (100-999), for example, an initial "1" could be result in window 426 showing identifiers 1708A-D including channel 100 (corresponding to the beginning of the number range), channel 150 (corresponding to the approximate middle of the channel range), or any other channel as desired. As the viewer enters additional symbols from keypad 422, the additional data may be used to further refine the identifiers 1708A-D presented in window 426. After the viewer entered both numerals "1" and "9", for example, window 426 may be updated to show channel identifiers 1708A-D associated with channels in the 190-199 range (e.g., channels 194-197, as shown in the example of FIG. 17). Predictive behaviors may be modified in any manner, or omitted in some embodiments.

Identifier window 426 shows any number of identifiers 1708A-D for objects that are referenced based upon symbol-based data entered by the viewer. As the viewer selects numeric or other symbolic data from keypad 422, for example, the identifiers 1708A-D may be presented and/or updated as desired. Each identifier 1708A-D represents any sort of object sought by the viewer; examples of such objects include programs, channels, networks, contents of programs, and/or the like. In the embodiment illustrated in FIG. 14, identifiers 1708A-D represent particular channels that can be tuned by receiver 108 (FIG. 1) for presentation on display 102 (FIG. 1).

To that end, in various embodiments viewers may be able to immediately select an action associated with any identifier 1708A-D by simply selecting that identifier. The viewer may select any identifier 1708A-D in any manner. In various embodiments, selection may occur by placing cursor 414 over the identifier 1708A-D on imagery 110C, and then selecting the identifier 1708A-D as appropriate. In the exemplary embodiment shown in FIG. 14, selection of an identifier 1708A-D may result in receiver 108 (FIG. 1) tuning the channel associated with the selected identifier for presentation on display 102 (FIG. 1). Other actions could include setting a PVR to record a selected program, selecting a program for placeshifting, and/or taking any other action as desired.

In further embodiments, each identifier 1708A-D includes a remember feature 1712 that allows the receiver 108 (FIG. 1) to remember the channel or other object identified by the identifier 1708A-D for subsequent retrieval. In the exemplary embodiment shown in FIG. 17, remember feature 1712 is shown as a plus sign ("+") on a portion of the identifier 1708A-D, although other embodiments may use any sort of symbology or imagery for the remember feature 1712, and may present the feature 1712 at any location on imagery 110C.

Subsequent retrieval of remembered objects may be provided in any manner. FIG. 17 shows a quick reference area 428 that includes space for any number of quick reference features 1710A-E associated with remembered channel objects 1708A-D. As a user clicks on a remember feature 1712 on any channel identifier 1708A in window 426, for example, a quick reference feature 1710A-E is associated with the relevant television channel and placed in area 428. The viewer is then able to quickly tune to the remembered channel by simply clicking on the featured 1710A-E associated with the channel in area 428. Again, the features are not limited to quick access to television channels; other remembered features may include programs, networks, files and/or any other objects as desired.

Further, various embodiments may allow the viewer to create a "favorites list" from some or all of the objects 1710A-E in quick reference area 428. This list may be available, for example, from an electronic program guide view, or in response to a button or other feature activated on remote control 112 (FIG. 1). This favorites list may be created automatically or default in some embodiments; in other embodiments, the viewer may activate a button, tile or other feature 1722 to create the favorites list. Further, the viewer may be able to create multiple favorites lists in some embodiments by selecting feature 1722 with different sets of objects 1710A-E in area 428. That is, the viewer could create a first list by placing a first set of objects 1710 in area 428 and then selecting feature 1722; that viewer (or another viewer of the same receiver 108 (FIG. 1)) could create another favorites list by placing a different set of objects 1710 in area 428 and then selecting feature 1722 again. The lists could be named or otherwise identified as appropriate, and used in conjunction with any features (including the EPG) provided by receiver 108 (FIG. 1).

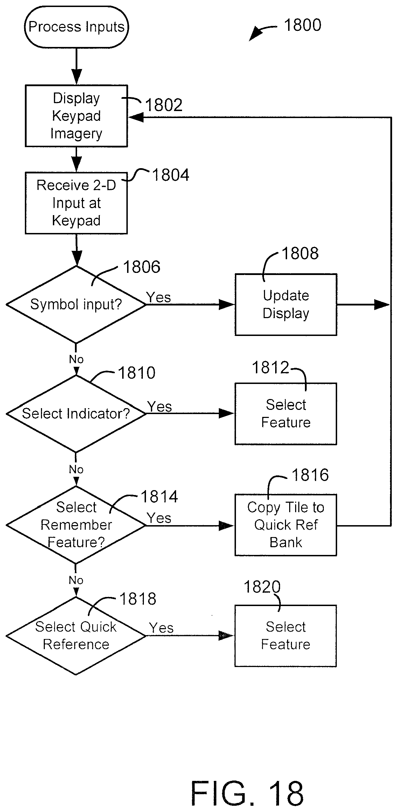

FIG. 18 shows an exemplary process 1800 for graphically processing symbol-type inputs in a television receiver or the like. In various embodiments, the steps shown in FIG. 18 may be executed using source or object code in any format that may be stored in mass storage, firmware, memory or any other digital storage medium within receiver 108 (FIG. 1). Such code may be executed by any module or combination of modules operating within receiver 108 (FIG. 1). In an exemplary embodiment, some or all of the steps shown in process 1800 are executed by control logic 605 (FIG. 6) operating alone or in conjunction with a display processing module 618 (FIG. 6) and/or the various other features shown in FIG. 6 and described above. While FIG. 18 specifically shows a technique for tuning channels on a television receiver, the concepts set forth in the figure and accompanying text could be used to perform other tasks, such as recording programs, selecting programs, searching and/or taking other actions as appropriate. The various steps and actions set forth in FIG. 18 may therefore be supplemented or otherwise modified in any manner.

With reference now to FIG. 18, an exemplary method 1800 for processing numeric or other symbol-type data suitably includes the broad steps of displaying a keypad 126 (step 1802), receiving inputs from a two-dimensional input device 124 (step 1804), and then identifying (steps 1806, 1810, 1814, 1818) and processing (steps 1808, 1812, 1816, 1820) the received inputs as appropriate to execute the various tasks directed by the viewer. The steps of method 1800 may take place in any other temporal order other than that shown in FIG. 18, and/or additional or alternate steps may be provided in alternate embodiments. The actual steps shown in FIG. 18 may be combined or omitted in still other embodiments.

Keypad 422 may be displayed in any manner (step 1802). In various embodiments, keypad 422 is any sort of numeric, alphanumeric or other keypad that generated and displayed by display processor 618 (FIG. 2), although other embodiments may generate the keypad in any other manner. As noted above, keypad 422 suitably includes any number of key images each corresponding to one or more letters, numbers and/or other symbols as desired.

Inputs may be received with respect to keypad 422 in any manner (step 1804). In various embodiments, receiver 108 receives two-dimensional inputs from remote control 112 relating to a position of a cursor 414, as described above. The viewer is therefore able to position the cursor 414 over one or more key images and then indicate a selection of the key image in any manner.

Symbol input can be identified and processed in any manner (steps 1806, 1808). In various embodiments, symbol input is recognized from a selected cursor image corresponding to one or more key images in keypad 422. These inputs can be processed in any manner; symbols entered may be displayed (e.g., in window 424 or the like), for example, and/or the symbols may be used to update other portions of imagery 110. Entered numerals, for example, could be used to update the channel indicators 408A-D displayed in window 426, or other features could be provided as appropriate to the particular embodiment.

In various further embodiments, other user interface features may also be provided. In embodiments such as the one shown in FIG. 17, for example, viewer selections of an indicator 1708A-D can be identified (step 1810) from two-dimensional inputs 125 (FIG. 1) received from remote 112 (FIG. 1), as described above. These selections can be processed (step 1812) to tune a particular channel or program, or to take some other action as desired.

Some embodiments may provide remember features 1712 associated with indicators 1708A-D, as described above. In such embodiments, viewer selections of the remember features 1712 can be identified (step 1814) and processed as desired (step 1816). In various embodiments, selection of the remember feature 1712 can result in a tile or other indicator 1710 being placed in area 428 to allow the feature to be accessed at a later time via a "quick click" on the indicator 1710 as appropriate. Upon selection of a quick reference indicator 1710 (step 1818), any action associated with the referenced feature may be executed (step 1820) as desired. A channel may be quickly tuned, for example, or any other action may be taken as desired. As noted above, the objects 1710 present in area 428 may be further used to create a quick reference or favorites list that can be accessed from other views (e.g., EPG views) provided by receiver 108 (FIG. 1), as desired.

As described above, in at least one embodiment, the receiver 108 (see FIG. 1) may be configured to change the size of various elements presented on screen, such as the size of panels within an electronic programming guide. The resizing operations may be performed responsive to user input provided via the remote control 112. When the viewer requests a change in the size of an EPG window 122, for example, display processor 618 may be operable to draw (or redraw) the guide at the appropriate size relative to the other screen content, and/or to provide EPG window 122 in the same imagery 110 as the decoded program signals 134. As receiver 108 receives user inputs 125 from remote control 112, control logic 605 may direct display processor 618 to adjust window 522 or any other feature of imagery 110 as directed by the viewer. Display processor 618 therefore directs the presentation of program guide window 122 in conjunction with one or more navigation features, and adjusts the program guide window 122 in response to inputs received from the viewer.

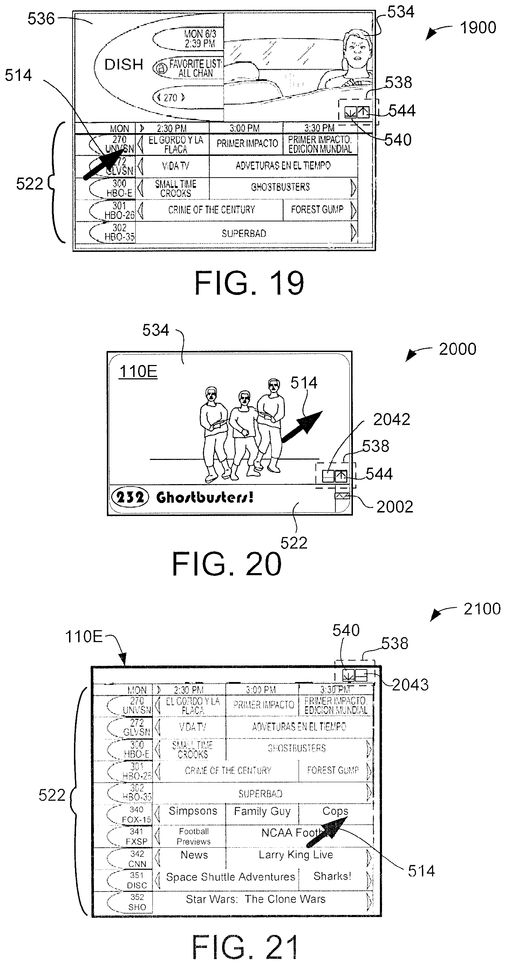

FIGS. 19-21 show an exemplary progression of displays 1900, 2000, 2100 that would allow a viewer to change the size of program guide window 522 between a standard view 1900 (FIG. 19), a smaller "browse" view 2000 (FIG. 20), and a larger full-screen view 2100 (FIG. 21). Other embodiments may incorporate views of different sizes and configurations, and/or may allow for manual re-sizing of display window 522 in any manner (e.g., by dragging a window size icon or other interface feature). Practical views of any EPG window 522 or other imagery 110D presented on display 102 (FIG. 1) may vary widely from those shown in FIGS. 19-21 without departing from the concepts discussed herein.

Beginning with FIG. 19, an exemplary display 1900 suitably includes imagery 110D that includes program guide window 522 presented in conjunction with program imagery 534 and/or informational imagery 536 as appropriate. Program guide window 522 provides any appropriate information about programs available to the viewer. In the exemplary embodiments shown herein, program guide window 522 provides at least a channel number and the name of the program being shown on that channel. Various embodiments may alternately or additional provide network or channel identification (e.g., "Fox 15", "KSAZ", "HBO" and/or the like), program times, content descriptions, parental control ratings, and/or any other information as desired. Such information is conventionally provided to receiver 108 (FIG. 1) using any sort of electronic programming guide techniques; the information may be readily retrieved from the guide and presented on display 102 (FIG. 1) in any manner.

FIG. 19 shows a relatively conventional view of electronic program guide 522 that allows for scrolling or browsing of programs, channels, program times and other information. Viewers may be able to select certain programs or channels in various embodiments to set reminders or timers, to instruct a digital video recorder to record at a certain time, and/or to take other actions as appropriate. In some embodiments, the viewer interacts with guide 522 using a touchpad or other two-dimensional input device 124 (FIG. 1) associated with remote control 112 (FIG. 1). In such embodiments, movements with respect to the input device 124 (FIG. 1) may be mapped or otherwise processed to direct movement of cursor 514. Items may be selected using a "select" button, trigger or other feature on remote control 112 (FIG. 1) as appropriate.

As mentioned above, the viewer may be able to select different views of the electronic program guide 522 using resize indictors 538. In the exemplary view 1900 shown in FIG. 19, the view 1900 may be changed to a smaller view (e.g., view 2000 of FIG. 20) by directing cursor 514 to icon 540 and then selecting icon 540. View 1900 may be similarly changed to a larger view (e.g., view 2100 of FIG. 21) by directing cursor 514 to icon 544, and then selecting icon 540 as appropriate.

FIG. 20 shows a convenient smaller view of program guide window 522 that allows for greater visibility of program content 534. Although the embodiment shown in FIG. 20 only shows a single line of program guide information, other embodiments may display multiple lines as desired across any portion of the display. The other lines shown may correspond, for example, to programs showing on other channels (e.g., channels that adjoin the currently viewed channel). In such embodiments, the currently-tuned channel may be highlighted or otherwise emphasized in any manner to allow for ready identification of the current and most relevant information.

The exemplary embodiment shown in FIG. 20 includes a scroll indicator 2002 that indicates the relative position of the information presented in window 522 with respect to the available guide data. Scroll indicator 2002 may move upwardly or downwardly (as presented in FIGS. 19-21) as the viewer scrolls through the information presented in program guide window 522 to further increase the awareness of the viewer. In various embodiments, the viewer is able to drag scroll indicator 2002 using cursor 514 and remote control 112 (FIG. 1), as appropriate. Scroll indicator 2002 may be differently shaped, positioned or otherwise implemented in any manner, or may be omitted entirely in some embodiments.

Like view 1900, the exemplary browsing view 2000 shown in FIG. 20 includes resize indicator 538 that allows the viewer to change the EPG view 522 to the standard view 1900 or the full-screen view 2100. The exemplary embodiment shown in FIG. 20 shows two icons 2042 and 544 for directly selecting the standard and full-screen views, respectively, but alternate embodiments may simply provide a single icon 538 to increase the size of window 522. In some of such embodiments, the viewer may click or otherwise activate the enlarge button multiple times to select increasingly larger views of EPG window 522 as appropriate.

FIG. 21 shows an exemplary full-screen view 2100 of program guide 522. In this view 2100, decoded programming 534 is not displayed so that greater amounts of guide information may be presented. Like views 1900 and 2000 above, resize indicator 538 is provided to allow re-sizing of the view 2100 as desired. In the exemplary view 2100 of FIG. 21, resize indicator 538 is shown to provide icons 540 and 2043 corresponding to the browsing view 2000 and standard views 1900 described above, respectively. In other embodiments, a single "size reduction" icon or other feature may be provided, and this feature may be actuated multiple times in some embodiments to allow for further size adjustments.

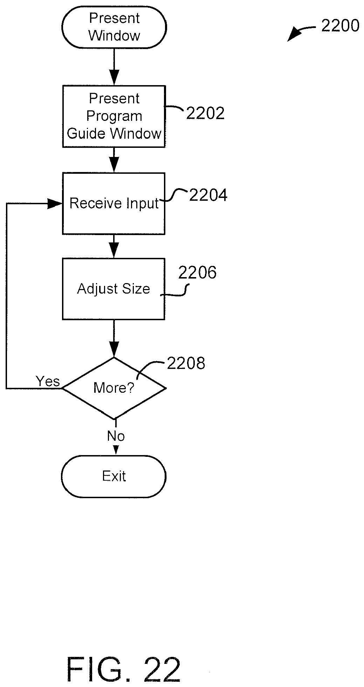

FIG. 22 shows an exemplary process 2200 for changing the size of an EPG window or other feature presented on a display 102 (FIG. 1). In various embodiments, the steps shown in FIG. 22 may be executed using source or object code in any format that may be stored in mass storage, firmware, memory or any other digital storage medium within receiver 108. Such code may be executed by any module or combination of modules operating within receiver 108. In an exemplary embodiment, some or all of the steps shown in process 2200 are executed by a display processing module 618 (FIG. 6) operating alone or in conjunction with control logic 605 and/or the various other features shown in FIG. 6 and described above.

With reference now to FIG. 22, an exemplary process 2200 suitably includes the broad steps of receiving and presenting the electronic program guide 522 (step 2202) along with the resize indicator, receiving two-dimensional or other inputs related to the EPG display (steps 2204), processing the inputs (step 2206) to adjust the size of the guide 522, and then drawing or re-drawing window 522 as appropriate. Various other steps or features may be present as well in any number of alternate embodiments.

Process 2200 suitably begins by displaying the program guide 522 in any initial format (step 2202). Inputs 125 (FIG. 1) that are relevant to EPG viewing may initially include any sort of indication that the viewer would like to view an EPG window 522; such an indication may be responsive to an "EPG" button on remote control 112 (FIG. 1), or to a selection of a menu feature generated on display 102, and/or the like. In various embodiments, program guide 522 may be initially displayed in any default view (e.g., "standard view" 1900 shown in FIG. 19); the default view may be user-configurable in some implementations.

After program guide window 522 is displayed, subsequent inputs 125 (FIG. 1) may be received from remote control 112 (FIG. 1) that allow for moving, scrolling, item selection and/or other manipulation of the EPG 522, as described above. Received inputs 125 (FIG. 1) may therefore be processed in any manner. Control logic 605 (FIG. 6), for example, may process single and/or multi-dimensional inputs from input device 124 (FIG. 1) to extract and determine the viewer's intent for subsequent processing.

Upon receipt of subsequent inputs 125 (FIG. 1) from the viewer (step 2204), the receiver 108 processes any resizing inputs as appropriate. Such inputs 125 (FIG. 1) may include, for example, two dimensional inputs received from the two-dimensional input device 124 (FIG. 1) associated with remote control 112 (FIG. 1) to allow for directional movement, resizing, and/or the like. Directional movements may allow the viewer to direct cursor 514 toward resize indicator 538, for example, and thereby graphically re-size the EPG presentation as desired. In various embodiments, the received inputs are provided from remote control 112 (FIG. 1) to receiver via RF interface 632 (FIG. 6) and antenna 634 (FIG. 6), although other techniques may be used in other embodiments.

When the proper imagery 110D is determined, program guide 522 may be drawn or re-drawn on display 102 (FIG. 1) as appropriate (step 2206); re-sizing may be repeated as desired by simply providing additional viewer inputs (step 2208).

In various embodiments, program guide 522 is presented in conjunction with primary imagery 110D, as described above. Program guide 522 and any associated navigational features may be redrawn in response to inputs subsequently received. In practice, then, after a program guide 522 and any associated navigation features are presented on display 102 (FIG. 1) in a first iteration of step 2208, subsequently received two-dimensional inputs may be further received and processed (steps 2202-2206) before re-drawing program guide 522 according to the newly-received inputs in a subsequent occurrence of step 2208. The general logical and data flow of a practical embodiment may be modified from that shown in FIG. 22 in any manner; additional or alternate steps may be provided, and/or one or more steps may be omitted as appropriate.

Accordingly, new systems and techniques for graphically changing the size of a program guide window or other feature are described. Although the systems and features are generally described herein as applying to changing the size of a program guide window, equivalent embodiments could apply the same concepts to resizing of other windows, lists, parameters and/or the like, including selection of programs stored on a DVR, selection of programs from a network host or other source, selection of programs for placeshifting, and/or any other features as desired.

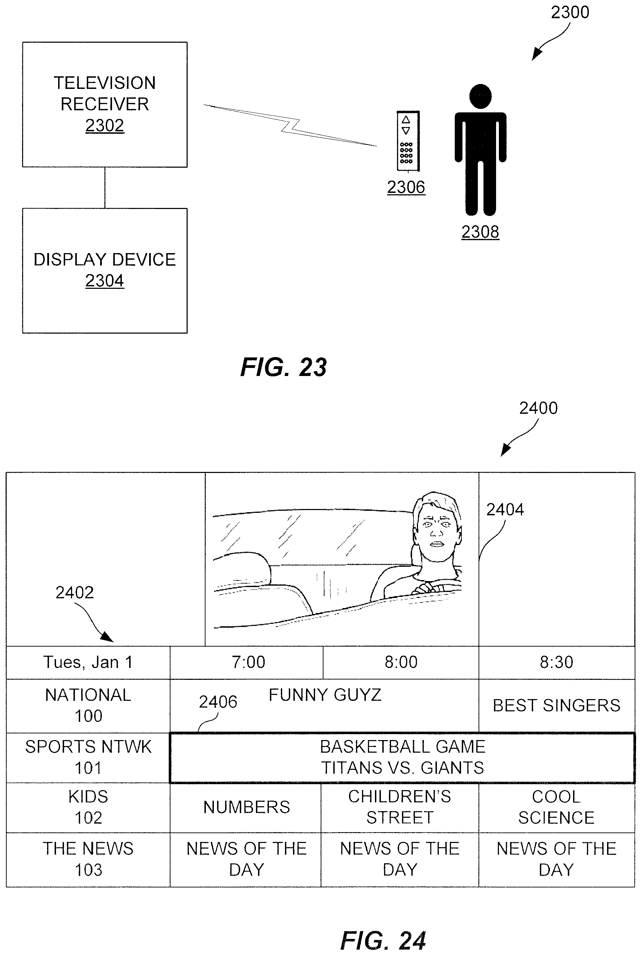

FIG. 23 illustrates an embodiment of an entertainment system 2300. The entertainment system 2300 presents content to a user 2308. In at least one embodiment, the content presented to the user 2308 includes an audio/video stream, such as a television program, movie or other recorded content and the like. The entertainment system 2300 includes a television receiver 2302, a display device 2304 and a remote control 2306. Each of these components is discussed in greater detail below. The entertainment system 2300 may include other devices, components or elements not illustrated for the sake of brevity.

The television receiver 2302 is operable to receive content from one or more content sources (not shown in FIG. 1) and output the received content for presentation by the display device 2304. More particularly, the television receiver 2302 is operable to receive, demodulate and output a television signal from a programming source, such as a satellite, cable, internet, terrestrial or other type of television transmission signal. The television receiver 2302 may receive an audio/video stream in any format (e.g., analog or digital format). Likewise, the television receiver 2302 may output the audio/video stream for presentation by the display device 2304 in any type of format. In at least one embodiment, the television receiver 2302 is a set-top box (e.g., a satellite or cable television receiver or converter box) or other similar device that processes and provides one or more audio and/or video output streams to the display device 2304 for presentation to the user 2308. The television receiver 2302 may be further configured to output for display menus and other information that allow a user 2308 to control the selection and output of content by the television receiver 2302. For example, as described in further detail below, the television receiver 2302 may output electronic program guide menus for review by the user 2308. In at least one embodiment, the television receiver 2302 includes an integrated digital video recorder (DVR) operable to record video signals, corresponding with particular television programs, for subsequent viewing by the user 2308.

The display device 2304 may comprise any type of device capable of receiving and outputting a video signal in any format. Exemplary embodiments of the display device 2304 include a television, a computer monitor, a liquid crystal display (LCD) screen, a touch screen and a projector. The display device 2304 and the television receiver 2302 may be communicatively coupled through any type of wired or wireless interface. For example, the display device 2304 may be communicatively coupled to the television receiver 2302 through a coaxial cable, component or composite video cables, an HDMI cable, a VGA or SVGA cable, a Bluetooth or WiFi wireless connection or the like. In at least one embodiment, the television receiver 2302 and the display device 2304 may be integrated as a device combining the functionality of a display device and a television receiver.

The remote control 2306 may comprise any system or apparatus configured to remotely control the output of content by the television receiver 2302. The remote control 2306 may minimally include a transmitter, an input device (e.g., a keypad) and a processor for controlling the operation of the remote control 2306. The remote control 2306 may communicate commands to the television receiver 2302 requesting to playback content, temporally move through content (e.g., fast-forward or reverse), adjust the volume, access electronic program guides, set or edit recording timers and the like. In some embodiments, the remote control 2306 may additionally be configured to remotely control the display device 2304. The remote control 2306 may communicate with the television receiver 2302 and/or the display device 2304 through any type of wireless communication medium, such as infrared (IR) signals or radio-frequency (RF) signals.

The remote control 2306 may include any type of man-machine interface for receiving input from the user 2308. For example, the remote control 2306 may include buttons for receiving input from the user 2308. In at least one embodiment, the remote control 2306 includes a touch pad for receiving input from the user 2308. The remote control 2306 may further include a trigger, utilized in association with the touch pad, for allowing the user 2308 to input information associated with the menus displayed on-screen.

To locate television programs available for viewing, the user 2308 utilizes the remote control 2306 to request access to an electronic program guide of the television receiver 2302. FIG. 24 illustrates a screenshot of an embodiment of a display menu 2400 outputted by the television receiver 2302 of FIG. 1. The display menu 2400 includes an electronic program guide 2402 and a video output 2404.

The electronic program guide 2402 graphically displays television programs for multiple channels and time slots in a grid format. In the illustrated embodiment, time slots are arranged along a horizontal axis of the electronic program guide 2402 and channels are arranged along a vertical axis of the electronic program guide 2402. The user 2308 may scroll along both the horizontal and vertical axes of the electronic program guide to locate programs of interest for recording. The user 2308 may then provide input to the television receiver 2302, via the remote control 2306, requesting to view and/or record particular programs listed in the electronic program guide 2402. It is to be appreciated that other formats of electronic program guides 2402 may be utilized in accordance with the teachings described herein. For example, time slots may be arranged along the vertical axis and channels may be arranged along the horizontal axis of an electronic program guide.

In the illustrated embodiment of FIG. 24, the electronic program guide 2402 is arranged in the bottom region of the display menu 2400. The display menu 2400 may optionally include the video output 2404. The video output 2404 displays presently viewed video content, such as a live television program or recorded content. However, the video output 2404 may be omitted and the electronic program guide 2402 may be arranged to occupy a larger region of the display menu 2400. For example, the electronic program guide 2402 may be arranged to cover the full region of the display menu 2400 or any selected portion of the display menu 2400.

As the user 2308 scrolls through the electronic program guide 2402, particular cells of the grid, such as a cell corresponding with a particular channel or a cell corresponding with a particular television program, may be selected by the user 2308. For example, the user 2308 may utilize arrow keys and an enter button of the remote control 2306 to highlight and select the cell 2406 of the grid corresponding with the Basketball Game television program. Responsive to the user selection, the television receiver 2302 identifies supplemental content for presentation in association with the electronic program guide 2402.

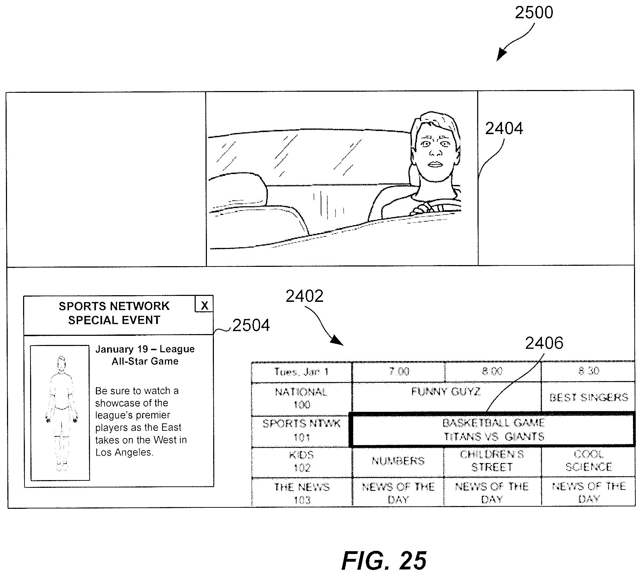

In at least one embodiment, the television receiver 2302 shrinks the size of the electronic program guide 2402 to accommodate the display of the supplemental content. FIG. 25 illustrates a screenshot of another embodiment of a display menu 2500 outputted by the television receiver 2302 of FIG. 1. The display menu 2500 is similar to the display menu 2400 of FIG. 24. The display menu 2500 includes the video output 2404, the electronic program guide 2402 and the supplemental content 2504.

The electronic program guide 2402 is smaller in FIG. 25 than in FIG. 24. In the illustrated embodiment, the electronic program guide 2402 has been moved over to the right of the display menu 2500 to accommodate the display of the supplemental content 2504. The user 2308 views the supplemental content 2504 illustrated in the display menu 2500 and may then request to exit the supplemental content 2504, returning to the display menu 2400 of FIG. 24. In other words, the television receiver 2302 returns the electronic program guide 2402 to its original size as illustrated in FIG. 24.

In some embodiments, the supplemental content 2504 displayed by the television receiver 2302 may be identified based on particular regions of the electronic program guide 2402 selected by the user 2308. For example, the supplemental content 2504 may be identified based on characteristics of the television channel and/or television program selected in the electronic program guide 2402 by the user 2308. As illustrated in FIG. 25, the user 2308 selects the cell 2406 related to the Basketball Game television program. The supplemental content 2504 displayed in display menu 2500 provides information regarding an upcoming event for the selected channel. More particularly, the supplemental content 2504 provides information related to an upcoming basketball all-star game. Thus, the supplemental content 2504 is identified by the television receiver 2302 based on both characteristics of the channel and the television program.

In other embodiments, the supplemental content 2504 may be identified by the television receiver 2304 based on either of the television program or the particular channel selected. For example, the supplemental content 2504 may be information regarding a football game to be broadcast on the Sports Network. Likewise, the supplemental content 2504 may advertise basketball tickets for one of the teams playing in the Basketball Game, and thus, may have nothing to do with the selected channel.

In at least one embodiment, the supplemental content 2504 may allow the user 2308 to set a recording timer for an advertised television event. For example, as illustrated in FIG. 25, the supplemental content 2504 comprises an advertisement for the upcoming Basketball All-Star Game on the Sports Network channel. Similarly, the supplemental content 2504 may include an advertisement for an upcoming hockey game on a Sports Network-2 channel. Thus, the supplemental content 2504 may include means for a user to set a recording timer for the event.

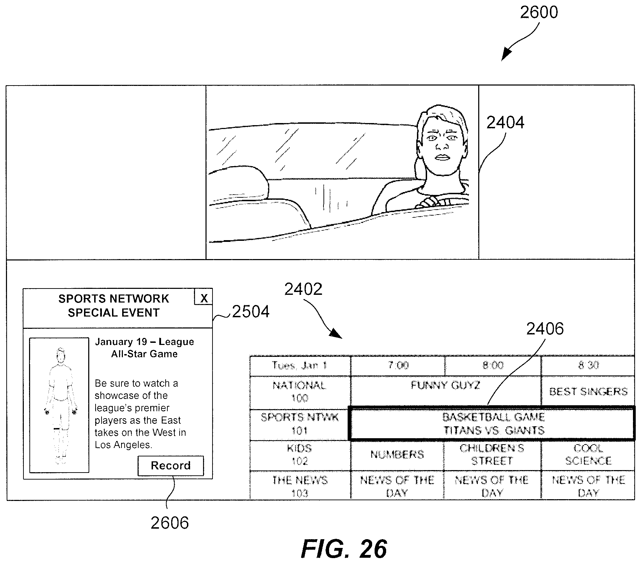

FIG. 26 illustrates a screenshot of an embodiment of a display menu 2600 outputted by the television receiver 2302 of FIG. 1. The display menu 2600 of FIG. 26 is similar to the display menu 2500 of FIG. 25, and additionally includes a control element 2606 (represented as a record button) which is associated with recording of an upcoming event. The control element 2606 is displayed with the supplemental content 2504. The user 2308 may provide user input, via the control element 2606, requesting to record the upcoming event. The television receiver 2302 responsively sets a recording timer for the upcoming event responsive to the user input and records the upcoming event at the time designated by the recording timer.

In at least one embodiment, the user 2308 may select the Sports Network 101 cell to view supplemental content 2504 related to the network. Thus, a general advertisement or other information related to the television network may be presented in the supplemental content 2504 panel. In some embodiments, the supplemental content 2504 presented for a particular channel may be identified based partially on characteristics of the particular program selected as well as the particular channel. For example, if the user 2308 selects a movie or television program including a particular actor, then the supplemental content 2504 displayed to the user 2308 may comprise an advertisement for another movie or television show including the same actor.

In at least one embodiment, the supplemental content 2504 is identified by the television receiver 2302 based on analyzation of the data associated with a particular cell of the electronic program guide 2402 selected by the user 2308. For example, the supplemental content 2504 may present advertisements for upcoming events that include the same actor(s) as a television program associated with the highlighted cell. Other characteristics may also be utilized, such as topical characteristics of television shows, e.g., food, home-improvement and cars. For example, if the user 2308 selects a cell of the electronic program guide 2402 related to a cooking show, then the supplemental content 2504 may display advertisements or information related to upcoming cooking shows. In at least one embodiment, the identification process is utilized to provide advertisements or previews for programs on other unrelated networks. For example, if the user selects a program on network A that includes actor A, then the supplemental content 2504 may present an advertisement for an upcoming movie including actor A on unrelated network B.

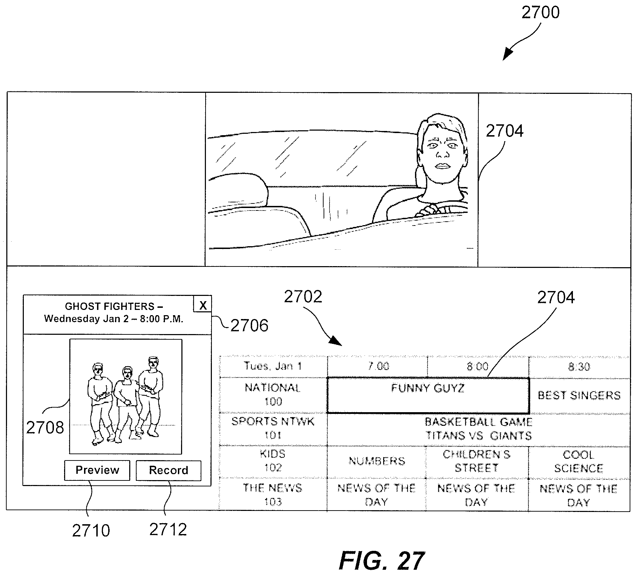

In at least one embodiment, the supplemental content 2504 may include a video preview regarding an upcoming event. FIG. 27 illustrates an embodiment of a screenshot of a display menu 2700 outputted by the television receiver 2302 of FIG. 27. The display menu 2700 is similar to the display menus 2500 and 2600 described above, and includes a video output 2404, an electronic program guide 2702 and supplemental content 2706.

In the illustrated display menu 2700, the user 2308 selects cell 2704 of the electronic program guide 2702. Responsively, the television receiver 2302 displays the supplemental content 2706 in the display menu 2700. In the illustrated embodiment, the supplemental content 2706 includes an advertisement for an upcoming movie on the same channel. Additionally, the supplemental content 2706 includes a video preview 2708 for the upcoming event. To initiate playback of the video preview 2708, the user 2308 may actuate the preview button 2710. The user 2308 may also set a recording timer for the event by actuating the record button 2712.

The video preview 2708 may be stored locally on the television receiver 2302 prior to presentation of the supplemental content 2706. For example, a video provider may transmit video preview data to a television receiver 2302 in association with electronic program guide data. The television receiver 2302 may store the video previews for on-demand viewing by a user 2308. In other embodiments, the television receiver 2302 may query an external server for the video preview data responsive to actuation of the preview button 2710 by the user 2308.

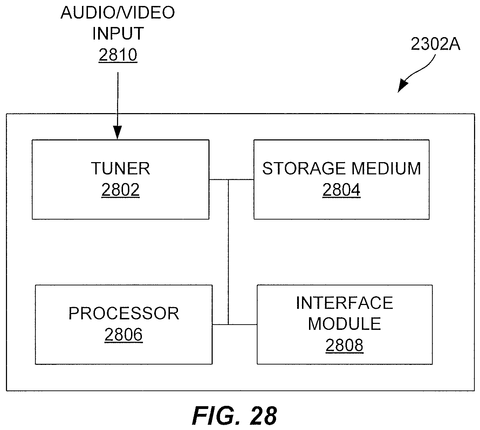

FIG. 28 illustrates an embodiment of a television receiver of FIG. 23. FIG. 28 will be discussed in reference to the entertainment system 2300 illustrated in FIG. 23. The television receiver 2302A includes a tuner 2802, a storage medium 2804, a processor 2806 and an interface module 2808. Each of these components will be discussed in greater detail below. The television receiver 2302A may include other elements, components or devices which are not illustrated for the sake of brevity.

The tuner 2802 is operable to receive an audio/video input 2810 from a content source. More particularly, the tuner 2802 receives and tunes a television signal including television programming. The tuner 2802 may receive an over-the-air broadcast, a direct broadcast satellite signal, a cable television signal or an internet protocol television (IPTV) signal and tune the audio/video input 2810 to extract the selected television programming. In at least one embodiment, the television receiver2302A may include multiple tuners 2802, utilized by the user 2308, to view and/or record multiple television programs simultaneously.

The storage medium 2804 is operable to store electronic program guide data and other system information utilized by the television receiver 2302A. The storage medium 2804 may comprise any type of non-volatile memory appropriate for storing video signals recorded by the television receiver 2302A. Exemplary storage mediums 2804 include semi-conductor memory, hard drives (e.g., magnetic memory) and flash memory. In some embodiments, the television receiver 2302A may optionally include DVR functionality to record and persistently store video signals received by the television receiver 2302A. For example, the storage medium 2804 may include a hard drive for storing video signals. In at least one embodiment, the storage medium 2804 may be utilized to store video previews, advertising information and the like for on-demand viewing by the user 2308. In some embodiments, a hard drive or other storage medium may be internally located within the television receiver 2302A. In other embodiments, a hard drive or other storage medium may be located external with respect to the television receiver 2302A. The television receiver 2302A may also utilize a combination of internal and external storage mediums 2804 for storage of video signals and other data.

The processor 2806 is operable to control the operation of the television receiver 2302A. The processor 2806 may be a single processing device or a plurality of processing devices that cooperatively operate to control the operation of the television receiver 2302A. The processor 2806 may include various components or modules for processing and outputting audio/video content. Exemplary components or modules for processing audio/video content include a demodulator, a decoder, a decompressor, a conditional access module and a transcoder module.

The processor 2806 is operable to receive the audio/video input stream 2810, received via the tuner 2802, and generate an audio/video output stream based on the audio/video input 2810 for display by an associated display device 2304. An audio/video output stream is outputted to the display device 2304 (see FIG. 1) for presentation to the user 2308. The processor 2806 may incorporate circuitry to output the audio/video streams in any format recognizable by the display device 2304, including composite video, component video, Digital Visual Interface (DVI) and High-Definition Multimedia Interface (HDMI). The processor 2806 may also incorporate circuitry to support multiple types of these or other audio/video formats. In at least one embodiment, as described above, the television receiver 2302A may be integrated with the display device 2304, and the processor 2806 may be operable to control the presentation of the audio/video output stream. In at least one embodiment, the processor 2806 is operable to coordinate storage of the audio/video input 2810 onto the storage medium 2804. The processor 2806 is also operable to retrieve stored video content to generate an audio/video output stream for display by the display device 2304. To coordinate the storage of the audio/video input 2810, the processor 2806 is operable to receive user input requesting to record one or more television programs. Responsively, the processor 2806 sets recording timers for the indicated television programs.

The interface module 2808 is operable to wirelessly receive data from the remote control 2306. The interface module 2808 may communicate with the remote control 2306 utilizing any type of IR or RF communication link. In at least one embodiment, the interface module 2808 receives a key code from the remote control 2306, and responsively provides the key code to the processor 2806. In some embodiments, the interface module 2808 may receive positional information from a scrolling device of the remote control 2306, e.g., a touch pad, scroll wheel or the like. Some of the data received by the interface module 2808 may request to view electronic program guide data and the like.

The processor 2806 is operable to receive user input requesting to display an electronic program guide. Responsive to the user input, the processor 2806 outputs a display menu, for display by the display device 2304, that includes the electronic program guide data. More particularly, the program guide data is displayed in first and second portions of the display menu. FIG. 24 illustrates one exemplary embodiment of the display menu 2400 initially outputted by the processor 2806.

After outputting a program guide for display to the user 2308, the processor 2806 receives user input selecting a region of the program guide. In other words, the user 2308 may highlight a cell of the program guide corresponding with a particular channel or program listed in the program guide. The processor 2806 processes the user input to identify supplemental content for display by the display device 2304. In at least one embodiment, the supplemental content is identified by the processor 2806 based on the region of the program guide selected by the user, e.g., the particular channel or program selected by the user. The processor 2806 then outputs simultaneously, for display in the display menu, supplemental content in the first portion of the display menu and the program guide in the second portion of the display menu. If the user 2308 provides input requesting to exit the supplemental content, then the processor 2806 responsively outputs the program guide in the first and second portions of the display menu, returning the program guide to its original size.

Those of ordinary skill in the art will appreciate that the various functional elements 2802 through 2808 shown as operable within the television receiver 2302A may be combined into fewer discrete elements or may be broken up into a larger number of discrete functional elements as a matter of design choice. Thus, the particular functional decomposition suggested by FIG. 28 is intended merely as exemplary of one possible functional decomposition of elements within the television receiver 2302A.

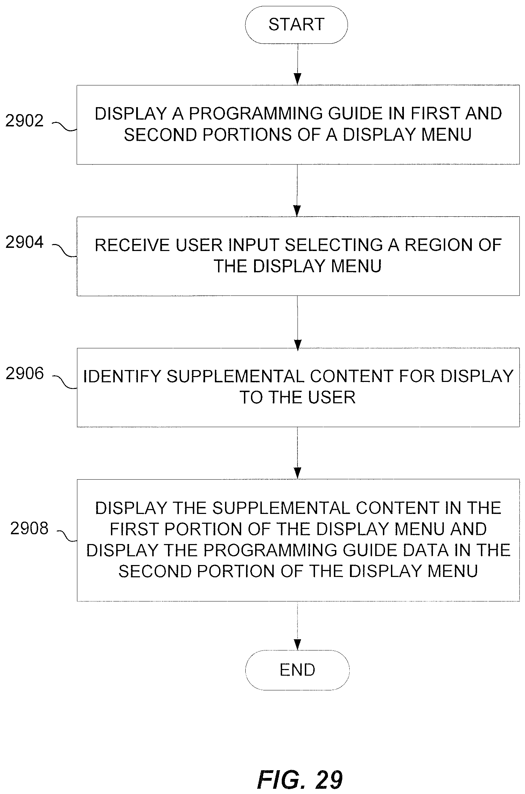

FIG. 29 illustrates an embodiment of a process for displaying television guide information. More particularly, FIG. 29 illustrates an embodiment of a process for displaying supplemental content associated with electronic program guide data. The process of FIG. 29 may include other operations not illustrated for the sake of brevity.

The process includes displaying a program guide in first and second portions of the display menu (operation 2902). In at least one embodiment, the first and second portions of the display menu comprise a single panel of a display menu. The panel may be positioned in any region of the display menu and may be any appropriate size depending on desired design criteria. The program guide may be displayed in association with other data in the display menu, such as a video output of presently viewed programming.

The process further includes receiving user input selecting a region of the program guide (operation 2904). For example, a user may select a particular cell of the program guide, selecting a program or channel of the program guide. The process further includes identifying supplemental content for display to the user (operation 2906). In at least one embodiment, the supplemental content is identified based on characteristics of the region of the program guide selected by the user.

The process further includes displaying supplemental content in the first portion of the display menu responsive to the user input and simultaneously displaying the program guide in the second portion of the display menu (operation 2908). Thus, the program guide data is resized to accommodate the display of the supplemental content. In at least one embodiment, the program guide data is presented in a first panel of the display menu and the program guide data is presented in a second display menu. Thus, the user is presented with supplemental information, e.g., advertisements for upcoming programming, on-demand simultaneously with the program guide data.

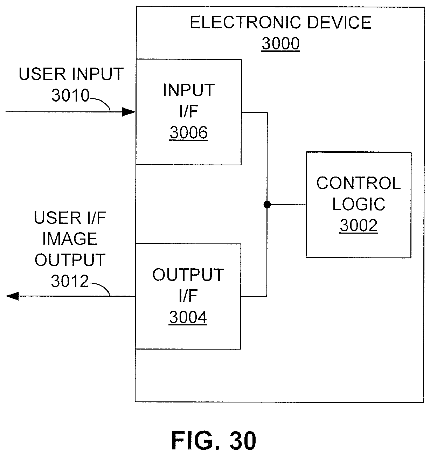

FIG. 30 is a block diagram of an electronic device 3000 according to an embodiment of the invention in which a graphical user interface is provided to allow the user to control the electronic device 3000. In some embodiments, the electronic device 3000 may be an audio/video entertainment device, such as a set-top box adapted to receive radio and/or television signals by way of satellite, cable, or terrestrial ("over-the-air") transmission. Other such audio/video devices may include, but are not limited to, televisions or video monitors, audio/video receivers, digital video recorders (DVRs), video cassette recorders (VCRs), digital video disc (DVD) players, and gaming systems. Further, other electronic devices aside from audio/video devices, such as computers, personal digital assistants (PDAs), communication devices, and the like incorporating a graphical user interface may serve as the electronic device 3000 of FIG. 30.

The electronic device 3000 includes control logic 3002, an output interface 3004, and an input interface 3006. The control logic 3002 may be any circuitry or system configured to perform the various operations discussed below. For example, the control logic 3002 may be one or more processors, such as a microprocessor, microcontroller, or digital signal processor (DSP), configured to execute instructions directing the processor to perform the functions discussed in detail below. In another implementation, the control logic 3002 may be hardware-based logic, or may include a combination of hardware, firmware, and/or software elements.

Generally, the output interface 3004 of the electronic device 3000 is configured to present an image 3012 associated with a graphical user interface of the electronic device 3000 to a user. In one embodiment, the output interface 3004 is a video output, such as a modulated, composite, or component video output, for connection to a television or video monitor (not shown in FIG. 30) to display the image to the user. In another implementation, the output interface 3004 incorporates a visual display or monitor therein.

The input interface 3006 is configured to receive one or more user inputs related to the graphical user interface of the electronic device 3000. For example, the input interface 3006 may be a wired or wireless communication interface configured to receive the user input by way of a remote control device (not shown in FIG. 30) or other device configured to transmit user input, such as device 3000 commands, to the input interface 3006. In another implementation, the input interface 3006 includes means, such as buttons, keys, and other human interface structures, for allowing a user to enter input directly into the input interface 3006.

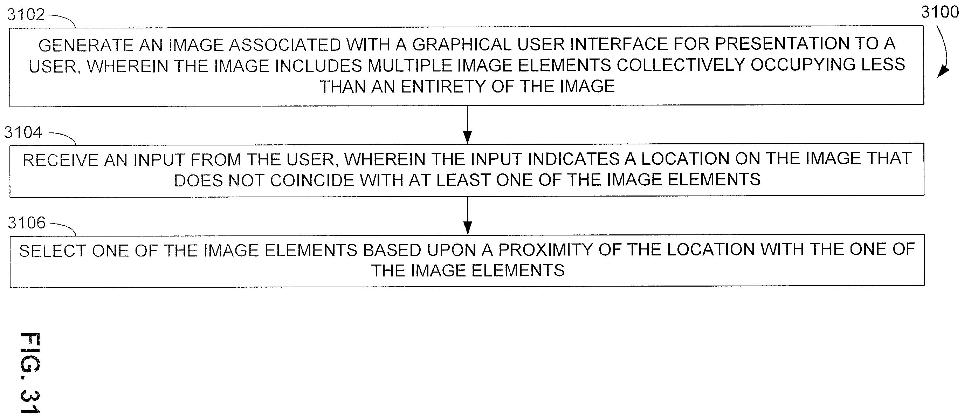

FIG. 31 is a flow diagram describing a method 3100 according to an embodiment of the invention for navigating the graphical user interface of the electronic device 3000 of FIG. 30. However, other devices employing a graphical user interface other than the electronic device 3000 shown in FIG. 30 may serve as the physical platform for executing the various operations of the method 3100 in other embodiments.

In the method 3100 of FIG. 31, the control logic 3002 generates an image 3102 associated with the graphical user interface for presentation to a user by way of the output interface 3004 (operation 3102). The image 3102 includes multiple image elements, each of which may be identified with some user input operation associated with the graphical user interface. The input interface 3006 (FIG. 30) receives an input 3010 (FIG. 30) from the user indicating a location on the image (operation 3104). Presuming the location does not coincide with at least one of the image elements, one of the image elements is selected based upon the proximity of the location with the one of the image elements (operation 3106). While FIG. 31 indicates a specific order of execution of the operations 3102-3106, other possible orders of execution, including concurrent execution of one or more operations, may be undertaken in other implementations. In another embodiment, a computer-readable storage medium may have encoded thereon instructions for a processor or other control logic, such as the control logic 3002 of FIG. 30, to direct a device to implement the method 3100.

Thus, as a result of the method 3100, the user may be allowed to indicate an image element to provide input to the electronic device 3000 (FIG. 30) without precisely or accurately selecting that specific image element by way of the input interface 3006 (FIG. 30). Such capability may be desirable in situations in which one or more of the image elements is difficult to select or specify by way of the particular user input interface 3006 (FIG. 30) employed for the electronic device 3000 (FIG. 30).

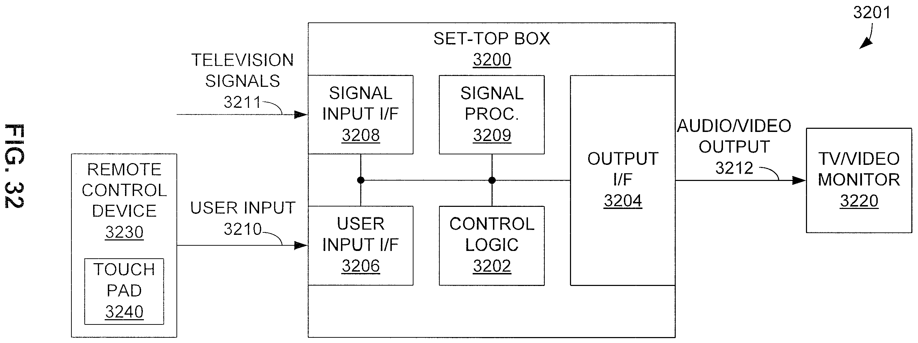

FIG. 32 provides a particular example of an electronic device incorporating a graphical user interface as described herein: a set-top box 3200. The set-top box 3200 includes control logic 3202 (FIG. 32), an output interface 3204, a user input interface 3206, a signal input interface 3208, and a signal processor 3209. The set-top box 3200 may be a television set-top box for satellite, cable, and/or terrestrial television signal reception. Other components, such as a DVR, smart card interface, and the like, may also be incorporated into the set-top box 3200, but are neither shown in FIG. 32 nor discussed herein to simplify and facilitate the discussion presented below.

As with the control logic 3002 of FIG. 30, the control logic 3202 (FIG. 32) of FIG. 32 of may include any control circuitry capable of performing the various operations of the control logic 3202 (FIG. 32) described below, as well as controlling the other components of the set-top box 3200 set forth above. The control logic 3202 (FIG. 32) may include one or more processors, such as a microprocessor, microcontroller, or DSP, configured to execute instructions directing the processor to perform the functions described hereinafter. In another implementation, the control logic 3202 (FIG. 32) may be hardware-based logic, or may include a combination of hardware, firmware, and/or software elements.

The user input interface 3206 of FIG. 32 is configured to receive user input from a user, such as by way of a remote control device 3230 being operated or manipulated by the user. As a result, the user input interface 3206 may receive any wired or wireless signals, such as infrared (IR) or radio frequency (RF) signals, carrying the user input. The user input interface 3206 may receive and process other types of user input signals emanating from a remote control device 3230, such as acoustic or optical signals, in other embodiments. Further, the user input interface 3206 may also include a control panel or similar construct that allows the user to provide input more directly to the set-top box 3200.

The signal input interface 3208 is configured to receive television signals 3211. The television signals 3211 may conform to any of several formats, thus dictating in part the specific configuration of the interface 3208. For example, in the case the television signals 3211 are transmitted to the set-top box 3200 via satellite, a paraboloid antenna coupled with a low-noise block converter feedhorn (LNBF) (not shown in Fig. 32) may capture and downconvert the frequencies of the satellite signals before passing these signals to the signal input interface 3208, typically by way of coaxial cable. If the television signals 3211 are cable signals, the signal input interface 3208 typically receives the signals 3208 by way of coaxial cable from a cable head-end or distribution facility. In another example, the television signals 311 are terrestrial signals which the signal input interface 3208 may receive by way of an over-the-air antenna (not shown in FIG. 32). In each case, the signal input interface 3208 transfers the received signals to the signal processor 3209 of the set-top box 3200.

The signal processor 3209 may include any of a number of components functionally adapted to process the received television signals 3211 for ultimate transfer to the output interface 3204. In one example, the signal processor 3209 includes at least one tuner (not shown in Fig. 32) to select one or more of the received television signals 3211 associated with a particular programming channel. Other processing conducted within the signal processor 3209 may include demodulation, demultiplexing, decryption, and decoding of the television signals 3211.

Once processed, the signal processor 3209 transfers the signals 3211 to the output interface 3204, which outputs the audio/video output 3212 resulting from the processing of the television signals 3211 to an output device, such as the television video monitor 3220 depicted in Fig. 32. The output interface 3204 may provide the audio/video output 3212 in a number of formats, including, but not limited to, modulated RF output, composite video output, component video output, and output conforming to the High-Definition Multimedia Interface (HDMI).

The user may control various aspects of the signal processor 3209, such as which of the television signals 3211 to view, the audio volume of the selected television signal 3211, and so on, by way of the remote control device 3230 and the user input interface 3206 in conjunction with visual information provided to the user by way of the output interface 3204 and the television 3220. Other functions, such as general set-top box parameter modification, timer recording, electronic program guide (EPG) presentation, and the like, may also be controlled in such a manner. To that end, the control logic 3202 (FIG. 32) generates an image associated with the graphical user interface. The user then manipulates the remote control device 3230 to enter user input to the control logic 3202 while the control logic 3202 provides visual feedback regarding that input to the user by way of the generated image. The user input may include any user-initiated operation, such as volume changes, channel changes, and the like.

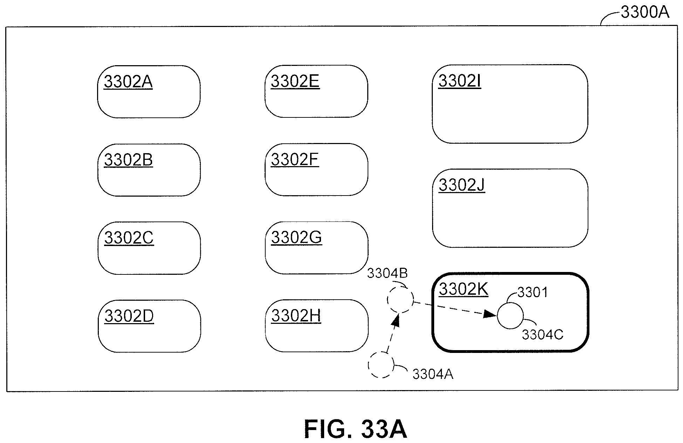

Another aspect of the user input is navigation of a menu or similar input selection means provided by the control logic 3202, as represented by the image generated thereby. FIG. 33A provides a simplistic example of an image 3300A providing a number of image elements 3302A-3304K. In this particular example, each of the image elements 3302 appears as a virtual button or similar structure to be selected by the user as user input. Each of the image elements 3302 may correspond to a data entry item, a menu selection item, or any other type of input data. In response to selecting one of the image elements 3302, the control logic 3202 (FIG. 32) of the set-top box 3200 (FIG. 32) may react in a number of ways. First, the control logic 3202 (FIG. 32) may initiate a particular function associated with the selected image element 3304. In another example, the control logic 3202 (FIG. 32) may wait until the user selects one or more additional image elements 3302 via the remote control device 3230 (FIG. 32). Alternatively, the control logic 3202 (FIG. 32) may generate another image incorporating a different set of image elements for presentation to the user in response to the most recent user input operation. Other possible responses by the control logic 3202 (FIG. 32) are also possible.

To allow the user to select one or more of the image elements 3302 of the image 3300A, the control logic 3202 (FIG. 32), by way of the remote control device 3230 (FIG. 32) and the user input 3210 (FIG. 32), provides a mechanism by which the user may navigate about the image. Previous systems, such as set-top boxes, DVD players, and the like, provide an image with a number of separate elements, with one of the elements being highlighted or otherwise emphasized for user selection by way of a selection key, as mentioned above. The user may then employ a set of directional keys, as described above, to allow the user to transfer the highlighting from one image element to another by each successive key press. However, the directional keys typically indicate movement only in the vertical or horizontal direction.

In the embodiments discussed herein, the remote control devices 3230 (FIG. 32) may incorporate a more versatile input means, such as a touchpad 3240 (FIG. 32), joystick or similar input device, to allow the user more freedom in designating a location within the image 3300A to select one or more of the various image elements 3302 therein. However, given that such input means must generally be small (e.g., approximately two inches across) to be incorporated within the remote control device 3230 (FIG. 32), accurate navigation across a comparatively large image 3300A with a significant number of image elements 3302 may prove difficult. Such difficulty may be further compounded by the fact that the image elements 3302, when taken collectively, often do not cover the entire image 3300A (as shown in FIG. 33A), thus allowing the possibility of user navigation into areas of the image 3300A not associated with a particular image element 3302.

To facilitate the use of such an input means, the control logic 3202 (FIG. 32) may be configured to allow more inaccurate or imprecise user input to navigate the image 3300A successfully. To that end, the control logic 3202 (FIG. 32) is configured to receive a user input 3210 (FIG. 32) from the remote control device 3230 by way of the user input interface 3206 (FIG. 32) in which the input indicates a location within the image 3300A that does not coincide with at least one of the image elements 3302. In response, the control logic 3202 (FIG. 32) selects one of the image elements 3302 based at least on the proximity of the location with the selected image element 3302.

FIG. 33A graphically depicts an example of the image 3300A discussed above, in which a location 3304 of interest is denoted by way of a location indicator 3301, such as a cursor. Presuming an initial location 3304A of the indicator 3301, the user may employ the touchpad 3240 (FIG. 32), joystick, or similar means of the remote control device 3230 (FIG. 32) to "push" the indicator 3301 in a substantially upwardly vertical direction toward a second location 3304B not specifically coinciding with any of the image elements 3302. For example, the user may drag a fingertip or stylus across the touchpad 3240 (FIG. 32) in an upward direction, or push a joystick in the corresponding direction, to provide the one or more user inputs 3210 (FIG. 32) received by the control logic 3202 (FIG. 32) through the user input interface 3206 (FIG. 32) to effect the movement of the indicator 3301. In response to the movement indicated by the user, the control logic 3202 (FIG. 32) selects the image element 3302K, which is closest in proximity to the second location 3304B.

In one example, the control logic 3202 (FIG. 32) makes its selection at the end of the path from 3304A to 3304B, such as when the user stops pushing the indicator 3301 upward. This event may occur when the user releases a joystick being used to move indicator 3301, or if the user stops movement over, or ceases contact with, the touchpad 3240 (FIG. 32). In another example, the control logic 3202 (FIG. 32) makes its selection when movement of the indicator 3301 falls below some predetermined speed.

In one implementation, the selected image element 3302 is highlighted in the image 3300A to indicate the selection to the user. FIG. 33A shows such highlighting as a thickened border for the selected image element 3302K. Other methods of displaying the selected image element 3302K, such as changing the color of the element 3302K, or flashing the element 3302K, may be employed in other embodiments.

In another example, the control logic 3202 (FIG. 32) may also cause the location indicator 3301 to be positioned on or within the selected image element 3302K, such as at a third location 3304C illustrated in FIG. 33A. While FIG. 33A depicts the third location 3304C as being centered on the selected image element 3302K, other positions, such as on an edge closest to the second position 3304B indicated by the user, may serve as the third location 3304C in other implementations.

While the control logic 3202 (FIG. 32) determines the selected image element 3302K based on the proximity of the location 3304B, the control logic 3202 (FIG. 32) may employ other factors in addition to, or in lieu of, the proximity of the indicated location 3304B to the various image elements 3302 in other implementations. In one embodiment, the control logic 3202 (FIG. 32) may also select a particular image element 3302 based on its size or total area within the image 3300. For example, in the case of FIG. 33A, if the position indicator 3301 is located equidistant from two or more image elements 3302, such as second position 3304B between elements 3302H and 3302K, the larger element 3302K may be selected over the smaller element 3302H. In another example, the smaller element 3302H may be selected over the larger element 3302K. In this latter case, the smaller element 3302H may warrant such an advantage based on the theory that the smaller element 3302H may be more difficult to select due to its size compared to the larger element 3302K.

According to another implementation, the control logic 3202 (FIG. 32) may base its selection on a user input selection associated with each of the various image elements 3302. For example, an image element 3302 associated with an often-used interface selection, such as a program search menu selection, or a request to display the EPG, may be weighted higher in the selection of an image element over a less-used input selection, such as a display of the latest set-top box 3200 (FIG. 32) software revision number. Other factors in ranking the various image elements by user input selection, such as by their ultimate effect on the set-top box 3200 (FIG. 32), may also be utilized. In one example, those image elements 3302 related to deleting television programs currently stored within the set-top box 3200 (FIG. 32) may be ranked lower than other operations to prevent unintended data deletion.

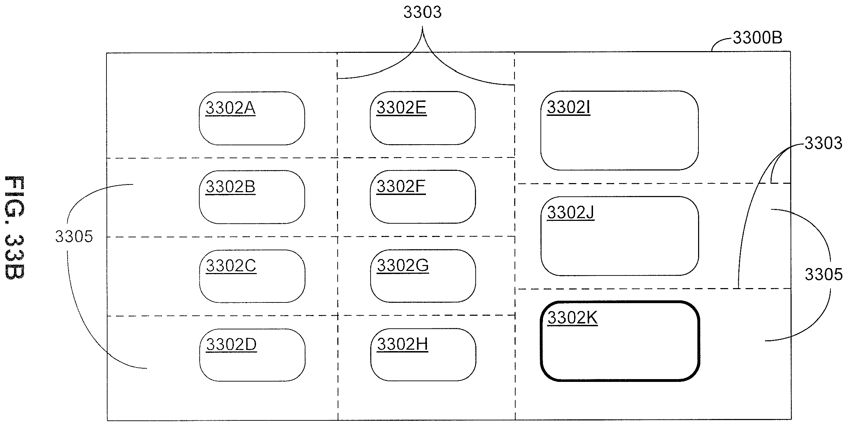

In one implementation, one or more of the factors discussed above may be embodied by way of a boundary 3303 defining an area 3305 surrounding each image element 3302, as shown in an image 3300B of FIG. 33B. Typically, the boundaries 3303 are not explicitly displayed on the image 3300A, but are employed by the control logic 3202 (FIG. 32) to determine which of the image elements 3302 are selected. For example, when a user causes a position indicator to be placed within an area 3305 associated with a particular image element 3302, the control logic 3202 (FIG. 32) may select the associated image element 3302, as described above. Further, the size, shape, and extent of each area 3305 may be tailored to take into account the various factors discussed herein, including but not limited to proximity, size, and user input selection function. In the particular example of FIG. 33B, the areas 3305 within the various boundaries 3303 encompass the entire image 3300B, but such complete coverage of the image 3300B is not required.

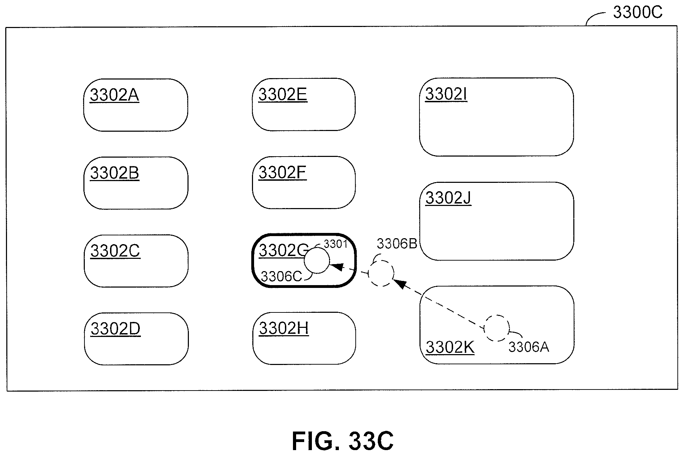

Other factors potentially considered by the control logic 3202 (FIG. 32) in selecting an image element 3302 may be direction and/or speed at which the user urges the position indicator 3301 across the image. FIG. 33C illustrates a particular case in which the user uses the touchpad 3240 (FIG. 32) of the remote control device 3230 (FIG. 32) to direct the position indicator 3301 from a position 3306A in the image element 3302K a short distance toward the upper-left corner of the image 3300C, stopping at a second position 3306B. In this situation, the control logic 3202 (FIG. 32) may interpret the movement of the indicator 3301 as an attempt to move the cursor to the next image element 3302G indicated by the direction of the path designated by the first position 3306A and the second position 3306B. Thus, as a result, the control logic 3202 (FIG. 32) may select the element 3302G, indicating that fact via the image 3300C by highlighting the selected element 3302G. In addition, the control logic 3202 (FIG. 32) may also place the position indicator 3301 within or adjacent to the selected element 3306G, as described earlier.

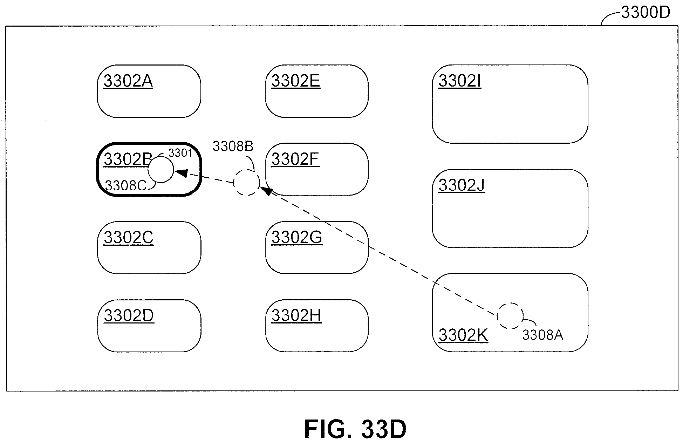

In another example illustrated in FIG. 33D, presuming essentially the same starting position within the image element 3302K, designated in FIG. 33D as 3308A, the user indicates via the remote control device 3230 (FIG. 32) a movement of the position indicator 3301 in the same general direction as that shown in FIG. 33C, but instead passing over the image element 3302G, ending in a second location 3308B just beyond the element 3302G. Under these circumstances, the control logic 3202 (FIG. 32) may presume that the user intended to move the indicator 3301 further toward the image element 3302B along the left end of the image 3300D. Accordingly, the control logic 3202 (FIG. 32) may select the image element 3302B as that intended by the user, and also highlight the element 3302 and/or place the indicator 3301 within or adjacent to the element 3302B, as shown in FIG. 33D.

In another implementation, the control logic 3202 (FIG. 32) may also take into consideration the speed of the position indicator 3301 along the path between the first position 3306A and the second position 3308B. For example, if the movement of the indicator 3301, as determined by the user in manipulating the touchpad 3240 of the remote control device 3230, attains some predetermined speed, the control logic 3202 (FIG. 32) may select the image element 3302B, as illustrated in FIG. 33D. If, instead, the speed of the indicator 3301 remains below the predetermined speed, the control logic 3202 (FIG. 32) may determine that the closer image element 3302G crossed by the indicator 3301 was the intended target of the movement, and select that element 3302G as a result.

In the examples discussed above, the control logic 3202 (FIG. 32) may include one or more of these factors (e.g., element 3302 proximity, element 3302 size, an input selection associated with the element 302, and the direction and/or speed of the indicator 3301) in the selection of the image element 3302 as indicated by the indicator 3301 movement caused by the user. Depending on the implementation, the control logic 3202 (FIG. 32) may value or weigh one or more of these factors in combination in any manner desired. As a result, the control logic 3202 (FIG. 32) may define a kind of logical "gravity" associated with each of the image elements 3302 of the image 3300, thus providing a framework within which inaccurate positioning of the indicator 3301 outside any of the image elements 3302 may still result in a reasonable selection of an image element 3302 most likely intended by the user.

In one implementation, the control logic 3202 (FIG. 32), after selecting the image element 3302 according to concepts described above, may enter a user input selection associated with the selected image element 3302 as the selected input of the user. For example, if the selected image element 3302 is associated with an operation to display the EPG on the television 3220 (FIG. 32), the control logic 3202 (FIG. 32) may display the EPG on the television 3220 (FIG. 32) by way of the output interface 3204 without any further input from the user. In another arrangement, after the control logic 3202 (FIG. 32) selects the image element 3302, and highlights that selection for the user, the user may verify the selection by issuing another input by way of the remote control device 3230 to enter the user input selection associated with the selected image element 3302. For example, the user may press a selection key, tap the touchpad 3240, or perform some other manipulation of the remote control device 3230 to enter the selection and, thus, initiate the operation associated with the selected image element 3302.

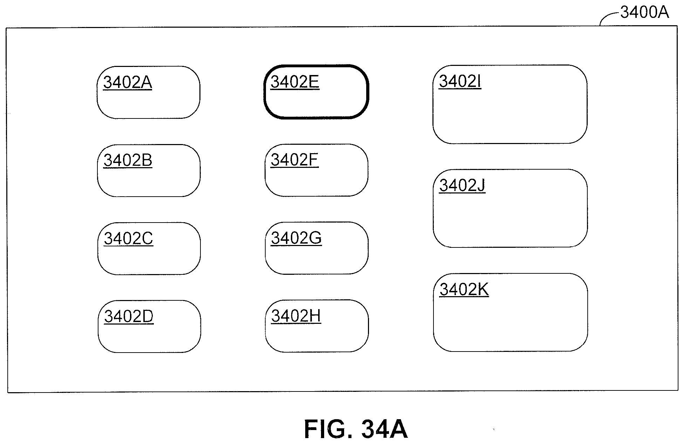

All of the embodiments discussed above in Figs. 33A-33D employ the use of a position indicator 3301 to guide the user in manipulating the touchpad 3240, joystick, or other user input device in a selection of the image element 3302 as a user input selection. However, in other implementations, the use of an explicit position indicator 3301 may not be necessary. For example, as shown an image 3400A in FIG. 34A, a starting point for any movement indicated by the user via the remote control device 3230 may be denoted by one of the image elements 3402A-3402K of the image 3400A. In the particular example of FIG. 34A, the starting position is denoted by the highlighted image element 3402E. The highlighted image element 3402E may have been selected as a result of a previous user input 3210 (FIG. 32), or the control logic 3202 (FIG. 32) may have pre-selected the image element 3402E as the initial position to be employed by the user.

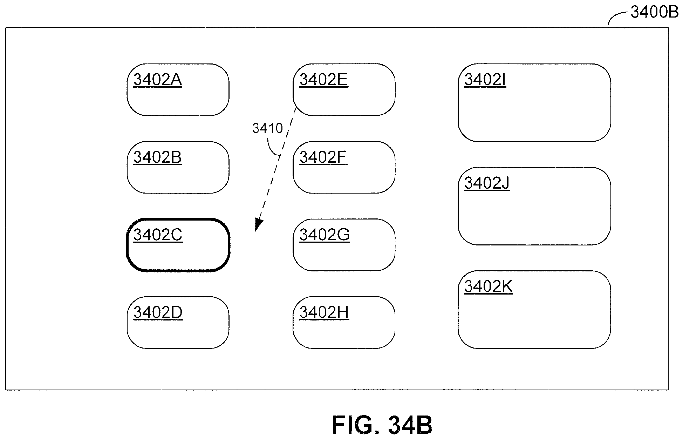

Presuming in this case that the user wishes to select another image element 3402 in the image 3400A, the user may manipulate the touchpad 3240 (FIG. 32) integrated within the remote control device 3230 (FIG. 32) as described above to define a path 3410 indicated in FIG. 34B. In this case, the path is illustrated in FIG. 34B merely as a visual indication of the path indicated by the user; the path 3410 would not actually be presented to the user in the image 3400B.

In response to user inputs 3210 (FIG. 32) describing the path 3410, the control logic 3202 (FIG. 32) may select the image element 3402C according to any of the factors (proximity of the image elements 3402 to the path 3410, size of the image elements 3402, the user input selections associated with the various image elements 3402, the direction and/or speed described by the path 3410, and so on) presented above. Further, the control logic 3202 (FIG. 32) may highlight or otherwise indicate the selected image element 3402C in the image presented to the user by way of the output interface 3204 and the television or video monitor 3420, as illustrated in FIG. 34B. By doing so, the control logic 3202 (FIG. 32) maintains the capability of informing the user of a reference point (i.e., the selected image element 3402C) from which the user may navigate to another portion of the image 3400B by using the remote control device 3230 (FIG. 32).

At least some embodiments as described herein for navigating a graphical user interface may provide a number of benefits. In general, by allowing the use of an input device, such as a touchpad or joystick, that provides a user the ability to navigate across an image provided by the interface in directions other than vertical and horizontal, the resulting user interface may be less tedious and more intuitive to use than other interface systems. Further, systems and methods as described above may allow the user to be less accurate or precise in their use of a remote control device or other user input interface while retaining the ability to select a desired image element of a graphical interface. Such capability may be beneficial in environments in which the user input device does not lend itself to accurate positioning of a graphical indicator or precise selection of image elements.

While several embodiments of the invention have been discussed herein, other implementations encompassed by the scope of the invention are possible. For example, while various embodiments have been described primarily within the context of satellite, cable, and terrestrial television set-top boxes, any other device incorporating a graphical user interface, including televisions, DVD players, DVRs, VCRs, DVD players, and gaming systems, as well as computers, PDAs, and the like, may benefit from application of the various concepts described herein. Further, while emphasis has been placed on the use of touchpads, joysticks, and similar two-dimensional input devices, other devices allowing inputs related to three-dimensional graphics, such as the Nintendo Wii™ gaming controller, may be implemented to provide advantages similar to those expressed above.

As used herein, the word "exemplary" means "serving as an example, instance, or illustration." Any implementation described herein as exemplary is not necessarily to be construed as preferred or advantageous over other implementations.

The scope of the invention is defined by the appended claims.

## Claims

1. A method for changing the presentation of a current channel to another channel on a display in response to a viewer input received via a remote control, the method comprising:
providing an output to the display that presents imagery on the display, wherein the imagery comprises content from the current channel;
receiving the viewer input from the remote control to change the current channel;
in response to the viewer input to change the current channel, adapting the imagery to include a scroll window that provides information about the current channel and that is presented in a portion of the display in conjunction with the current channel;
scrolling the information provided in the scroll window while continuing to present the current channel as the viewer input to change the current channel continues; and
when the viewer input to change the current channel is complete, stopping the scrolling and adapting the output to thereby provide content from the other channel on the display;
**characterised in that**
the scrolling comprises smoothly scrolling the information in the scroll window by providing a gradual and continuous progression of the information across the scroll window such that information appears to the viewer to smoothly proceed from one edge of the scroll window to the opposing edge of the window.

2. The method of claim 1 wherein the viewer input comprises a directional input, and wherein the scrolling is in a direction corresponding to the directional input.

3. The method of claim 1 wherein the scroll window comprises a program guide window on the display, wherein the program guide window initially comprises program guide information corresponding to the current channel, and wherein the scrolling comprises scrolling the program guide information in the program guide window in response to the viewer input from the information corresponding to the current channel to information about the other channel.

4. The method of claim 3 further comprising tuning the other channel indicated by the displayed program guide information.

5. The method of claim 3 further comprising re-aligning the program guide information to the program guide window when the viewer input is discontinued.

6. The method of claim 3 further comprising relating an amount of scrolling of the program guide information to an amount of viewer input, the amount of scrolling preferably increasing in response to larger viewer inputs.

7. The method of claim 1 wherein the other channel is tuned in response to a select instruction received from the remote control.

8. The method of claim 1 wherein the program guide window comprises a scroll indicator that moves in a direction indicated by the viewer input.

9. The method of claim 1 further comprising tuning the current channel to obtain first channel imagery and also tuning a second channel adjacent to the current channel to obtain second channel imagery.

10. The method of claim 9 wherein the scrolling comprises scrolling the second imagery over the first imagery, the method further comprising repeating the tuning and scrolling until the second imagery corresponds to the other channel.

11. A video receiver (108) for presenting imagery on a display in response to viewer input signals provided from a remote control, the receiver comprising:
a receiver interface (608) configured to receive an incoming modulated signal;
a decoder (614A) configured to decode the incoming modulated signal to extract a video signal;
a wireless receiver configured to receive the viewer input signals from the remote control; and
a processor (618) configured to generate the imagery presented on the display, wherein the imagery comprises the extracted video signal, and wherein the processor is further configured to change a first channel associated with the video signal to a desired channel in response to the viewer input signals by generating a program guide window in a portion of the display that initially comprises program guide information corresponding to a current channel, and wherein the program guide information scrolls in the program guide window in response to the viewer input to display other program guide information while continuing to display the first channel until the desired channel is indicated by the displayed subsequent program guide information in the program guide window, wherein the program guide information scrolls information in the program guide window, and wherein the processor is further configured to tune the receiver to receive the desired channel selected by the viewer in response to the viewer input;
**characterised in that**:
the program guide information smoothly scrolls information in the program guide window by gradually and continuously progressing across the scroll window from one edge of the scroll window to the opposing edge of the scroll window.

12. The video receiver of claim 11 wherein the receiver interface comprises one of a satellite interface and a cable interface.

13. The video receiver of claim 11 wherein the processor is further configured to re-align the program guide information to the program guide window when the viewer input is discontinued.

14. The video receiver of claim 11 further comprising relating an amount of scrolling of the program guide information to an amount of viewer input such that the amount of scrolling increases in response to larger viewer inputs.

## Patentansprüche

1. Verfahren zum Umschalten der Darstellung eines aktuellen Kanals auf einen anderen Kanal auf einer Anzeige als Reaktion auf eine über eine Fernbedienung empfangene Zuschauereingabe, wobei das Verfahren Folgendes aufweist:
Versorgen der Anzeige mit einer Ausgabe, die Bilder auf der Anzeige darstellt, wobei die Bilder Inhalt aus dem aktuellen Kanal umfassen;
Empfangen der Zuschauereingabe von der Fernbedienung zum Umschalten des aktuellen Kanals;
als Reaktion auf die Zuschauereingabe zum Umschalten des aktuellen Kanals Anpassen der Bilder, so dass sie ein Bildlauffenster enthalten, das Informationen über den aktuellen Kanal bereitstellt und das in einem Teil der Anzeige in Verbindung mit dem aktuellen Kanal dargestellt wird;
Verschieben per Bildlauf der im Bildlauffenster bereitgestellten Informationen, während bei fortgesetzter Zuschauereingabe zum Umschalten des aktuellen Kanals die Darstellung des aktuellen Kanals fortgesetzt wird; und,
wenn die Zuschauereingabe zum Umschalten des aktuellen Kanals abgeschlossen ist, Anhalten des Bildlaufs und Anpassen der Ausgabe, um dadurch Inhalt von dem anderen Kanal auf der Anzeige bereitzustellen;
**dadurch gekennzeichnet, dass**
das Verschieben per Bildlauf ein ruhiges Verschieben der Informationen im Bildlauffenster durch Bereitstellen eines allmählichen und kontinuierlichen Weiterlaufens der Informationen über das Bildlauffenster umfasst, so dass Informationen für den Zuschauer ruhig von einem Rand des Bildlauffensters zum gegenüberliegenden Rand des Fensters zu laufen scheinen.

2. Verfahren nach Anspruch 1, wobei die Zuschauereingabe eine direktionale Eingabe umfasst und wobei das Verschieben per Bildlauf in einer der direktionalen Eingabe entsprechenden Richtung ist.

3. Verfahren nach Anspruch 1, wobei das Bildlauffenster ein Programmführerfenster auf der Anzeige aufweist, wobei das Programmführerfenster anfänglich Programmführerinformationen aufweist, die dem aktuellen Kanal entsprechen, und wobei das Verschieben per Bildlauf das Verschieben der Programmführerinformationen im Programmführerfenster als Reaktion auf die Zuschauereingabe von den dem aktuellen Kanal entsprechenden Informationen zu Informationen über den anderen Kanal umfasst.

4. Verfahren nach Anspruch 3, das ferner das Abstimmen des anderen Kanals aufweist, der von den angezeigten Programmführerinformationen angegeben wird.

5. Verfahren nach Anspruch 3, das ferner das Neuausrichten des Programmführerinformationen auf das Programmführerfenster, wenn die Zuschauereingabe beendet wird, aufweist.

6. Verfahren nach Anspruch 3, das ferner das Beziehen eines Verschiebungsbetrags der Programmführerinformationen auf einen Zuschauereingabebetrag aufweist, wobei der Verschiebungsbetrag vorzugsweise als Reaktion auf größere Zuschauereingaben zunimmt.

7. Verfahren nach Anspruch 1, wobei der andere Kanal als Reaktion auf eine von der Fernbedienung empfangene Auswahlanweisung abgestimmt wird.

8. Verfahren nach Anspruch 1, wobei das Programmführerfenster eine Bildlaufanzeige aufweist, die sich in einer von der Zuschauereingabe angegebenen Richtung bewegt.

9. Verfahren nach Anspruch 1, das ferner das Abstimmen des aktuellen Kanals zum Erhalten von ersten Kanalbildern und auch das Abstimmen eines zweiten Kanals neben dem aktuellen Kanal zum Erhalten von zweiten Kanalbildern aufweist.

10. Verfahren nach Anspruch 9, wobei das Verschieben per Bildlauf das Verschieben der zweiten Bilder über die ersten Bilder aufweist, wobei das Verfahren ferner das Wiederholen des Abstimmens und Verschiebens per Bildlauf aufweist, bis die zweiten Bilder dem anderen Kanal entsprechen.

11. Videoempfänger (108) zum Darstellen von Bilder auf einer Anzeige als Reaktion auf von einer Fernbedienung bereitgestellte Zuschauereingabesignale, wobei der Empfänger Folgendes aufweist:
eine Empfängerschnittstelle (608), die zum Empfangen eines ankommenden modulierten Signals konfiguriert ist;
einen Decoder (614A), der zum Decodieren des ankommenden modulierten Signals zum Extrahieren eines Videosignals konfiguriert ist;
einen drahtlosen Empfänger, der zum Empfangen der Zuschauereingabesignale von der Fernbedienung konfiguriert ist; und
einen Prozessor (618), der zum Erzeugen der auf der Anzeige dargestellten Bildern konfiguriert ist, wobei die Bilder das extrahierte Videosignal umfassen und wobei der Prozessor ferner konfiguriert ist zum Umschalten eines dem Videosignal zugeordneten ersten Kanals auf einen gewünschten Kanal als Reaktion auf die Zuschauereingabesignale durch Erzeugen eines Programmführerfensters in einem Teil der Anzeige, das anfänglich Programmführerinformationen aufweist, die einem aktuellen Kanal entsprechen, und wobei die Programmführerinformationen im Programmführerfenster als Reaktion auf die Zuschauereingabe per Bildlauf verschoben werden, um andere Programmführerinformationen anzuzeigen, während weiterhin der erste Kanal angezeigt wird, bis der gewünschte Kanal von den angezeigten nachfolgenden Programmführerinformationen im Programmführerfenster angegeben wird, wobei die Programmführerinformationen Informationen im Programmführerfenster per Bildlauf verschieben und wobei der Prozessor ferner konfiguriert ist zum Abstimmen des Empfängers zum Empfangen des durch den Zuschauer als Reaktion auf die Zuschauereingabe ausgewählten gewünschten Kanals;
**dadurch gekennzeichnet, dass**:
die Programmführerinformationen Informationen im Programmführerfenster durch allmähliches und kontinuierliches Verschieben per Bildlauf über das Bildlauffenster von einem Rand des Bildlauffensters ruhig zum gegenüberliegenden Rand des Fensters verschiebt.

12. Videoempfänger nach Anspruch 11, wobei die Empfängerschnittstelle entweder eine Satellitenschnittstelle oder eine Kabelschnittstelle umfasst.

13. Videoempfänger nach Anspruch 11, wobei der Prozessor ferner konfiguriert ist zum Neuausrichten der Programmführerinformationen auf das Programmführerfenster, wenn die Zuschauereingabe beendet wird.

14. Videoempfänger nach Anspruch 11, das ferner das Beziehen eines Verschiebungsbetrags der Programmführerinformationen auf einen Zuschauereingabebetrag aufweist, so dass der Verschiebungsbetrag vorzugsweise als Reaktion auf größere Zuschauereingaben zunimmt.

## Revendications

1. Procédé pour changer la présentation d'une chaîne courante à une autre chaîne sur un affichage en réponse à une entrée téléspectateur reçue via une télécommande, le procédé comprenant :
fournir une sortie à l'affichage qui présente une imagerie sur l'affichage, lorsque l'imagerie comprend le contenu de la chaîne courante ;
recevoir l'entrée téléspectateur de la télécommande pour changer la chaîne courante ;
en réponse à l'entrée téléspectateur de changer la chaîne courante, adapter l'imagerie pour inclure une fenêtre de défilement qui fournit des informations sur la chaîne courante et qui est présentée dans une partie de l'affichage concurremment avec la chaîne courante ;
faire défiler les informations fournies dans la fenêtre de défilement tout en continuant à présenter la chaîne courante pendant que l'entrée téléspectateur de changer la chaîne courante continue ; et
lorsque l'entrée téléspectateur de changer la chaîne courante est terminée, arrêter le défilement et adapter la sortie pour fournir ainsi le contenu de l'autre chaîne sur l'affichage ;
**caractérisé en ce que**
le défilement comprend faire défiler de manière lisse les informations dans la fenêtre de défilement en fournissant une progression graduelle et continue des informations en travers de la fenêtre de défilement de telle sorte que les informations paraissent au téléspectateur passer de manière lisse d'un bord de la fenêtre de défilement au bord opposé de la fenêtre.

2. Procédé selon la revendication 1, dans lequel l'entrée téléspectateur comprend une entrée directionnelle et dans lequel le défilement se fait dans une direction correspondant à l'entrée directionnelle.

3. Procédé selon la revendication 1, dans lequel la fenêtre de défilement comprend une fenêtre de guide de programme sur l'affichage, dans lequel la fenêtre de guide de programme comprend initialement des informations de guide de programme correspondant à la chaîne courante, et dans lequel le défilement comprend faire défiler les informations de guide de programme dans la fenêtre de guide de programme en réponse à l'entrée téléspectateur, des informations correspondant à la chaîne courante aux informations concernant l'autre chaîne.

4. Procédé selon la revendication 3, comprenant en outre régler l'autre chaîne indiquée par les informations de guide de programme affichées.

5. Procédé selon la revendication 3 comprenant en outre réaligner les informations de guide de programme sur la fenêtre de guide de programme lorsque l'entrée téléspectateur est discontinuée.

6. Procédé selon la revendication 3 comprenant en outre mettre une quantité de défilement des informations de guide de programme en rapport avec une quantité d'entrée téléspectateur, la quantité de défilement augmentant de préférence en réponse à de plus grandes entrées téléspectateur.

7. Procédé selon la revendication 1, dans lequel l'autre chaîne est réglée en réponse à une instruction de sélection reçue de la télécommande.

8. Procédé selon la revendication 1, dans lequel la fenêtre de guide de programme comprend un indicateur de défilement qui se déplace dans une direction indiquée par l'entrée téléspectateur.

9. Procédé selon la revendication 1 comprenant en outre régler la chaîne courante pour obtenir une première imagerie de chaîne et régler aussi une deuxième chaîne adjacente à la chaîne courante pour obtenir une deuxième imagerie de chaîne.

10. Procédé selon la revendication 9, dans lequel le défilement comprend faire défiler la deuxième imagerie au-dessus de la première imagerie, le procédé comprenant en outre le fait de répéter le réglage et le défilement jusqu'à ce que la deuxième imagerie corresponde à l'autre chaîne.

11. Récepteur vidéo (108) pour présenter une imagerie sur un affichage en réponse à des signaux d'entrée téléspectateur fournis d'une télécommande, le récepteur comprenant :
une interface récepteur (608) configurée pour recevoir un signal entrant modulé ;
un décodeur (614A) configuré pour décoder le signal entrant modulé pour extraire un signal vidéo ;
un récepteur sans fil configuré pour recevoir les signaux d'entrée téléspectateur de la télécommande ; et
un processeur (618) configuré pour générer l'imagerie présentée sur l'affichage, dans lequel l'imagerie comprend le signal vidéo extrait, et dans lequel le processeur est configuré en outre pour changer une première chaîne associée au signal vidéo à une chaîne désirée en réponse aux signaux d'entrée téléspectateur, en générant une fenêtre de guide de programme dans une partie de l'affichage qui comprend initialement des informations de guide de programme correspondant à une chaîne courante, et dans lequel les informations de guide de programme défilent dans la fenêtre de guide de programme en réponse à l'entrée téléspectateur pour afficher d'autres informations de guide de programme tout en continuant à afficher la première chaîne jusqu'à ce que la chaîne désirée soit indiquée par les informations de guide de programme subséquentes affichées dans la fenêtre de guide de programme, dans lequel les informations de guide de programme font défiler des informations dans la fenêtre de guide de programme, et dans lequel le processeur est configuré en outre pour régler le récepteur pour recevoir la chaîne désirée sélectionnée par le téléspectateur en réponse à l'entrée téléspectateur ;
**caractérisé en ce que** :
les informations de guide de programme font défiler de manière lisse des informations dans la fenêtre de guide de programme en progressant graduellement et continuellement en travers de la fenêtre de défilement d'un bord de la fenêtre de défilement au bord opposé de la fenêtre de défilement.

12. Récepteur vidéo selon la revendication 11, dans lequel l'interface récepteur comprend l'une d'entre une interface satellite et une interface câble.

13. Récepteur vidéo selon la revendication 11, dans lequel le processeur est configuré en outre pour réaligner les informations de guide de programme sur la fenêtre de guide de programme lorsque l'entrée téléspectateur est discontinuée.

14. Récepteur vidéo selon la revendication 11, comprenant en outre mettre une quantité de défilement des informations de guide de programme en rapport avec une quantité d'entrée téléspectateur de telle sorte que la quantité de défilement augmente en réponse à de plus grandes entrées téléspectateur.
